# EUROPEAN PATENT APPLICATION

(11) **EP 4 776 694 A1**
(43) Date of publication of application: **15.07.2026**
(21) Application number: 23951229.6
(22) Date of filing: 08.09.2023
(51) Int. Cl.: H04W 36/30, H04W 24/02

(54) **INFORMATION PROCESSING METHOD, TERMINAL, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2023/117876
(87) International publication number: WO 2025/050410

(57) **Abstract**

Embodiments of the present disclosure provide an information processing method, a terminal, a communication device, a communication system, and a storage medium. The method comprises: a terminal determines, on the basis of a cell measurement result of the terminal, whether to execute a layer L1 measurement related operation. According to the technical solution provided in the embodiments of the present disclosure, the terminal determines, on the basis of the cell measurement result, whether to execute the L1 measurement related operation, without the need for a network device to trigger start of L 1 measurement, thereby reducing extra signaling overhead caused by network device control and reducing the latency.

## Description

### TECHNICAL FIELD

The present disclosure relates to the communication technical field, and in particular to an information processing method and a terminal, a communication device, a communication system and a storage medium.

### BACKGROUND

For solving problems such as data rate fluctuations, signaling overhead, and latency and so on caused by frequent terminal handovers, the 5^{th} Generation Mobile Communication Technology (5G) introduces a variety of mobility enhancement technologies, for example, including Conditional Handover (CHO), conditional primary secondary cell addition or change (Conditional PSCell Addition/Change, CPAC), and Layer 1/Layer 2-Triggered Mobility (LTM), etc.

### SUMMARY

With rapid changes in the communication quality in a cell, a network device based method for controlling and changing L1 measurement and reporting cannot effectively adapt to a rapidly changing network environment.

Embodiments of the present disclosure provide an information processing method and a terminal, a communication device, a communication system, and a storage medium.

According to a first aspect of an embodiment of the present disclosure, an information processing method is provided. The method includes:
determining, by a terminal, whether to perform an operation related to a Layer L1 measurement according to a cell measurement result of the terminal.

According to a second aspect of an embodiment of the present disclosure, a terminal is provided. The terminal includes: a determination module configured to determine whether to perform an operation related to a Layer L1 measurement according to a cell measurement result of the terminal.

According to a third aspect of an embodiment of the present disclosure, a communication system is provided. The communication system includes a terminal and a network device. The terminal is configured to implement the information processing method provided in the first aspect.

According to a fourth aspect of an embodiment of the present disclosure, a communication device is provided. The communication device includes:
one or more processors;
where the processors are configured to invoke instructions to cause the communication device to perform the information processing method provided in the first aspect.

According to a fifth aspect of an embodiment of the present disclosure, a storage medium is provided. The storage medium stores instructions. When the instructions run on a communication device, the communication device is caused to perform the information processing method provided in the first aspect.

In the technical solutions provided by the embodiments of the present disclosure, the terminal autonomously determines whether to initiate the L1 measurement according to the cell measurement result, without requiring the network device to trigger the initiation of the L1 measurement. The technical solutions reduce additional signaling overhead introduced by network device control and lower the latency of the LTM measurement.

It should be understood that the above general description and the following detailed description are illustrative and explanatory only, and are not intended to limit the embodiments of the present disclosure.

### BRIEF DESCRIPTION OF THE DRAWINGS

The accompanying drawings, which are incorporated in and form part of the specification, illustrate embodiments consistent with the present disclosure and, together with the specification, serve to explain the principles of the embodiments of the present disclosure.
FIG. 1a is a schematic diagram of an architecture of a communication system according to an example embodiment;
FIG. 1b is an architecture diagram of an Evolved Universal Terrestrial Radio Access Network (E-UTRA)-NR Dual Connectivity (EN-DC);
FIG. 1c is a schematic diagram of an NR-DC architecture;
FIG. 1d is a schematic diagram of a master cell group and a secondary cell group;
FIG. 1e is a schematic diagram of a flow showing interactions of LTM according to an example embodiment;
FIG. 2a is a schematic diagram showing interactions of an information processing method according to an example embodiment;
FIG. 2b is a schematic diagram showing interactions of an information processing method according to an example embodiment;
FIG. 2c is a schematic diagram showing interactions of an information processing method according to an example embodiment;
FIG. 2d is a schematic diagram showing interactions of an information processing method according to an example embodiment;
FIG. 3a is a schematic flowchart of an information processing method according to an example embodiment;
FIG. 3b is a schematic flowchart of an information processing method according to an example embodiment;
FIG. 3c is a schematic flowchart of an information processing method according to an example embodiment;
FIG. 3d is a schematic flowchart of an information processing method according to an example embodiment;
FIG. 3e is a schematic flowchart of an information processing method according to an example embodiment;
FIG. 4 is a schematic flowchart of an information processing method according to an example embodiment;
FIG. 5 is a schematic diagram of a structure of a terminal according to an example embodiment;
FIG. 6a is a schematic diagram of a structure of a communication device according to an example embodiment;
FIG. 6b is a schematic diagram of a structure of a chip according to an example embodiment.

### DETAILED DESCRIPTION

Embodiments of the present disclosure provide an information processing method and a terminal, a communication device, a communication system, and a storage medium.

In a first aspect, an embodiment of the present disclosure provides an information processing method. The method includes:

determining, by a terminal, whether to perform an operation related to a Layer L1 measurement according to a cell measurement result of the terminal.

In the above embodiment, the terminal can autonomously determine whether to perform the operation related to the L1 measurement according to the cell measurement result, without the need for the terminal to send a measurement result to a network device or to wait for the network device to send trigger signaling for controlling and changing the L1 measurement. Compared with a method in which the network device triggers the initiation of the L1 measurement, the method in the embodiment of the present disclosure can effectively reduce additional signaling overhead caused by the method of triggering the initiation of the L1 measurement by the network device, lower latency, and is more suitable for a rapidly changing network environment.

In conjunction with some embodiments of the first aspect, in some embodiments, a measurement result of the L1 measurement is used to determine whether to perform a Layer L1 or Layer L2-Triggered Mobility (LTM) operation.

In the above embodiment, the measurement result of the L1 measurement can help the network device determine the communication quality of a current serving cell of the terminal, thereby determining whether the terminal performs LTM, so that the terminal can adapt to the rapidly changing network environment.

In conjunction with some embodiments of the first aspect, in some embodiments, determining, by the terminal, whether to perform the operation related to the Layer L1 measurement according to the cell measurement result of the terminal includes at least one of:
determining whether to initiate the L1 measurement according to the cell measurement result;
determining whether to stop the L1 measurement according to the cell measurement result;
activating or deactivating L1 measurement reporting according to the cell measurement result.

In the above embodiment, the terminal can autonomously determine whether to initiate the L1 measurement according to the cell measurement result; or, in a case that the terminal is configured to periodically initiate the L1 measurement, the terminal can autonomously determine whether to stop the L1 measurement according to the cell measurement result; or, in a case that transmission resources are limited, the terminal can autonomously determine whether to activate or deactivate L1 measurement reporting according to the cell measurement result. Thus, there is no need for network device triggering, the embodiment can reduce additional signaling overhead introduced by network device control and can lower latency.

In conjunction with some embodiments of the first aspect, in some embodiments, determining, by the terminal, whether to perform the operation related to the Layer L1 measurement according to the cell measurement result of the terminal includes one of:
the cell measurement result corresponding to a serving cell being less than or equal to a measurement threshold, and determining, by the terminal, to initiate the L1 measurement;
the cell measurement result corresponding to the serving cell being greater than the measurement threshold, and determining, by the terminal, not to initiate the L1 measurement;
the cell measurement result corresponding to a non-serving cell being less than or equal to the measurement threshold, and determining, by the terminal, not to initiate the L1 measurement;
the cell measurement result corresponding to the non-serving cell being greater than the measurement threshold, and determining, by the terminal, to initiate the L1 measurement.

In the above embodiment, according to a comparison result between the measurement threshold and the cell measurement result of the serving cell and/or the cell measurement result of the non-serving cell, the terminal can determine whether to initiate the L1 measurement based on the signal quality of the current serving cell or the signal quality of the non-serving cell. In this way, in a case that the signal quality of the current serving cell is relatively good or the signal quality of the non-serving cell is relatively poor, that is, in a case that the terminal does not need to perform cell switch, the L1 measurement is not initiated, so as to reduce the measurement power consumption of the terminal.

In conjunction with some embodiments of the first aspect, in some embodiments, the non-serving cell includes at least one of:
one or more candidate Primary Cells (PCells) corresponding to an LTM configuration configured by a network device;
one or more candidate Primary Secondary Cells (PSCells) corresponding to the LTM configuration configured by the network device;
a neighboring cell corresponding to the L1 measurement configured by the network device.

In the above embodiment, the terminal can determine the signal quality(qualities) of candidate cell(s) according to the cell measurement result(s) of one or more candidate cells (candidate Primary Cell (PCell) and/or candidate Primary Secondary Cell (PSCell) corresponding to the LTM configuration configured by the network device, and further determine whether to initiate the L1 measurement. Alternatively, the terminal can determine the signal quality of the neighboring cell according to the cell measurement result of the neighboring cell corresponding to the L1 measurement configured by the network device, and further determine whether to initiate the L1 measurement. In this way, in a case that the signal quality(qualities) of the candidate cell(s) or the neighboring cell corresponding to the L1 measurement is(are) relatively poor, that is, in a case that the terminal does not need to perform cell switch, the L1 measurement is not initiated, so as to reduce the measurement power consumption of the terminal.

In conjunction with some embodiments of the first aspect, in some embodiments, the measurement threshold includes at least one of:
a measurement threshold based on a network device configuration;
a measurement threshold specified in a protocol;
a measurement threshold determined based on a measurement capability of the terminal.

In the above embodiment, the measurement threshold can be configured by the network device, or the measurement threshold can be a default value specified in the protocol, or the measurement threshold can be determined by the terminal based on its own measurement capability, thereby improving the flexibility of the measurement threshold; and the condition for triggering the L1 measurement can be adjusted according to an actual situation.

In conjunction with some embodiments of the first aspect, in some embodiments, determining, by the terminal, whether to perform the operation related to the Layer L1 measurement according to the cell measurement result of the terminal includes:
determining, by the terminal, whether to initiate the L1 measurement associated with the serving cell and/or the non-serving cell according to an L3 measurement result of the serving cell.

In the above embodiment, the terminal can determine the communication quality of the serving cell according to the L3 measurement result of the serving cell, and autonomously determine whether to initiate the L1 measurement associated with the serving cell and/or the non-serving cell according to the communication quality of the serving cell, without the need for the network device to trigger the initiation of the L1 measurement. The embodiment can reduce the additional signaling overhead introduced by network device control, and lower the latency.

In conjunction with some embodiments of the first aspect, in some embodiments, determining, by the terminal, whether to perform the operation related to the Layer L1 measurement according to the cell measurement result of the terminal includes:
determining, by the terminal, whether to initiate the L1 measurement associated with the non-serving cell based on the L1 measurement result and/or the L3 measurement result of the serving cell.

In the above embodiment, when measurement is performed on the serving cell, the L3 measurement or the L1 measurement can be performed on the serving cell. For a scenario with higher latency requirement, the L1 measurement result of the serving cell can be used to more quickly determine whether initiation of the L1 measurement associated with the non-serving cell is not needed, thus reducing the latency.

In conjunction with some embodiments of the first aspect, in some embodiments, determining, by the terminal, whether to perform the operation related to the Layer L1 measurement according to cell measurement result of the terminal includes:
determining, by the terminal, whether to initiate the L1 measurement associated with the non-serving cell according to the L3 measurement result of the non-serving cell.

In the above embodiment, the terminal can determine the communication quality of the non-serving cell according to the L3 measurement result obtained through a measurement of a measurement reference signal of the non-serving cell, and autonomously determine whether it is needed to initiate the L1 measurement associated with the non-serving cell according to the communication quality of the non-serving cell, without the need for the network device to trigger the initiation of the L1 measurement. The embodiment can reduce the additional signaling overhead introduced by the network device control, and lower the latency.

In conjunction with some embodiments of the first aspect, in some embodiments, determining, by the terminal, whether to perform the operation related to the Layer L1 measurement according to the cell measurement result includes:
determining, by the terminal, whether to initiate the L1 measurement according to the L3 measurement result of the non-serving cell corresponding to one or more reference frequencies.

In the above embodiment, the terminal can determine the communication quality(qualities) of the non-serving cell(s) corresponding to one or more reference frequencies according to the L3 measurement result(s) obtained through measurement(s) of a measurement reference signal of the non-serving cell(s) corresponding to the one or more reference frequencies, and further determine whether it is needed to initiate the L1 measurement. On the one hand, the terminal does not need to send a measurement result to the network device, and the network device does not need to trigger the initiation of the L1 measurement according to the measurement result, thus reducing signaling overhead and latency. On the other hand, during the L3 measurement procedure, the L3 measurement is only performed on the non-serving cell(s) corresponding to one or more reference frequencies, reducing the number of non-serving cell(s) to be measured and reducing the power consumption of the terminal.

In conjunction with some embodiments of the first aspect, in some embodiments, determining, by the terminal, whether to initiate the L1 measurement associated with the serving cell and/or the non-serving cell according to the L3 measurement result of the serving cell includes at least one of:
determining whether to initiate the L1 measurement of a serving Master Cell Group (MCG) and/or a serving Primary Cell (PCell) according to an L3 measurement result of the serving Primary Cell (PCell);
determining whether to initiate the L1 measurement of a candidate MCG and/or a candidate PCell of the terminal according to the L3 measurement result of the serving Primary Cell (PCell);
determining whether to initiate the L1 measurement of the non-serving cell according to the L3 measurement result of the serving Primary Cell (PCell), where the L1 measurement of the non-serving cell is associated with a configuration of the serving MCG and/or the serving PCell;
determining whether to initiate the L1 measurement of a corresponding Secondary Cell Group (SCG) and/or a serving Primary Secondary Cell (PSCell) according to the L3 measurement result of the serving Primary Secondary Cell (PSCell);
determining whether to initiate the L1 measurement of a candidate SCG and/or a candidate PSCell of the terminal according to the L3 measurement result of the serving Primary Secondary Cell (PSCell);
determining whether to initiate the L1 measurement of the non-serving cell according to the L3 measurement result of the serving Primary Secondary Cell (PSCell), where the L1 measurement of non-serving cell is associated with a configuration of a serving SCG and/or the serving PSCell.

In the above embodiment, the terminal can determine whether it is needed for the terminal to perform serving cell switch according to the L3 measurement result of the serving cell (i.e., PCell and/or PSCell) and according to the communication quality of the serving cell, and further determine whether to initiate the L1 measurement of the serving cell, candidate cell(s), and/or associated non-serving cell(s). During the procedure of determining whether to initiate the L1 measurement, only the L3 measurement needs to be performed on the serving cell. Whether to initiate the L1 measurement is determined according to the L3 measurement result of the serving cell. There is no need to perform the L3 measurement on all other non-serving cells, effectively reducing the number of cells to be measured and lowering the power consumption of the terminal.

In conjunction with some embodiments of the first aspect, in some embodiments, determining, by the terminal, whether to initiate the L1 measurement associated with the non-serving cell according to the L1 measurement result and/or the L3 measurement result of the serving cell includes at least one of:
determining whether to initiate the L1 measurement of the candidate MCG and/or the candidate PCell of the terminal according to the L1 measurement result and/or the L3 measurement result of the serving Primary Cell (PCell);
determining whether to initiate the L1 measurement of the non-serving cell according to the L1 measurement result and/or the L3 measurement result of the serving Primary Cell (PCell), where the L1 measurement of the non-serving cell is associated with a configuration of a serving MCG and/or the serving PCell;
determining whether to initiate the L1 measurement of the candidate SCG and/or the candidate PSCell of the terminal according to the L1 measurement result and/or the L3 measurement result of the serving Primary Secondary Cell (PSCell);
determining whether to initiate L1 measurement of the non-serving cell according to the L1 measurement result and/or the L3 measurement result of the serving Primary Secondary Cell (PSCell), where the L1 measurement of non-serving cell is associated with a configuration of a serving SCG and/or the serving PSCell.

In the above embodiment, the terminal can determine whether it is needed for the terminal to perform serving cell switch according to the L1 measurement result and/or the L3 measurement result of the serving cell (i.e., PCell and/or PSCell) and according to the communication quality of the serving cell, and further determine whether to initiate the L1 measurement of the candidate cell(s) and/or associated non-serving cell. During the procedure of determining whether to initiate the L1 measurement, on the one hand, only the serving cell needs to be measured. Whether to initiate the L1 measurement is determined according to the measurement result of the serving cell, without the need to measure all other non-serving cell(s). The embodiment can effectively reduce the number of cells to be measured and lower the power consumption of the terminal. On the other hand, when measuring the serving cell, the L3 measurement or the L1 measurement can be performed on the serving cell. Therefore, for a scenario with higher latency requirement, the terminal can more quickly determine whether initiation of the L1 measurement of candidate cell(s) and/or associated non-serving cell(s) is not needed according to the L1 measurement result of the serving cell, thus reducing latency.

In conjunction with some embodiments of the first aspect, in some embodiments, the L1 measurement result and/or the L3 measurement result of the serving cell include at least one of:
the L3 measurement result of a measurement reference signal on the serving cell;
the L3 measurement result(s) of one or more beams of the serving cell;
an average value of L3 measurement results of multiple beams of the serving cell;
the L1 measurement result of the measurement reference signal of the serving cell;
the L1 measurement result(s) of one or more beams of the serving cell;
an average value of the L1 measurement results of multiple beams of the serving cell.

In the above embodiment, the terminal can monitor the measurement reference signal sent by the serving cell and/or one or more specific beams. The terminal determines the communication quality of the serving cell according to the measurement result of the measurement reference signal and/or the specific beam(s) of the serving cell, and thus the terminal can autonomously determine whether the L1 measurement needs to be initiated. It is not needed for the network device to trigger the initiation of the L1 measurement, reducing the additional signaling overhead introduced by network device control and lowering latency. Furthermore, the terminal can monitor one or more specific beams of the serving cell to obtain the measurement result(s) of one or more specific beams, thereby eliminating the need to monitor all beams of the serving cell and reducing the measurement power consumption of the terminal.

In conjunction with some embodiments of the first aspect, in some embodiments, the L3 measurement result of the non-serving cell includes at least one of:
the L3 measurement result of a measurement reference signal on the non-serving cell;
the L3 measurement result(s) of one or more beams of the non-serving cell;
an average value of L3 measurement results of multiple beams of the non-serving cell.

In the above embodiment, the terminal can monitor the measurement reference signal sent by the non-serving cell and/or one or more specific beams. The terminal determines the communication quality of the non-serving cell according to the L3 measurement result of the measurement reference signal and/or the specific beam(s) of the serving cell, and the terminal further autonomously determines whether to initiate the L1 measurement. It is not needed for the network device to trigger the initiation of the L1 measurement, reducing additional signaling overhead introduced by network device control and lowering latency. Furthermore, the terminal can monitor one or more specific beams of the non-serving cell to obtain the L3 measurement result(s) of the one or more specific beams, thereby avoiding the need to monitor all beams of the non-serving cell.

In conjunction with some embodiments of the first aspect, in some embodiments, the one or more beams include at least one of:
one or more beams are determined based on a network device configuration;
one or more beams specified in a protocol.

In the above embodiment, the terminal can determine, according to the configuration of the network device or as specified in the protocol, the specific beam(s) for which the L3 measurement is performed. On the one hand, the embodiment can improve the flexibility of beam measurement. On the other hand, the L3 measurement is performed only according to the specific beam(s), and whether to initiate the L1 measurement can be determined according to the L3 measurement result of the specific beam(s), thus effectively reducing the measurement bandwidth of the L3 measurement and reducing the power consumption of the terminal.

In conjunction with some embodiments of the first aspect, in some embodiments, an L1 measurement configuration of the non-serving cell includes at least one of:
a dedicated L1 measurement configuration configured by the network device for the non-serving cell;
an L1 measurement configuration generated by a source MCG;
an L1 measurement configuration generated by a source SCG.

In the above embodiment, during the procedure in which the terminal performs the L1 measurement on the non-serving cell, the measurement can be performed based on the dedicated L1 measurement configuration configured by the network device for the non-serving cell, or the measurement can be performed by directly referring to the L1 measurement configuration generated by the source MCG or the source SCG, thereby improving the flexibility of the L1 measurement of the non-serving cell.

In conjunction with some embodiments of the first aspect, in some embodiments, a measurement-related parameter for the L1 measurement is determined by a measurement-related parameter corresponding to the cell measurement result; or
the measurement-related parameter for the L1 measurement is determined by an L1 measurement configuration configured by the network device for the terminal; or
the measurement-related parameter for the L1 measurement is specified is a protocol.

In the above embodiment, after the terminal determines to initiate the L1 measurement, the terminal can determine the measurement-related parameter for the L1 measurement based on the measurement-related parameter corresponding to the cell measurement result that triggers the L1 measurement, the L1 measurement configuration configured by the network device for the terminal, and/or as specified in the protocol, thereby improving the flexibility of the L1 measurement.

In conjunction with some embodiments of the first aspect, in some embodiments, the L1 measurement includes at least one of:
the L1 measurement performed based on one or more measurement configurations corresponding to an LTM configuration configured by the network device;
a measurement based on measurement reporting for triggering LTM;
a beam measurement performed based on one or more beams configured by the network device for performing LTM.

In the above embodiment, the terminal can perform the L1 measurement based on one or more pre-configured measurement configurations for performing LTM, so as to use the L1 measurement result to assist the network device in performing LTM decision(s); or, the terminal can perform other measurement(s) that can trigger LTM measurement reporting, so as to use the measurement result to assist the network device in performing LTM decision(s); or, the terminal can perform beam measurement(s) based on one or more pre-configured dedicated beams, so as to use the beam measurement result(s) to assist the network device in performing LTM decision(s). In this way, the embodiment can improve the flexibility for initiating the L1 measurement.

In conjunction with some embodiments of the first aspect, in some embodiments, the L3 measurement includes:
a Radio Resource Control (RRM) Measurement.

In the above embodiment, the terminal can perform the RRM measurement on the serving cell and/or non-serving cell, and determine the communication quality of the serving cell and/or non-serving cell according to the measurement result of the RRM measurement used for mobility management. The terminal can autonomously determine whether to initiate the L1 measurement according to the communication quality of the serving cell and/or non-serving cell, without the need for the network device to trigger the initiation of the L1 measurement, thereby reducing the additional signaling overhead introduced by the network device control and lowering latency.

In a second aspect, an embodiment of the present disclosure provides a terminal. The terminal includes: a determination module configured to determine whether to perform an operation related to a Layer L1 measurement based on a cell measurement result of the terminal.

In a third aspect, an embodiment of the present disclosure provides a communication system. The communication system includes a terminal and a network device. The terminal is configured to implement the information processing method described in optional implementations of the first aspect.

In a fourth aspect, an embodiment of the present disclosure provides a communication device. The communication device includes:
one or more processors;
the processors are configured to invoke instructions to cause the communication device to perform the information processing method described in optional implementations of the first aspect.

In a fifth aspect, an embodiment of the present disclosure provides a storage medium storing instructions. When the instructions run on a communication device, the communication device is caused to perform the information processing method described in optional implementations of the first aspect.

In a sixth aspect, an embodiment of the present disclosure provides a program product. When the program product is executed by a communication device, the communication device is caused to perform the information processing method described in optional implementations of the first aspect.

In a seventh aspect, an embodiment of the present disclosure provides a computer program. When the computer program runs on a computer, the computer is caused to perform the information processing method described in optional implementations of the first aspect.

It can be understood that the aforementioned terminal, communication device, communication system, storage medium, program product, computer program are all used to perform the methods provided in the embodiments of the present disclosure. Therefore, for the beneficial effects that can be achieved, reference can be made to the beneficial effects in the corresponding methods, which will not be repeated here.

The embodiments of the present disclosure provide an information processing method and a terminal, a communication device, a communication system and a storage medium. In some embodiments, the "information indication method" can be used interchangeably with the terms such as "information processing method", "information transmission method", etc. The "information indication apparatus" can be used interchangeably with the terms such as "information processing apparatus", "information transmission apparatus", etc. The terms such as "communication system", "information processing system", etc., can be used interchangeably.

The embodiments of the present disclosure are not exhaustive, but are merely illustrative of some embodiments, and are not intended to be a specific limitation on the protection scope of the present disclosure. In the case of no contradiction, each step in a certain embodiment can be implemented as an independent embodiment, and the steps can be arbitrarily combined. For example, a solution obtained from removing some steps from a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined. For example, some or all steps of different embodiments can be arbitrarily combined, and a certain embodiment can be arbitrarily combined with the optional implementations of other embodiments.

In the respective embodiments of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "foregoing", "this", etc., may mean "one and only one", or "one or more", "at least one", etc. For example, when articles such as "a", "an", or "the", etc., in English are used in translation, the noun following the article may be understood as a singular expression form or a plural expression form.

In the embodiments of the present disclosure, "a plurality of" refers to two or more.

In some embodiments, the terms such as "at least one of", "one or more", "a plurality of", "multiple", etc., may be used interchangeably.

In the embodiments of the present disclosure, descriptions such as "at least one of A or B", "A and/or B", "in one case, A, and in another case, B", or "one case, A, and another case, B", etc., can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, and C, etc.

In some embodiments, descriptions such as "A or B", etc. may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, and C, etc.

The prefixes "first" and "second" in some embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes. For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first apparatus" as an example, the number of "apparatuses" can be one or more. In addition, the objects modified by different prefixes can be the same or different. For example, if the description object is "apparatus", then the "first apparatus" and the "second apparatus" can be the same apparatus or different apparatuses, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, the terms such as "...", "determining...", "in the case of...", "when...", "at the time of...", "if...", "provided ...", etc., can be used interchangeably.

In some embodiments, the terms such as "greater than", "greater than or equal to", "not less than", "more than", "more than or equal to", "not less than", "higher than", "higher than or equal to", "not lower than", "above", etc. can be used interchangeably, and terms such as "less than", "less than or equal to", "not greater than", "less than", "less than or equal to", "not more than", "lower than", "lower than or equal to", "not higher than", "below", etc. can be used interchangeably.

In some embodiments, the apparatus and so on can be interpreted as physical or virtual, and its name is not limited to the name described in the embodiments. Terms such as "apparatus", "equipment", "device", "circuit", "network element", "node", "function", "unit", "section", "system", "network", "chip", "chip system", "entity", "subject", or the like, can be used interchangeably.

In some embodiments, "network" can be interpreted as an apparatus included in the network (such as an access network device, a core network device, etc.)
In some embodiments, terms such as "access network device (AN device)", "radio access network device (RAN device)", "base station (BS)", "radio base station", "fixed station", "node", "access point", "transmission point (TP)", "reception point (RP)", "transmission reception point (transmission/reception point, TRP)", "panel", "antenna panel", "antenna array", "cell", "macro cell", "small cell", "femto cell", "pico cell" "sector", "cell group", "serving cell", "carrier", "component carrier", "bandwidth part (BWP)", or the like, can be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or the like, can be used interchangeably.

In some embodiments, the access network device, the core network device, or the network device may be replaced by a terminal. For example, embodiments of the present disclosure may also be applied to a structure where communications between the access network device, the core network device, or the network device and a terminal is replaced by communications between multiple terminals (e.g., device-to-device (D2D), vehicle-to-everything (V2X), etc.). In this case, a structure in which a terminal has all or part of functions of the access network device may be set. Furthermore, terms such as "uplink", "downlink", etc., may be replaced with terms corresponding to communications between terminals (e.g., "side", "sidelink"). For example, an uplink channel, a downlink channel, etc., may be replaced with a sidelink channel, and an uplink, a downlink, etc., may be replaced with a sidelink.

In some embodiments, the terminal may be replaced by an access network device, a core network device, or a network device. In this case, a structure in which the access network device, the core network device, or the network device may have all or a part of the functions of the terminal may be set.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

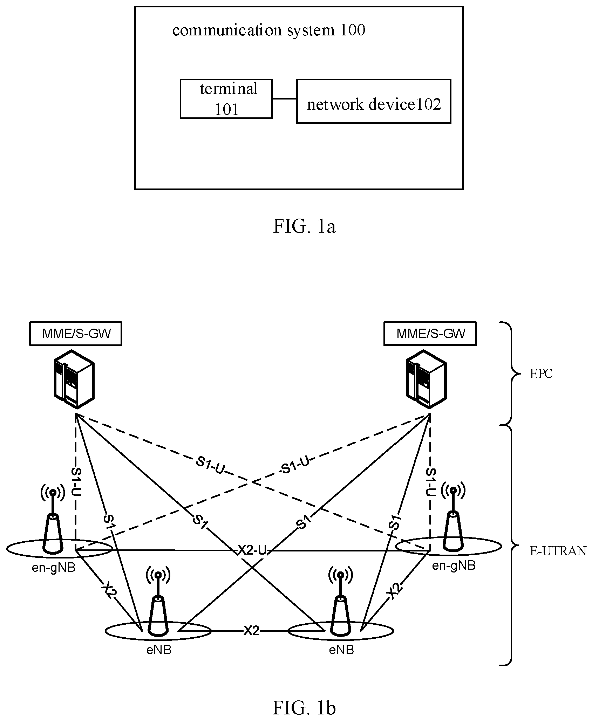

FIG. 1a is a schematic diagram of the architecture of a communication system according to an example embodiment of the present disclosure.

As shown in FIG. 1a, the communication system 100 includes a terminal 101 and a network device 102.

In some embodiments, the terminal 101 includes, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the network device 102 may include: an access network device and a core network device.

In some embodiments, the access network device may be, for example, a node or device that enables a terminal to access a wireless network. The access network device may include, but is not limited to, at least one of the following: an evolved Node B (eNB) in a 5G communication system, a next-generation evolved Node B (ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (cloud RAN), a base station in other communication systems, or an access node in a Wi-Fi system.

In some embodiments, the technical solutions of the present disclosure can be applicable to the Open RAN architecture. In this case, the interfaces between access network devices or interfaces within an access network device involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DU and centrally controlled by the CU, but it is not limited thereto.

In some embodiments, the core network device may be a device, including one or more network elements, etc., or the core network device may be a plurality of devices or a device cluster, including the one or more network elements. The network element(s) can be virtual or physical. For example, the core network includes at least one of: an Evolved Packet Core (EPC), a 5G Core Network (5GCN), or a Next Generation Core (NGC).

In some embodiments, the network element is, for example, an Access and Mobility Management Function (AMF).

In some embodiments, the network element is, for example, a Mobility Management Entity (MME).

In some embodiments, the network element is used for access and mobility management, such as registration management, connection management, and mobility management, etc., and the name is not limited to these names listed here.

In some embodiments, the network element may be a network element independent of the core network device.

In some embodiments, the network device 102 may include: a first network device and a second network device.

In some embodiments, the first network device may be a network device of a serving cell.

In some embodiments, the second network device may be a network device of a candidate cell.

It can be understood that the communication system described in the embodiments of the present disclosure is for the purpose of more clearly illustrating the technical solutions of the present disclosure, and does not constitute a limitation on the technical solutions provided in the present disclosure. As those skilled in the art will know, with the evolution of system architecture and the emergence of new business scenarios, the technical solutions provided in the embodiments of the present disclosure are also applicable to similar technical problems.

The following embodiments of the present disclosure can be applied to the communication system 100 shown in FIG. 1a, or to some of the subjects, but are not limited thereto. The subjects shown in FIG. 1a are illustrative. The communication system may include all or some of the subjects in FIG. 1a, or it may include subjects other than those of FIG. 1a. The number and configuration of the subjects are arbitrary, and the connection relationship between the subjects is illustrative. The subjects may not be connected or may be connected, and the connection can be in any way, which may be a direct connection or an indirect connection, a wired connection or a wireless connection.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems built upon them, or the like. Furthermore, a combination of multiple systems (e.g., a combination of LTE or LTE-A with 5G) can be applied.

In some embodiments, the information processing method in the embodiments of the present disclosure may be applied to a communication system using a dual connectivity technology. The dual connectivity technology includes the following types:
The first type is Multi-Radio Dual Connectivity (MR-DC).

MR-DC is a generalized intra evolved UMTS terrestrial radio access (Intra Evolved Universal Terrestrial Radio Access, Intra-E-UTRA) dual connectivity, where a UE may utilize radio resources provided by two different resource scheduling units located in two different New Generation Radio Access Network (NG-RAN) nodes connected through a non-ideal backhaul. One scheduling unit provides New Radio (NR) access, and the other provides either E-UTRA or NR access. A base station of a primary cell may be a Master Node (MN), and a base station of a secondary cell may be a Secondary Node (SN). The master node and the secondary node are connected through a network interface, with at least the master node connected to a core network.

The second type is MR-DC based on Evolved Packet Core (EPC).

Referring to FIG. 1b, an architecture diagram of an Evolved Universal Terrestrial Radio Access Network (E-UTRA)-NR dual connectivity (EN-DC) is shown in FIG. 1b. The E-UTRAN supports MR-DC through E-UTRA-NR DC (EN-DC), where a UE is connected to a base station eNB acting as a Master Node (MN) and a base station en-gNB acting as a Secondary Node (SN). The eNB is connected to the core network EPC through an S1 interface and to the base station en-gNB through an X2 interface. The base station en-gNB may also be connected to the core network EPC through an S1-U interface and to other base stations en-gNBs through an X2-U interface.

A core network device of the EPC may include: a Mobility Management Entity (MME) and/or a Service-Gateway (S-GW).

The third type is MR-DC with the 5th Generation Core (5GC).

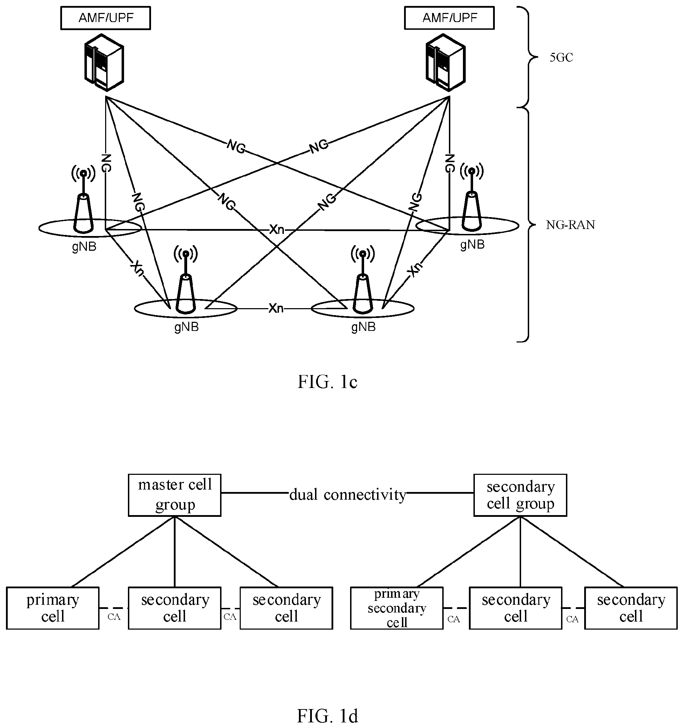

The 5GC supports the following types of dual connectivity:
1) evolved UMTS terrestrial radio access (Evolved Universal Terrestrial Radio Access Radio (E-UTRA)-New Radio (NR) and next generation E-UTRA NR dual connectivity (Next Generation RAN E-UTRA New Radio-Dual Connectivity (NGEN-DC):
   The 5G radio access network NG-RAN supports NG-RAN E-UTRA-NR dual connectivity (NGEN-DC), where a UE is connected to the ng-eNB acting as a Master Node (MN) and the gNB acting as a Secondary Node (SN). The base station ng-eNB is connected to the 5GC, and the base station gNB is connected to the base station ng-eNB through an Xn interface.
2) New Radio-Evolution Universal mobile telecommunications system Terrestrial Radio Access Network (NR-E-UTRA) dual connectivity:
   The NG-RAN supports NR-E-UTRA Dual Connectivity (NE-DC), where a UE is connected to the base station gNB acting as an MN and the base station ng-eNB acting as a Secondary Node (SN). The base station gNB is connected to the 5GC, and the base station ng-eNB is connected to the base station gNB through the Xn interface.
3) NR-NR dual connectivity:
   Referring to FIG. 1c, a schematic diagram of an NR-DC architecture is shown in FIG. 1c. The NG-RAN supports NR-NR Dual Connectivity (NR-DC), where a UE is connected to the base station gNB acting as a MN and another base station gNB acting as a Secondary Node (SN). The primary base station gNB is connected to the 5GC through an NG interface, and the two base stations gNBs are connected through the Xn interface. The secondary base station gNB may also be connected to the 5GC through an NG-U interface. Furthermore, the NR-DC may also be used for the UE to access a single base station gNB which simultaneously acts as the MN and the Secondary Node (SN) and is configured with both a Master Cell Group (MCG) and a Secondary Cell Group (SCG).

In some embodiments, under dual connectivity, User Equipment (UE) may simultaneously access two cells or two cell groups. For example, the UE may simultaneously access a Primary Cell (PCell) and a Secondary Cell (SCell), or simultaneously access a Master Cell Group (MCG) and a Secondary Cell Group (SCG). An MCG includes multiple cells, one of which is used to initiate initial access, and this cell is called PCell. As the name suggests, the PCell is the most important cell in the MCG. The other cells in the MCG besides the PCell are called SCells. The PCell in the MCG and the SCells in the MCG are combined through Carrier Aggregation (CA) to improve the transmission rate and meet rate requirements of users.

In some embodiments, a primary cell in a Master Cell Group (MCG) may be abbreviated as PCell, and a secondary cell may be abbreviated as SCell. A primary secondary cell in a Secondary Cell Group (SCG) may be abbreviated as PSCell. Typically, multiple control signaling for the UE is transmitted only on the Primary Cell (PCell) or the Primary Secondary Cell (PSCell). In some embodiments, a concept of a special (primary) cell (sPcell) is proposed; the sPcell may include: a Primary Cell (PCell) and/or a Primary Secondary Cell (PSCell).

As shown in FIG. 1d, a schematic diagram of a master cell group and a secondary cell group is shown in FIG. 1d. When a UE supports dual connectivity, multiple connectivity, or carrier aggregation, the serving cell of the UE may include a primary cell and a secondary cell; the serving cell group of the UE may include a master cell group and a secondary cell group.

L1/L2-Triggered Mobility (LTM) is introduced in R18. In some embodiments, the network device may provide a terminal with multiple candidate cells or candidate cell groups. The network device may subsequently control the terminal to change among the multiple candidate cells or cell groups via L1 signaling or L2 signaling, such as changing the candidate cell or candidate cell group from a candidate cell or cell group-1 to a candidate cell or cell group-2. The L1 signaling may include Downlink Control Information (DCI), and the L2 signaling may include MAC Control Element (CE) signaling.

One serving cell or cell group may correspond to one or more candidate cells or cell groups.

In an embodiment, LTM is a procedure that may include the following. A gNB sends LTM configuration(s) to a UE in advance via RRC signaling. When the gNB receives a Layer L1 measurement report from the UE, the gNB sends a handover command to change the serving cell of the UE via MAC CE signaling based on the report. The cell switch command indicates LTM candidate configuration(s). The LTM candidate configuration(s) is(are) one or more of the LTM candidate configuration(s) provided to the UE in advance by the network via RRC signaling. When cell switch is triggered, the UE switches to a candidate cell associated with the LTM candidate configuration(s) as the target cell. The LTM configuration candidate configuration(s) may be added, modified, and/or released by the network devices via RRC signaling.

In some embodiments, LTM is a Primary Cell (PCell) or Primary Secondary Cell switch procedure that the network device triggers via MAC CE signaling based on a measurement result of an L1 measurement (LTM is a PCell (or PSCell) cell switch procedure that the network triggers via MAC CE based on L1 measurements).

In some embodiments, LTM may include Subsequent LTM. In the Subsequent LTM cell switch procedure, the network device does not need to reconfigure candidate cell(s) for the UE (Subsequent LTM cell switch procedures between candidate cells where the UE does not need to be reconfigured by the network in between).

In some embodiments, LTM may be used to trigger PCell or MCG change, and/or, LTM may be used to trigger PSCell or SCG change, and/or, LTM may also be used to trigger SCell change.

In some embodiments, LTM may also be triggered by the UE based on a condition, that is, the UE determines whether to execute LTM based on whether the condition is met.

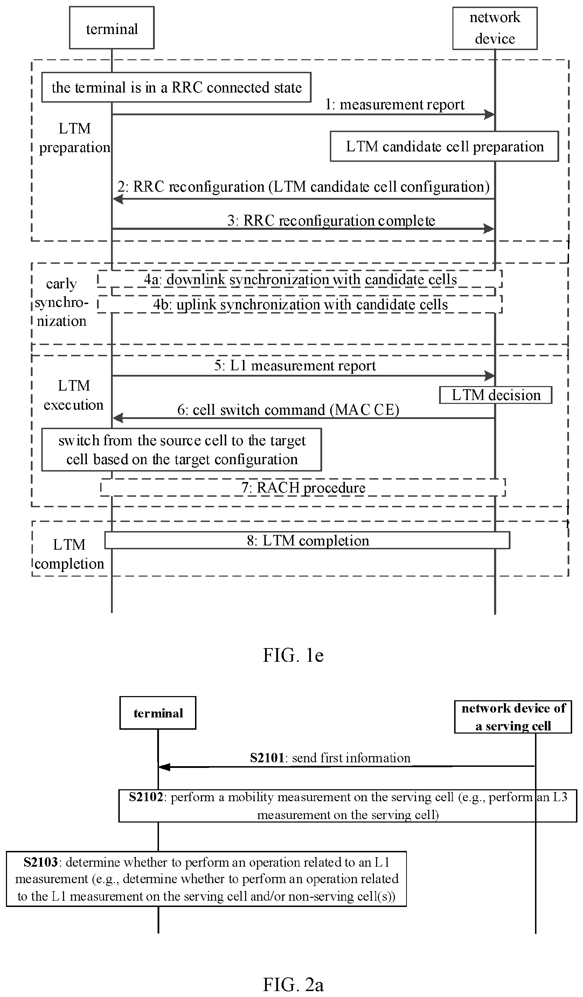

As shown in FIG. 1e, a schematic diagram of an LTM interaction flow according to an example embodiment is shown in FIG. 1e. In LTM, the gNB sends candidate cell configuration(s) for LTM to the UE in advance via RRC signaling. When the gNB receives an L1 measurement report from the UE, the gNB sends a cell switch command via MAC CE to change the serving cell of the UE. Then, the UE triggers cell switch by selecting a specified LTM candidate cell configuration as the target configuration of the gNB. The LTM candidate cell configuration can only be added, modified, and released by the network via RRC signaling. The LTM procedure may be used to reduce mobility latency.

In an embodiment, an LTM configuration includes, but is not limited to, at least one of: a configuration identity, a configuration for a corresponding candidate target cell (or cell group).

The network side may configure multiple LTM configurations and reference configurations for the UE simultaneously.

The configuration identity is an ID that indicates a relevant configuration.

The configuration for the corresponding candidate target cell (or cell group) is a candidate configuration corresponding to the target cell which the UE accesses when the UE triggers mobility operation. The configuration may be represented by RRC reconfiguration (RRCReconfiguration).

The reference configuration is a reference configuration corresponding to the candidate target configuration. The candidate target configuration is an incremental configuration of the reference configuration. A complete configuration may be generated based on the candidate target configuration and the reference configuration. This configuration may be represented by RRC Reconfiguration (RRCReconfiguration). The UE applies the complete configuration when LTM is executed. The reference configuration may be a network-generated specific configuration or may be a current configuration of the UE. A reference configuration is only required for LTM configuration.

FIG. 1e is a schematic diagram of an LTM process according to an example embodiment. As shown in FIG. 1e, a user needs to perform L1 measurements on respective candidate cells and report the measurement results to a source cell to determine whether cell switch is required.

In R18 LTM, 3GPP has enhanced L1 measurements, supporting both intra-frequency and inter-frequency L1 measurements. In some embodiments, R18 only supports SSB-based L1-RSRP measurements.

In some embodiments, the L1 measurement supports semi-persistent and aperiodic reporting on the Physical Uplink Shared Channel (PUSCH) and semi-persistent and aperiodic reporting on the Physical Uplink Control Channel (PUCCH).

In some embodiments, the enhancement of L1 measurement may also include the following alternative options:
CSI-RS measurement;
L1-SINR measurement;
event-triggered L1 measurement reporting;
current L1 measurement enhancement.

FIG. 2a is a schematic diagram illustrating interactions in an information processing method according to an example embodiment. As shown in FIG. 2a, the embodiment of the present disclosure relates to an information processing method applied in the communication system 100. The method includes:
In **step S2101**, a network device sends first information to a terminal.

In some embodiments, the terminal receives the first information sent by the network device.

In some embodiments, the terminal may be a terminal that supports dual connectivity, multiple connectivity, or carrier aggregation.

In some embodiments, the terminal may be a terminal that supports an L1 measurement.

In some embodiments, the terminal may be a terminal that supports LTM.

For example, supporting LTM may be supporting LTM for PCell or MCG, or may be supporting LTM for PSCell or SCG, or may be supporting the both.

In some embodiments, the network device may be an access network device corresponding to a serving cell which the terminal currently accesses or a source cell.

In some embodiments, the network device may be an access network device corresponding to a primary cell or master cell group of the terminal.

In some embodiments, the network device may be an access network device corresponding to a primary secondary cell or secondary cell group of the terminal.

In some embodiments, the first information may include: LTM configuration(s) corresponding to one or more candidate cells.

In some embodiments, the LTM configuration(s) may be LTM configuration(s) corresponding to Layer 1 (L1) or Layer 2 (L2)-triggered mobility (LTM) configured by the network device for the terminal.

In some embodiments, L1/L1-triggered mobility LTM may include at least one of:
L1/L2-triggered master cell group or primary cell mobility;
L1/L2-triggered secondary cell group or primary secondary cell mobility.

In some embodiments, the L1/L2-triggered master cell group or primary cell mobility is used to control the terminal to change its serving master cell group or primary cell among multiple candidate master cell groups or candidate primary cells corresponding to the serving master cell group or primary cell of the terminal.

In some embodiments, the L1/L2-triggered secondary cell group or primary secondary cell mobility is used for the terminal to change its serving secondary cell group or primary secondary cell among multiple candidate secondary cell groups or candidate primary secondary cells corresponding to the serving secondary cell group or primary secondary cell of the terminal.

In some embodiments, the first information may include at least one of:
one or more configuration information identities;
identity(identities) of one or more candidate cells or candidate cell groups to be measured;
measurement configuration(s) for one or more serving cells or serving cell groups;
measurement configuration(s) for one or more candidate cells or candidate cell groups;
mobility configuration(s) for one or more candidate cells;
one or more measurement thresholds.

In some embodiments, the measurement threshold may include:
a threshold corresponding to an L3 measurement result. It should be noted that whether to initiate the L1 measurement is determined according to a comparison result between the L3 measurement result of the serving cell and the threshold. The L1 measurement includes, but is not limited to, L1 measurement(s) of the serving cell and/or non-serving cell(s).

In some embodiments, the measurement threshold includes at least one of:
a measurement threshold based on a network device configuration;
a measurement threshold specified in a protocol;
a measurement threshold determined by the UE based on an implementation.

It can be understood that the measurement threshold may be configured by the network device, or it may be a default value specified in a protocol, or a threshold determined by the UE based on the implementation.

In some embodiments, different serving cells correspond to different measurement thresholds. For example, a serving PCell corresponds to a measurement threshold, and a serving PSCell corresponds to another measurement threshold.

For example, the threshold corresponding to the serving PCell is used to determine whether to initiate the L1 measurement of the serving cell and/or non-serving cell configured for the UE by the serving PCell (or serving MCG).

For example, the threshold corresponding to the serving PSCell is used to determine whether to initiate the L1 measurement of the serving cell and/or non-serving cell configured for the UE by the serving PSCell (or serving SCG).

In some embodiments, the measurement threshold may be configured independently for different non-serving cells, or a general measurement threshold may be configured.

In some embodiments, the measurement threshold may be configured for initiation of the L1 measurement of the serving cell.

In some embodiments, measurement quantities corresponding to the thresholds for initiating L1 measurements of the serving cell and non-serving cell(s) may be the same or different. The measurement quantity may be at least one of RSRQ, RSRP, or SINR.

In some embodiments, the thresholds for initiating the L1 measurements of the serving cell and non-serving cell(s) may be the same or different.

For example, for independently configured thresholds, the network side configures a threshold #1 for a non-serving cell 1. The UE determines whether to initiate the L1 measurement of the non-serving cell 1 based on a comparison between the measurement result of the serving cell and the threshold #1.

For example, for a general configured threshold, the network side configures a general threshold #0 for all non-serving cells for which L1 measurement configurations are configured. The UE determines whether to initiate the L1 measurement(s) of one or more non-serving cells for which the network configures L1 configuration(s) based on a comparison between the measurement result of the serving cell and the threshold #0.

In some embodiments, the first information may be sent via signaling.

In some embodiments, the first information may be sent via L1 signaling.

In some embodiments, the L1 signaling includes at least: Downlink Control Information (DCI).

In some embodiments, the first information may be sent via L2 signaling.

In some embodiments, the L2 signaling includes at least: Media Access Control (MAC) Control Element (CE), etc.

In some embodiments, the first information may be sent via L3 signaling.

In some embodiments, the L3 signaling may include Radio Resource Control (RRC) signaling.

In **step S2102**, the terminal performs a mobility measurement on the serving cell.

In some embodiments, the terminal performs an L3 measurement on the serving cell.

It should be noted that the terminal may perform the L3 measurement on the serving cell to determine the communication quality of the serving cell according to the measurement result of the L3 measurement of the serving cell. It can be understood that if the communication quality of the serving cell is relatively good, the terminal does not need to perform cell switch, and therefore, there is no need to perform the L1 measurement for LTM.

In some embodiments, performing, by the terminal, the L3 measurement on the serving cell may include at least one of:
performing, by the terminal, the L3 measurement on the serving cell in the serving MCG;
performing, by the terminal, the L3 measurement on the serving cell in the serving SCG;
performing, by the terminal, the L3 measurement on the serving PCell;
performing, by the terminal, the L3 measurement on the serving PSCell.

In some embodiments, performing, by the terminal, the L3 measurement on the serving cell may include:
performing, by the terminal, the L3 measurement on a serving cell measurement object corresponding to the serving cell.

The serving cell may be one or more of the serving PCell, the serving PSCell, or the serving SCell.

It can be understood that in the embodiments of the present disclosure, the terminal may be a terminal supporting dual connectivity, multiple connectivity, or carrier aggregation. The terminal may simultaneously access two cells or two cell groups to improve the transmission rate. Therefore, the terminal performing the L3 measurement on the serving cell may be performing the L3 measurement on the MCG or PCell accessed by the terminal to determine the communication quality of the MCG or PCell. Alternatively, the terminal performing the L3 measurement on the serving cell may be may be performing the L3 measurement on the SCG or PSCell accessed by the terminal to determine the communication quality of the SCG or PSCell. Whether MCG or PCell switch is needed is determined according to the communication quality of the MCG or PCell; whether SCG or PSCell switch is needed is determined according to the communication quality of the SCG or PSCell.

In some embodiments, the L3 measurement may include a Radio Resource Management (RRM) measurement.

In some embodiments, the L3 measurement is used for mobility management of the terminal.

It should be noted that the mobility management refers to a management procedure in terms of service continuity for a terminal. Through the mobility management, the connection status between the terminal and the network device can be optimized, thereby ensuring the application of various network services and allowing the terminal to maintain better network coverage or network connectivity.

In some embodiments, the terminal may perform the L3 measurement on the serving cell based on an L3 measurement configuration pre-configured by the network device.

In some embodiments, the L3 measurement configuration may include measurement-related parameter(s) for the L3 measurement.

In some embodiments, the measurement-related parameter(s) for the L3 measurement may include at least one of:
a measurement reference signal;
a measurement quantity;
configuration information for the measurement reference signal.

It should be noted that the measurement reference signal may be a reference signal periodically broadcast by a cell. The terminal may receive the measurement reference signal and determine the communication quality of the cell according to a signal strength of the measurement reference signal.

The measurement quantity may be a measurement value of the measurement reference signal determined through a measurement. In some embodiments, the measurement quantity may be a parameter used to describe a performance index of the measurement reference signal. For example, the measurement quantity may be a Channel Quality Indicator (CQI).

The configuration information for the measurement reference signal is used for the terminal to determine a signal resource for the measurement reference signal.

It can be understood that the terminal may receive the measurement reference signal according to the configuration information for the measurement reference signal, and perform a measurement based on the received measurement reference signal to obtain the measurement quantity corresponding to the measurement reference signal.

In some embodiments, the configuration information for the measurement reference signal may include at least one of:
an identity of the measurement reference signal;
a resource configuration for the measurement reference signal;
a period configuration for the measurement reference signal.

In some embodiments, the resource configuration for the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

The L3 measurement may be performed based on the SSB and/or CSI-RS of the serving cell to determine the L3 measurement result of the serving cell.

In some embodiments, the measurement quantity of the L3 measurement may include at least one of:
Reference Signal Receiving Power (RSRP);
Reference Signal Receiving Quality (RSRQ);
Signal-to-Interference-plus-Noise Ratio (SINR) of the reference signal.

It can be understood that the L3 measurement result of the serving cell may include one or more of: L3-RSRP, L3-RSRQ, or L3-SINR.

In **step S2103**, the terminal determines whether to perform an operation related to the L1 measurement.

In some embodiments, the terminal determines whether to perform the operation related to the L1 measurement according to the cell measurement result of the serving cell.

In some embodiments, determining, by the terminal, whether to perform the operation related to the L1 measurement according to the cell measurement result of the serving cell may include at least one of:
determining whether to initiate the L1 measurement according to the cell measurement result of the serving cell;
determining whether to stop the L1 measurement according to the cell measurement result of the serving cell;
activating or deactivating L1 measurement reporting according to the cell measurement result of the serving cell.

The measurement result of the L1 measurement is used for the network device to determine whether the terminal performs LTM. If the cell measurement result of the serving cell indicates that the communication quality of the serving cell is relatively good, the network device will not control the terminal to perform LTM even if the terminal performs the L1 measurement and reporting in this case. Thus, in a case that the terminal's own measurement capability is insufficient, determining whether to initiate the L1 measurement according to the cell measurement result of the serving cell can reduce unnecessary measurements and lower the measurement power consumption of the terminal.

Alternatively, in a case that the terminal is configured to periodically initiate the L1 measurement, the terminal can determine whether to stop the L1 measurement according to the cell measurement result, thereby reducing the measurement power consumption of the terminal.

Alternatively, in a case that transmission resources are limited, the terminal can determine whether to activate or deactivate L1 measurement reporting according to the cell measurement result, thereby effectively conserving transmission resources. It should be noted that after the terminal completes the L1 measurement, the terminal may determine whether to report the measurement result of the L1 measurement to the network device according to the cell measurement result. This embodiment reduces unnecessary L1 measurement reporting in a case that the transmission resources are limited and the signal quality of the serving cell of the terminal is relatively good.

It should be noted that the initiation or stopping of the L1 measurement and/or activation or deactivation of L1 measurement reporting may be determined by the terminal, without being triggered by the network device. Thus, the embodiment reduces the additional signaling overhead introduced by network device control and lowers latency.

In some embodiments, the L1 measurement may be a beam measurement.

It should be noted that in New Radio (NR), especially when the communication frequency band is in Frequency Range (FR) 2, due to the rapid attenuation of high-frequency channels, in order to ensure signal coverage, the terminal and the network device may perform information transmission and reception based on beam(s).

In some embodiments, a cell may include multiple beams.

In some embodiments, the measurement result of the L1 measurement may be used to determine the beam performance of one or more beams in a cell.

In some embodiments, the measurement result of the L1 measurement may be used to determine, from multiple beams in the cell, a serving beam for communications between the terminal and the network device.

In some embodiments, the measurement result of L1 measurement is used to determine whether to perform a Layer L1 or Layer L2-triggered mobility (LTM) operation.

In some embodiments, the measurement result of the L1 measurement is used to assist the network device in making a cell switch decision.

It should be noted that the terminal performs the L1 measurement and reports the measurement result of the L1 measurement to the network device. This allows the network device to determine the beam performance of the cell and/or cell performance according to the measurement result of the L1 measurement reported by the terminal, and further determine whether the terminal needs to perform cell switch. When it is determined that the terminal needs to perform cell switch, the serving cell is changed through L1 or L2 signaling, and a corresponding serving beam is selected to achieve fast cell switch, thereby achieving the goal of low latency and low overhead.

In some embodiments, the L1 measurement includes at least one of:
the L1 measurement performed based on one or more measurement configurations corresponding to the LTM configuration(s) configured by the network device;
a measurement based on measurement reporting for triggering LTM;
a beam measurement based on one or more beams configured by the network device for performing LTM.

It can be understood that the network device may pre-configure LTM configuration(s) for the terminal. It should be noted that LTM configuration(s) is(are) used for the terminal to perform a mobility operation related to the LTM configuration(s).

In some embodiments, the LTM configuration(s) may include at least one of:
one or more candidate cells configured by the network device for the terminal;
L1 measurement configuration(s), where the L1 measurement configuration(s) may be measurement configuration(s) corresponding to one or more candidate cells.

In some embodiments, the L1 measurement configuration(s) may not be included in the LTM configuration(s) and may be sent to the UE by the network side through other information, such as being sent to the UE together with the L3 measurement configuration(s) or being sent to the UE separately. For example, the terminal may initiate the L1 measurement based on one or more pre-configured measurement configurations for performing LTM, and report the measurement result of the L1 measurement, so as to use the L1 measurement result to assist the network device in performing an LTM decision.

For example, the terminal may initiate the L1 measurement based on one or more pre-configured measurement configurations for performing LTM, and trigger an LTM-based cell change based on the L1 measurement result.

Alternatively, the terminal may perform other measurement(s) that can trigger LTM measurement reporting, so as to use the measurement result to assist the network device in making an LTM decision.

Alternatively, the network device may pre-configure one or more dedicated beams. The beam performance of the beam(s) is used to assist the network device in determining whether the terminal needs to perform LTM.

The terminal may perform beam measurement(s) based on the one or more pre-configured dedicated beams in order to use the beam measurement result(s) to assist the network device in performing an LTM decision.

Alternatively, the dedicated beam(s) is(are) determined by the UE based on an implementation, or the dedicated beam(s) is(are) determined by the UE as specified in a protocol, such as one or more best beams in a cell, or one or more beams in a cell exceeding a network-configured threshold or a protocol-specified threshold.

It should be noted that the terminal may determine whether to initiate any one of the above measurements based on the cell measurement result(s), so as to assist the network device in performing an LTM decision by reporting the measurement result of the measurement to the network device, thereby improving the flexibility of initiating the L1 measurement.

In some embodiments, the terminal determines whether to perform the operation related to the L1 measurement according to the L3 measurement result of the serving cell.

The terminal can determine the communication quality of the serving cell according to the L3 measurement result obtained through the measurement of the measurement reference signal of the serving cell, and thus autonomously determine whether it is needed to initiate the L1 measurement. This embodiment eliminates the need for the network device to trigger the initiation of the L1 measurement, reduces the additional signaling overhead introduced by network device control and lowers latency.

In some embodiments, determining, by the terminal, whether to initiate the L1 measurement according to the L3 measurement result of the serving cell includes at least one of:
determining whether to initiate the L1 measurement of the serving cell according to the L3 measurement result of the serving cell;
determining whether to initiate the L1 measurement associated with the non-serving cell according to the L3 measurement result of the serving cell.

In some embodiments, determining whether to initiate the L1 measurement of the serving cell according to the L3 measurement result of the serving cell may be understood as: determining whether to initiate beam measurements of multiple beams of the serving cell according to the L3 measurement result of the serving cell.

In some embodiments, whether to initiate the L1 measurements of multiple beams of the serving cell may be determined based on the L3 measurement result of the serving beam of the serving cell.

In some embodiments, a measurement period for the L1 measurement of the serving cell is smaller than a measurement period for the L3 measurement of the serving cell.

It should be noted that a measurement power consumption corresponding to the L3 measurement of the serving cell is smaller than a measurement power consumption corresponding to the L1 measurement of the serving cell. Therefore, the terminal can determine whether to initiate the L1 measurement of the serving cell with higher measurement power consumption based on the L3 measurement result of the serving cell with lower measurement power consumption.

In some embodiments, determining whether to initiate the L1 measurement associated with the non-serving cell(s) according to the L3 measurement result of the serving cell may be understood as: determining whether to initiate beam measurement(s) associated with one or more non-serving cells according to the L3 measurement result of the serving cell.

It should be noted that the terminal can determine the communication quality of the serving cell according to the L3 measurement result of the serving cell, and further determine whether to initiate the L1 measurement associated with non-serving cell(s) according to the communication quality of the serving cell.

In some embodiments, the serving cell may include: PCell and/or PSCell.

In some embodiments, the non-serving cell(s) may include at least one of:
one or more candidate cells or candidate cell groups corresponding to the LTM configuration(s) configured by the network device;
a neighboring cell corresponding to the L1 measurement configured by the network device.

In some other embodiments, the non-serving cell(s) may include:
candidate cell(s) configured by a network device corresponding to the serving cell for the terminal;
cell(s) for which L1 measurement(s) and/or measurement reporting configuration(s) are configured by network device(s) corresponding to the non-serving cell(s).

In some embodiments, candidate cell(s) may be at least one candidate cell or candidate cell group configured by the network device for the terminal to perform LTM.

In some embodiments, candidate cell(s) may include at least one of:
cell(s) in a candidate MCG for performing LTM;
candidate PCell(s) for performing LTM;
cell(s) in a candidate SCG for performing LTM;
candidate PSCell(s) for performing LTM.

In some embodiments, candidate cell group(s) may include at least one of:
candidate MCG(s) for performing LTM;
candidate SCG(s) for performing LTM.

In some embodiments, determining whether to initiate the L1 measurement of the serving cell according to the L3 measurement result of the serving cell includes:
determining whether to initiate the L1 measurement of a serving Master Cell Group (MCG) and/or serving Primary Cell (PCell) according to the L3 measurement result of the serving Primary Cell (PCell);
determining whether to initiate the L1 measurement of a corresponding Secondary Cell Group (SCG) and/or a serving Primary Secondary Cell (PSCell) according to the L3 measurement result of the serving Primary Secondary Cell (PSCell).

In some embodiments, determining whether to initiate the L1 measurement associated with non-serving cell(s) according to the L3 measurement result of the serving cell includes:
determining whether to initiate the L1 measurement of a candidate MCG and/or candidate PCell of the terminal according to the L3 measurement result of the serving Primary Cell (PCell);
determining whether to initiate the L1 measurement of the non-serving cell(s) according to the L3 measurement result of the serving Primary Cell (PCell), where the L1 measurement of non-serving cell(s) is associated with a configuration of a serving MCG and/or the serving PCell.
determining whether to initiate the L1 measurement of a candidate SCG and/or candidate PSCell of the terminal according to the L3 measurement result of the serving Primary Secondary Cell (PSCell);
determining whether to initiate the L1 measurement of non-serving cell(s) according to the L3 measurement result of the serving Primary Secondary Cell (PSCell), where the L1 measurement of non-serving cell(s) is associated with a configuration of a serving SCG and/or the serving PSCell.

It should be noted that the L1 measurement of the non-serving cell(s) being associated with the configuration of the serving MCG and/or serving PCell may be understood as: the L1 measurement configuration for the L1 measurement of the non-serving cell(s) may refer to the L1 measurement configuration configured by the serving MCG and/or serving PCell.

The L1 measurement of the non-serving cell(s) being associated with the configuration of the serving SCG and/or serving PSCell may be understood as: the L1 measurement configuration of the L1 measurement of the non-serving cell(s) may refer to the L1 measurement configuration configured by the serving SCG and/or serving PSCell.

In some embodiments, the L3 measurement result of the serving cell includes at least one of:
the L3 measurement result of a measurement reference signal on the serving cell;
the L3 measurement result of one or more beams of the serving cell;
an average value of L3 measurement results of multiple beams of the serving cell.

In some embodiments, the serving cell may include multiple different beams, and the multiple different beams are used for transmitting measurement reference signals.

The terminal may receive measurement reference signals transmitted using multiple different beams, and determine the communication quality of the serving cell and the beam performance of multiple beams of the serving cell according to the L3 measurement results of the measurement reference signals transmitted using multiple different beams.

The L3 measurement result(s) of one or more beams of the serving cell may be understood as follows: when the terminal performs L3 measurement of the serving cell, the terminal may monitor one or more specific beams of the serving cell to obtain the L3 measurement result(s) of the one or more specific beams. Thus, the terminal does not need to monitor all beams of the serving cell, and the power consumption of the terminal can be reduced.

In some embodiments, one or more beams include at least one of:
one or more beams determined based on a network device configuration;
one or more beams as specified in a protocol.

It can be understood that the one or more beams may be beam(s) specified by the network device, or beam(s) determined by the terminal according to a criterion specified in a protocol.

For example, the beam(s) may be one or more beams with the best current performance, or one or more beams whose measurement results are greater than a specific value.

It should be noted that when the terminal performs the L3 measurement of the serving cell, the terminal may directly monitor the beam(s) pre-configured by the network device and/or the beam(s) specified in a protocol to obtain the L3 measurement result(s) of one or more specific beams of the serving cell. Thus, it is not necessary to monitor all beams of the serving cell, reducing the power consumption of the terminal.

In some embodiments, the terminal may determine a target beam according to first information sent by the network device.

In some embodiments, determining, by the terminal, whether to initiate the L1 measurement according to the cell measurement result of the serving cell includes at least one of:
the cell measurement result of the serving cell being less than or equal to a measurement threshold, and determining, by the terminal, to initiate the L1 measurement;
the cell measurement result of the serving cell being greater than the measurement threshold, and determining, by the terminal, not to initiate the L1 measurement.

It should be noted that the measurement threshold may be the lowest threshold of the cell signal that meets a communication requirement of the terminal.

It can be understood that the cell measurement result of the serving cell being less than or equal to the measurement threshold indicates that the communication quality of the serving cell is relatively poor and the terminal has a need of performing cell switch. Based on this, the terminal may initiate the L1 measurement to report the L1 measurement result to the network device, assisting the network device in determining whether the terminal performs LTM and determining a target cell to be switched to.

The cell measurement result of the serving cell being greater than the measurement threshold indicates that the communication quality of the serving cell is relatively good and the terminal does not have the need of performing cell switch. Based on this, the terminal may not initiate the L1 measurement, so as to reduce the measurement power consumption of the terminal.

In some other embodiments, determining, by the terminal, whether to initiate the L1 measurement according to the cell measurement result of the serving cell includes at least one of:
the cell measurement result of the serving cell being less than the measurement threshold, determining, by the terminal, to initiate the L1 measurement;
the cell measurement result of the serving cell being greater than or equal to the measurement threshold, determining, by the terminal, not to initiate the L1 measurement.

In some other embodiments, determining, by the terminal, whether to initiate the L1 measurement according to the cell measurement result of the serving cell includes at least one of:
the cell measurement result of the serving cell being greater than or equal to a measurement threshold, determining, by the terminal, to initiate the L1 measurement;
the cell measurement result of the serving cell being less than the measurement threshold, determining, by the terminal, not to initiate the L1 measurement.

It should be noted that the measurement threshold may be the highest threshold of the cell signal that meets a communication requirement of the terminal.

It can be understood that the cell measurement result of the serving cell being greater than or equal to the measurement threshold indicates that the communication quality of the serving cell is relatively poor and the terminal has the need of performing cell switch. Based on this, the terminal may initiate the L1 measurement to report the L1 measurement result to the network device, assisting the network device in determining whether the terminal performs LTM and determining the target cell to be switched to.

The cell measurement result of the serving cell being less than the measurement threshold indicates that the communication quality of the serving cell is relatively good and the terminal does not have the need of performing cell switch. Based on this, the terminal may not initiate the L1 measurement, so as to reduce the measurement power consumption of the terminal.

In some other embodiments, determining, by the terminal, whether to initiate the L1 measurement according to the cell measurement result of the serving cell includes at least one of:
the cell measurement result of the serving cell being greater than the measurement threshold, determining, by the terminal, to initiate the L1 measurement;
the cell measurement result of the serving cell being less than or equal to the measurement threshold, determining, by the terminal, not to initiate the L1 measurement.

In some embodiments, determining whether to stop the L1 measurement according to the cell measurement result includes at least one of:
the cell measurement result of the serving cell being less than or equal to a measurement threshold, determining, by the terminal, not to stop the L1 measurement;
the cell measurement result of the serving cell being greater than the measurement threshold, determining, by the terminal, to stop the L1 measurement.

It should be noted that the measurement threshold may be the lowest threshold of the cell signal that meets the communication requirement.

It can be understood that the cell measurement result of the serving cell being less than or equal to the measurement threshold indicates that the communication quality of the serving cell is relatively poor and the terminal has the need of performing cell switch. Based on this, the terminal needs to continue to maintain (periodic) L1 measurement in order to report the L1 measurement result to the network device.

The cell measurement result of the serving cell being greater than the measurement threshold indicates that the communication quality of the serving cell is relatively good and the terminal does not have the need of performing cell switch. Based on this, the terminal may stop the L1 measurement, so as to reduce the measurement power consumption of the terminal.

In some other embodiments, determining whether to stop the L1 measurement according to the cell measurement result includes at least one of:
the cell measurement result of the serving cell being less than a measurement threshold, and determining, by the terminal, not to stop the L1 measurement;
the cell measurement result of the serving cell being greater than or equal to the measurement threshold, and determining, by the terminal, to stop the L1 measurement.

In some other embodiments, determining whether to stop the L1 measurement according to the cell measurement result includes at least one of:
the cell measurement result of the serving cell being greater than or equal to a measurement threshold, and determining, by the terminal, not to stop the L1 measurement;
the cell measurement result of the serving cell being less than the measurement threshold, and determining, by the terminal, to stop the L1 measurement.

It should be noted that the measurement threshold may be the highest threshold of the cell signal that meets the communication requirement.

It can be understood that the cell measurement result of the serving cell being greater than or equal to the measurement threshold indicates that the communication quality of the serving cell is relatively poor and the terminal has the need of performing cell switch. Based on this, the terminal needs to continue to maintain (periodic) L1 measurement in order to report the L1 measurement result to the network device.

The cell measurement result of the serving cell being less than the measurement threshold indicates that the communication quality of the serving cell is relatively good and the terminal does not have the need of performing cell switch. Based on this, the terminal may stop the L1 measurement, so as to reduce the measurement power consumption of the terminal.

In some other embodiments, determining whether to stop the L1 measurement according to the cell measurement result includes at least one of:
the cell measurement result of the serving cell being greater than the measurement threshold, and determining, by the terminal, not to stop the L1 measurement;
the cell measurement result of the serving cell being less than or equal to the measurement threshold, and determining, by the terminal, to stop the L1 measurement.

In some embodiments, determining whether to activate or deactivate L1 measurement reporting according to the cell measurement result includes at least one of:
the cell measurement result of the serving cell being less than or equal to a measurement threshold, and determining, by the terminal, to activate L1 measurement reporting;
the cell measurement result of the serving cell being greater than the measurement threshold, and determining, by the terminal, to deactivate L1 measurement reporting.

It should be noted that the measurement threshold may be the lowest threshold of the cell signal that meets the communication requirement.

It can be understood that the cell measurement result of the serving cell being less than or equal to the measurement threshold indicates that the communication quality of the serving cell is relatively poor and the terminal has the need of performing cell switch. Based on this, the terminal activates L1 measurement reporting, so that the network device determines whether the terminal performs LTM according to the L1 measurement result reported by the terminal and determines a target cell to be switched to.

The cell measurement result of the serving cell being greater than the measurement threshold indicates that the communication quality of the serving cell is relatively good and the terminal does not have the need of performing cell switch. Based on this, the terminal may deactivate L1 measurement reporting, so as to reduce the occupation of transmission resources.

In some other embodiments, determining whether to activate or deactivate L1 measurement reporting according to the cell measurement result includes at least one of:
the cell measurement result of the serving cell being less than a measurement threshold, and determining, by the terminal, to activate L1 measurement reporting;
the cell measurement result of the serving cell being greater than or equal to the measurement threshold, and determining, by the terminal, to deactivate L1 measurement reporting.

In some other embodiments, determining whether to activate or deactivate L1 measurement reporting according to the cell measurement result includes at least one of:
the cell measurement result of the serving cell being greater than or equal to a measurement threshold, and determining, by the terminal, to activate L1 measurement reporting;
the cell measurement result of the serving cell being less than the measurement threshold, and determining, by the terminal, to deactivate L1 measurement reporting.

It should be noted that the measurement threshold may be the highest threshold of the cell signal that meets the communication requirement.

It can be understood that the cell measurement result of the serving cell being greater than or equal to the measurement threshold indicates that the communication quality of the serving cell is relatively poor and the terminal has the need of performing cell switch. Based on this, the terminal activates L1 measurement reporting, so that the network device determines whether the terminal performs LTM according to the L1 measurement result reported by the terminal and determines the target cell to be switched to.

The cell measurement result of the serving cell being less than the measurement threshold indicates that the communication quality of the serving cell is relatively good and the terminal does not have the need of performing cell switch. Based on this, the terminal may deactivate L1 measurement reporting, so as to reduce the occupation of transmission resources.

In some other embodiments, determining whether to activate or deactivate L1 measurement reporting according to the cell measurement result includes at least one of:
the cell measurement result of the serving cell being greater than the measurement threshold, and determining, by the terminal, to activate L1 measurement reporting;
the cell measurement result of the serving cell being less than or equal to the measurement threshold, and determining, by the terminal, to deactivate L1 measurement reporting.

In some embodiments, the measurement threshold includes at least one of:
a measurement threshold based on a network device configuration;
a measurement threshold specified in a protocol;
a measurement threshold determined according to a measurement capability of the terminal.

It can be understood that the measurement threshold may be configured by the network device, or the measurement threshold may be a default value specified in a protocol.

In some embodiments, the measurement capability of the terminal may include at least one of:
the maximum number of measurement frequency points supported by the terminal;
the number of frequency points that the terminal can currently measure.

It can be understood that the terminal may autonomously determine the measurement threshold based on its own measurement capability(capabilities), and accordingly the terminal can perform the L1 measurement within its own measurement capability range.

In some embodiments, after determining to initiate the L1 measurement, the L1 measurement is performed according to measurement-related parameter(s) for the L1 measurement.

In some embodiments, the measurement-related parameter(s) for the L1 measurement may include at least one of:
a measurement reference signal;
a measurement quantity;
configuration information for the measurement reference signal.

It should be noted that the measurement reference signal may be a reference signal periodically broadcast by a cell. The terminal may receive the measurement reference signal, and determine the communication quality of the cell according to the signal strength of the measurement reference signal.

The measurement quantity may be a measurement value determined through a measurement of the measurement reference signal. In some embodiments, the measurement quantity may be a parameter used to describe a performance index of the measurement reference signal. For example, the measurement quantity may be a Channel Quality Indicator (CQI).

The configuration information for the measurement reference signal is used for the terminal to determine a signal resource for the measurement reference signal.

It can be understood that the terminal may receive the measurement reference signal according to the configuration information for the measurement reference signal, and perform a measurement based on the received measurement reference signal to obtain a measurement quantity corresponding to the measurement reference signal.

In some embodiments, the configuration information for the measurement reference signal may include at least one of:
an identity of the measurement reference signal;
a resource configuration for the measurement reference signal;
a period configuration for the measurement reference signal.

In some embodiments, the resource configuration for the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

In some embodiments, the measurement quantity of the L1 measurement may include at least one of:
Reference Signal Receiving Power (RSRP);
Reference Signal Receiving Quality (RSRQ);
Signal-to-Interference-plus-Noise Ratio (SINR) of the reference signal.

In some embodiments, the measurement-related parameter(s) for the L1 measurement is(are) determined by measurement-related parameter(s) corresponding to the cell measurement result; or
the measurement-related parameter(s) for the L1 measurement is(are) determined by L1 measurement configuration(s) configured by the network device for the terminal; or
the measurement-related parameter(s) for the L1 measurement is(are) specified in a protocol.

It should be noted that the measurement-related parameter(s) for the L1 measurement being determined by the measurement-related parameter(s) corresponding to the cell measurement result may be understood as: the measurement-related parameter(s) for the L1 measurement initiated by the terminal is(are) the same as the measurement-related parameter(s) for the L3 measurement performed by the terminal on the serving cell. For example, the terminal may perform the L3 measurement on an SSB of the serving cell and determine whether to initiate the L1 measurement based on the L3-RSRP of the SSB. If the terminal determines to initiate the L1 measurement, the terminal may perform the L1 measurement on the SSB(s) of the serving cell and/or non-serving cell(s) to obtain L1-RSRP(s) of the serving cell and/or non-serving cell(s).

In some embodiments, the measurement-related parameter(s) for the L1 measurement initiated by the terminal may be different from the measurement-related parameter(s) for the L3 measurement performed by the terminal on the serving cell.

For example, the terminal may perform the L3 measurement on the SSB of the serving cell and determine whether to initiate the L1 measurement based on the L3-RSRP of the SSB. If it is determined to initiate the L1 measurement, the L1 measurement may be performed on CSI-RS of the serving cell and/or non-serving cell(s) to obtain L1-SINR(s) of the serving cell and/or non-serving cell(s).

In some embodiments, the term "information" may be used interchangeably with terms such as "message", "signal", "signaling", "report", "configuration", "indication", "instruction", "command", "channel", "parameter", "field", "data", etc.

In some embodiments, the term "send" may be used interchangeably with terms such as "deliver", "report", "transmit", etc.

The information processing method involved in the embodiments of the present disclosure may include at least one of steps S2101 to S2103. For example, step S2101 may be implemented as an independent embodiment, and a combination of step S2101 and step S2103 may be implemented as an independent embodiment, but the present disclosure is not limited to this.

In some embodiments, steps S2102 and S2103 are optional, and one or more of these steps may be omitted or substituted in different embodiments. It can be understood that the terminal may perform L1 measurements on all candidate cells pre-configured by the network device for performing LTM, and the terminal does not need to determine whether to initiate the L1 measurements according to the cell measurement results.

In some embodiments, step S2102 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

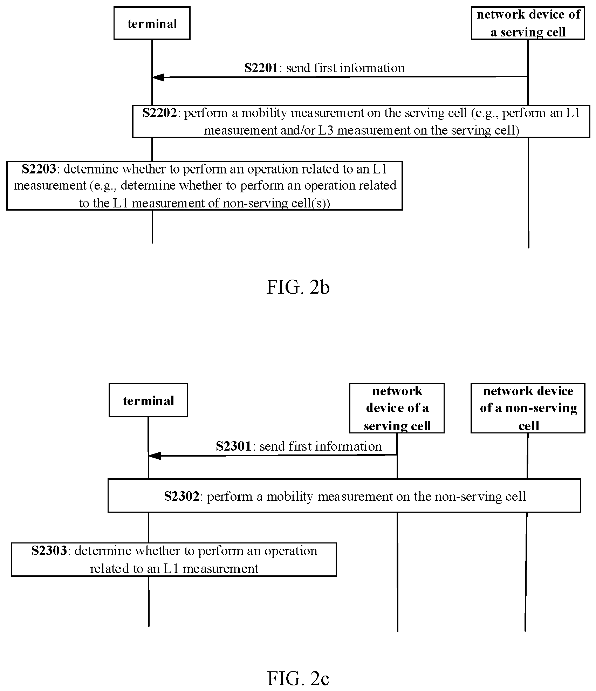

FIG. 2b is a schematic diagram illustrating interactions in an information processing method according to an example embodiment. As shown in FIG. 2b, the embodiment of the present disclosure relates to an information processing method applied in the communication system 100. The method includes:
In **step S2201**, a network device sends first information to a terminal.

In some embodiments, the terminal receives the first information sent by the network device.

In some embodiments, the terminal may be a terminal that supports dual connectivity, multiple connectivity, or carrier aggregation.

In some embodiments, the terminal may be a terminal that supports an L1 measurement.

In some embodiments, the terminal may be a terminal that supports LTM.

For example, supporting LTM may be supporting LTM for PCell or MCG, or may be supporting LTM for PSCell or SCG, or may be supporting the both.

In some embodiments, the network device may be an access network device corresponding to a serving cell which the terminal currently accesses or a source cell.

In some embodiments, the network device may be an access network device corresponding to a primary cell or master cell group of the terminal.

In some embodiments, the network device may be an access network device corresponding to a primary secondary cell or secondary cell group of the terminal.

In some embodiments, the first information may include: LTM configuration(s) corresponding to one or more candidate cells.

In some embodiments, the LTM configuration(s) may be LTM configuration(s) corresponding to Layer 1 (L1) or Layer 2 (L2)-triggered mobility (LTM) configured by the network device for the terminal.

In some embodiments, L1/L1-triggered mobility LTM may include at least one of:
L1/L2-triggered master cell group or primary cell mobility;
L1/L2-triggered secondary cell group or primary secondary cell mobility.

In some embodiments, the L1/L2-triggered master cell group or primary cell mobility is used to control the terminal to change its serving master cell group or primary cell among multiple candidate master cell groups or candidate primary cells corresponding to the serving master cell group or primary cell of the terminal.

In some embodiments, the L1/L2-triggered secondary cell group or primary secondary cell mobility is used for the terminal to change its serving secondary cell group or primary secondary cell among multiple candidate secondary cell groups or candidate primary secondary cells corresponding to the serving secondary cell group or primary secondary cell of the terminal.

In some embodiments, the first information may include at least one of:
one or more configuration information identities;
identity(identities) of one or more candidate cells or candidate cell groups to be measured;
measurement configuration(s) for one or more serving cells or serving cell groups;
measurement configuration(s) for one or more candidate cells or candidate cell groups;
mobility configuration(s) for one or more candidate cells;
one or more measurement thresholds.

In some embodiments, the measurement threshold may include at least one of:
a first threshold corresponding to an L1 measurement result;
a second threshold corresponding to an L3 measurement result.

It should be noted that whether to initiate the L1 measurement is determined according to a comparison result between the L1 measurement result of the serving cell and the first threshold; and/or, whether to initiate the L1 measurement is determined according to a comparison result between the L3 measurement result of the serving cell and the second threshold. The L1 measurement includes, but is not limited to, L1 measurement(s) of non-serving cell(s).

For example, if the terminal determines whether to initiate the L1 measurement(s) of non-serving cell(s) according to the L1 measurement result of the serving cell, the network device may configure the first threshold for the terminal.

If the terminal determines whether to initiate the L1 measurement(s) of non-serving cell(s) according to the L3 measurement result of the serving cell, the network device may configure the second threshold for the terminal.

In some embodiments, the measurement threshold includes at least one of:
a measurement threshold based on a network device configuration;
a measurement threshold specified in a protocol;
a threshold determined by the UE based on an implementation.

It can be understood that the measurement threshold may be configured by the network device, or the measurement threshold may be a default value specified in a protocol, or a threshold determined by the UE based on the implementation.

In some embodiments, the first threshold corresponding to the L1 measurement result and the second threshold corresponding to the L3 measurement result may be the same or different.

In some embodiments, a measurement quantity corresponding to the first threshold may be the same as or different from a measurement quantity corresponding to the second threshold. The measurement quantity may be at least one of: RSRQ, RSRP, or SINR.

In some embodiments, the measurement threshold may be configured for initiation of L1 measurement(s) of non-serving cell(s).

In some embodiments, different serving cells correspond to different measurement thresholds. For example, a serving PCell corresponds to a measurement threshold, and a serving PSCell corresponds to another measurement threshold.

For example, the threshold corresponding to the serving PCell is used to determine whether to initiate L1 measurement(s) of non-serving cell(s) configured for the UE by the serving PCell (or serving MCG).

For example, the threshold corresponding to the serving PSCell is used to determine whether to initiate the L1 measurement(s) of non-serving cell(s) configured for the UE by the serving PSCell (or serving SCG).

In some embodiments, the measurement threshold may be configured independently for different non-serving cells, or a general measurement threshold may be configured.

In some embodiments, the thresholds for initiating L1 measurements of different non-serving cells may be the same or different.

In some embodiments, the measurement quantities corresponding to the thresholds for initiating L1 measurements of different non-serving cells may be the same or different. The measurement quantity may be at least one of: RSRQ, RSRP, or SINR.

For example, for independently configured thresholds, the network side configures a threshold #1 for a non-serving cell 1. The UE determines whether to initiate the L1 measurement of the non-serving cell 1 based on a comparison between the measurement result of the serving cell and the threshold #1.

For example, for a general configured threshold, the network side configures a general threshold #0 for all non-serving cells #1 for which L1 measurement configurations are configured. The UE determines whether to initiate the L1 measurement(s) of one or more non-serving cells for which the network configures L1 configuration(s) based on a comparison between the measurement result of the serving cell and the threshold #0.

In **step S2202**, the terminal performs a mobility measurement on a serving cell.

In some embodiments, performing, by the terminal, the mobility measurement on the serving cell may include at least one of:
performing, by the terminal, the L1 measurement on the serving cell;
performing, by the terminal, the L3 measurement on the serving cell.

It should be noted that the L1 measurement is a measurement performed based on Layer 1 (physical layer), and the L1 measurement does not require a Layer 3 (network layer) filtering procedure. Compared to the L3 measurement, the L1 measurement and reporting take less time.

It should be noted that the terminal may perform the L3 measurement and/or the L1 measurement on the serving cell to determine the communication quality of the serving cell according to the L3 measurement result and/or L3 measurement result of the serving cell. It can be understood that if the communication quality of the serving cell is relatively good, the terminal does not need to perform cell switch, and therefore, there is no need to perform the L1 measurement for LTM.

In some embodiments, performing, by the terminal, the L1 measurement on the serving cell may include at least one of:
performing, by the terminal, the L1 measurement on the serving cell in a serving MCG;
performing, by the terminal, the L1 measurement on the serving cell in a serving SCG;
performing, by the terminal, the L1 measurement on a serving PCell;
performing, by the terminal, the L1 measurement on a serving PSCell.

In some embodiments, performing, by the terminal, the L1 measurement on the serving cell may include:
performing, by the terminal, the L1 measurement on a serving cell measurement object corresponding to the serving cell.

The serving cell may be one or more of: the serving PCell, the serving PSCell, or the serving SCell.

It can be understood that in the embodiments of the present disclosure, the terminal may be a terminal supporting dual connectivity, multiple connectivity, or carrier aggregation. The terminal may simultaneously access two cells or two cell groups to improve the transmission rate. Therefore, the terminal performing the L1 measurement on the serving cell may be as follows: the terminal performs the L1 measurement on the MCG or PCell accessed by the terminal to determine the communication quality of the MCG or PCell; or, the terminal performing the L1 measurement on the serving cell may be as follows: the terminal performs the L1 measurement on the SCG or PSCell accessed by the terminal to determine the communication quality of the SCG or PSCell. Whether MCG or PCell switch is needed is determined according to the communication quality of the MCG or PCell; whether SCG or PSCell switch is needed is determined according to the communication quality of the SCG or PSCell.

In some embodiments, performing, by the terminal, the L3 measurement on the serving cell may include at least one of:
performing, by the terminal, the L3 measurement on the serving cell in the serving MCG;
performing, by the terminal, the L3 measurement on the serving cell in the serving SCG;
performing, by the terminal, the L3 measurement on the serving PCell;
performing, by the terminal, the L3 measurement on the serving PSCell.

In some embodiments, performing, by the terminal, the L3 measurement on the serving cell may include:
performing, by the terminal, the L3 measurement on the serving cell measurement object corresponding to the serving cell.

The serving cell may be one or more of: the serving PCell, the serving PSCell, or the serving SCell.

It can be understood that in the embodiments of the present disclosure, the terminal may be a terminal supporting dual connectivity, multiple connectivity, or carrier aggregation. The terminal may simultaneously access two cells or two cell groups to improve the transmission rate. Therefore, the terminal performing the L3 measurement on the serving cell may be performing the L3 measurement on the MCG or PCell accessed by the terminal to determine the communication quality of the MCG or PCell. Alternatively, the terminal performing the L3 measurement on the serving cell may be may be performing the L3 measurement on the SCG or PSCell accessed by the terminal to determine the communication quality of the SCG or PSCell. Whether MCG or PCell switch is needed is determined according to the communication quality of the MCG or PCell; whether SCG or PSCell switch is needed is determined according to the communication quality of the SCG or PSCell.

In some embodiments, the L3 measurement may include a Radio Resource Management (RRM) measurement.

In some embodiments, the L3 measurement is used for mobility management of the terminal.

It should be noted that the mobility management refers to a management procedure in terms of service continuity for a terminal. Through the mobility management, the connection status between the terminal and the network device can be optimized, thereby ensuring the application of various network services and allowing the terminal to maintain better network coverage or network connectivity.

In some embodiments, the terminal may perform the L3 measurement on the serving cell based on an L3 measurement configuration pre-configured by the network device.

In some embodiments, the terminal may perform the L1 measurement on the serving cell based on an L1 measurement configuration pre-configured by the network device.

In some embodiments, the L1 measurement configuration may include: measurement-related parameter(s) for the L1 measurement.

In some embodiments, the L3 measurement configuration may include measurement-related parameter(s) for the L3 measurement.

In some embodiments, the measurement-related parameter(s) for the L1 measurement or the L3 measurement may include at least one of:
a measurement reference signal;
a measurement quantity;
configuration information for the measurement reference signal.

In some embodiments, the configuration information for the measurement reference signal may include at least one of:
an identity of the measurement reference signal;
a resource configuration for the measurement reference signal;
a period configuration of the measurement reference signal.

In some embodiments, the resource configuration for the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

The L1 measurement and/or the L3 measurement may be performed based on the SSB and/or CSI-RS of the serving cell to determine the measurement results of the L1 measurement and/or the L3 measurement of the serving cell.

In some embodiments, the measurement quantity may include at least one of:
Reference Signal Receiving Power (RSRP);
Reference Signal Receiving Quality (RSRQ);
Signal-to-Interference-plus-Noise Ratio (SINR) of the reference signal.

It can be understood that the L1 measurement result of the serving cell may include one or more of: L1-RSRP, L1-RSRQ, or L1-SINR. The L3 measurement result of the serving cell may include one or more of: L3-RSRP, L3-RSRQ, or L3-SINR.

In **step S2203**, the terminal determines whether to perform an operation related to the L1 measurement.

In some embodiments, the terminal determines whether to perform the operation related to the L1 measurement according to the cell measurement result of the serving cell.

In some embodiments, the terminal determines whether to perform the operation related to the L1 measurement associated with non-serving cell(s) according to the cell measurement result of the serving cell.

It should be noted that the terminal may determine the communication quality of the serving cell according to the cell measurement result of the serving cell, and further determine whether to perform the operation related to the L1 measurement associated with non-serving cell(s) according to the communication quality of the serving cell.

In some embodiments, determining, by the terminal, whether to initiate the L1 measurement according to the cell measurement result of the serving cell may include at least one of:
determining whether to initiate the L1 measurement according to the cell measurement result of the serving cell;
determining whether to stop the L1 measurement according to the cell measurement result of the serving cell;
activating or deactivating L1 measurement reporting according to the cell measurement result of the serving cell.

The measurement result of the L1 measurement is used for the network device to determine whether the terminal performs LTM. If the cell measurement result of the serving cell indicates that the communication quality of the serving cell is relatively good, the terminal may not perform LTM even if the terminal performs the L1 measurement and reporting in this case. Thus, in a case that the terminal's own measurement capability is insufficient, determining whether to initiate the L1 measurement according to the cell measurement result of the serving cell can reduce unnecessary measurements and lower the measurement power consumption of the terminal.

Alternatively, in a case that the terminal is configured to periodically initiate the L1 measurement, the terminal can determine whether to stop the L1 measurement according to the cell measurement result, thereby reducing the measurement power consumption of the terminal.

Alternatively, in a case that transmission resources are limited, the terminal can determine whether to activate or deactivate L1 measurement reporting according to the cell measurement result, thereby effectively conserving transmission resources. It should be noted that after the terminal completes the L1 measurement, the terminal may determine whether to report the measurement result of the L1 measurement to the network device according to the cell measurement result. This embodiment reduces unnecessary L1 measurement reporting in a case that the transmission resources are limited and the signal quality of the serving cell of the terminal is relatively good.

It should be noted that the initiation or stopping of the L1 measurement and/or activation or deactivation of L1 measurement reporting may be determined by the terminal, without being triggered by the network device. Thus, the embodiment reduces the additional signaling overhead introduced by network device control and lowers latency.

In some embodiments, the L1 measurement may be a beam measurement.

It should be noted that in New Radio (NR), especially when the communication frequency band is in Frequency Range (FR) 2, due to the rapid attenuation of high-frequency channels, in order to ensure signal coverage, the terminal and the network device may perform information transmission and reception based on beam(s).

In some embodiments, a cell may include multiple beams.

In some embodiments, the measurement result of the L1 measurement may be used to determine the beam performance of one or more beams in a non-serving cell.

In some embodiments, the measurement result of the L1 measurement may be used to determine, from multiple beams in the non-serving cell, a serving beam for communications between the terminal and the network device.

In some embodiments, the measurement result of L1 measurement is used to determine whether to perform a Layer L1 or Layer L2-triggered mobility (LTM) operation.

In some embodiments, the measurement result of the L1 measurement is used to assist the network device in making a cell switch decision.

It should be noted that the terminal performs the L1 measurement and reports the measurement result of the L1 measurement to the network device. This allows the network device to determine the beam performance of the cell and/or cell performance according to the measurement result of the L1 measurement reported by the terminal, and further determine whether the terminal needs to perform cell switch. When it is determined that the terminal needs to perform cell switch, the serving cell is changed through L1 or L2 signaling, and a corresponding serving beam is selected to achieve fast cell switch, thereby achieving the goal of low latency and low overhead.

In some embodiments, the L1 measurement includes at least one of:
the L1 measurement performed based on one or more measurement configurations corresponding to the LTM configuration(s) configured by the network device;
a measurement based on measurement reporting for triggering LTM;
a beam measurement based on one or more beams configured by the network device for performing LTM.

It can be understood that the network device may pre-configure LTM configuration(s) for the terminal. It should be noted that LTM configuration(s) is(are) used for the terminal to perform a mobility operation related to the LTM configuration(s).

In some embodiments, the LTM configuration(s) may include at least one of:
one or more candidate cells configured by the network device for the terminal;
L1 measurement configuration(s), where the L1 measurement configuration(s) may be measurement configuration(s) corresponding to one or more candidate cells.

In some embodiments, the L1 measurement configuration(s) may not be included in the LTM configuration(s) and may be sent to the UE by the network side through other information, such as being sent to the UE together with the L3 measurement configuration(s) or being sent to the UE separately.

For example, the terminal may initiate the L1 measurement based on one or more pre-configured measurement configurations for performing LTM, and report the measurement result of the L1 measurement, so as to use the L1 measurement result to assist the network device in performing an LTM decision.

For example, the terminal may initiate the L1 measurement based on one or more pre-configured measurement configurations for performing LTM, and trigger an LTM-based cell change based on the L1 measurement result.

Alternatively, the terminal may perform other measurement(s) that can trigger LTM measurement reporting, so as to use the measurement result to assist the network device in making an LTM decision.

Alternatively, the network device may pre-configure one or more dedicated beams. The beam performance of the beam(s) is used to assist the network device in determining whether the terminal needs to perform LTM.

The terminal may perform beam measurement(s) based on the one or more pre-configured dedicated beams in order to use the beam measurement result(s) to assist the network device in performing an LTM decision.

Alternatively, the dedicated beam(s) is(are) determined by the UE based on an implementation, or the dedicated beam(s) is(are) determined by the UE as specified in a protocol, such as one or more best beams in a cell, or one or more beams in a cell exceeding a network-configured threshold or a protocol-specified threshold.

It should be noted that the terminal may determine whether to initiate any one of the above measurements based on the cell measurement result(s), so as to assist the network device in performing an LTM decision by reporting the measurement result of the measurement to the network device, thereby improving the flexibility of initiating the L1 measurement.

In some embodiments, the terminal determines whether to initiate the L1 measurement according to the L1 measurement result and/or the L3 measurement result of the serving cell.

Since the L3 measurement result is a measurement result obtained by filtering multiple L1 measurement results for multiple times, the L3 measurement has a larger latency compared to the L1 measurement. Therefore, for application scenarios with different latency requirements, the terminal may determine the communication quality of the serving cell according to the L1 measurement result and/or the L3 measurement result obtained through the measurement of the measurement reference signal of the serving cell, and determine whether it is needed to initiate the L1 measurement(s) for non-serving cell(s). Thus, for a scenario with a higher latency requirement, whether it is not necessary to initiate the L1 measurement(s) for non-serving cell(s) can be more quickly determined according to the L1 measurement result of the serving cell, thereby reducing latency.

In some embodiments, the serving cell may include: PCell and/or PSCell.

In some embodiments, the non-serving cell(s) may include at least one of:
one or more candidate cells or candidate cell groups corresponding to the LTM configuration(s) configured by the network device;
a neighboring cell corresponding to the L1 measurement configured by the network device.

In some other embodiments, the non-serving cell(s) may include:
candidate cell(s) configured by a network device corresponding to the serving cell for the terminal;
cell(s) for which L1 measurement(s) and/or measurement reporting configuration(s) are configured by network device(s) corresponding to the non-serving cell(s).

In some embodiments, candidate cell(s) may be at least one candidate cell or candidate cell group configured by the network device for the terminal to perform LTM.

In some embodiments, candidate cell(s) may include at least one of:
cell(s) in a candidate MCG for performing LTM;
candidate PCell(s) for performing LTM;
cell(s) in a candidate SCG for performing LTM;
candidate PSCell(s) for performing LTM.

In some embodiments, candidate cell group(s) may include at least one of:
candidate MCG(s) for performing LTM;
candidate SCG(s) for performing LTM.

In some embodiments, determining, by the terminal, whether to initiate the L1 measurement according to the cell measurement result of the serving cell includes at least one of:
determining whether to initiate the L1 measurement of the candidate MCG and/or candidate PCell of the terminal according to the cell measurement result of the serving Primary Cell (PCell);
determining whether to initiate the L1 measurement of non-serving cell(s) according to the cell measurement result of the serving Primary Cell (PCell), where the L1 measurement of non-serving cell(s) is associated with a configuration of the serving MCG and/or the serving PCell;
determining whether to initiate the L1 measurement of the candidate SCG and/or candidate PSCell of the terminal according to the cell measurement result of the Primary Secondary Cell (PSCell);
determining whether to initiate L1 measurement of the non-serving cell(s) according to the cell measurement result of the serving Primary Secondary Cell (PSCell), where the L1 measurement of non-serving cell(s) is associated with a configuration of the serving SCG and/or the serving PSCell.

It should be noted that the L1 measurement of the non-serving cell(s) being associated with the configuration of the serving MCG and/or serving PCell may be understood as: the L1 measurement configuration for the L1 measurement of the non-serving cell(s) may refer to the L1 measurement configuration configured by the serving MCG and/or serving PCell.

The L1 measurement of the non-serving cell(s) being associated with the configuration of the serving SCG and/or serving PSCell may be understood as: the L1 measurement configuration of the L1 measurement of the non-serving cell(s) may refer to the L1 measurement configuration configured by the serving SCG and/or serving PSCell.

In some embodiments, the cell measurement result of the serving cell include at least one of:
the L3 measurement result of the measurement reference signal on the serving cell;
the L3 measurement result(s) of one or more beams of the serving cell;
an average value of L3 measurement results of multiple beams of the serving cell;
the L1 measurement result of the measurement reference signal on the serving cell;
the L1 measurement results of one or more beams of the serving cell;
an average value of L1 measurement results of multiple beams of the serving cell.

In some embodiments, the serving cell may include multiple different beams, and the multiple different beams are used for transmitting measurement reference signals.

The terminal may receive measurement reference signals transmitted using multiple different beams, and determine the communication quality of the serving cell and the beam performance of multiple beams of the serving cell according to the L3 measurement results of the measurement reference signals transmitted using multiple different beams.

The L1 measurement result(s) and/or L3 measurement result(s) of one or more beams of the serving cell may be understood as follows: when the terminal performs the L1 measurement and/or L3 measurement of the serving cell, the terminal may monitor one or more specific beams of the serving cell to obtain the L1 measurement result(s) and/or L3 measurement result(s) of the one or more specific beams. Thus, the terminal does not need to monitor all beams of the serving cell, and the power consumption of the terminal can be reduced.

In some embodiments, one or more beams include at least one of:
one or more beams determined based on a network device configuration;
one or more beams as specified in a protocol.

It can be understood that the one or more beams may be beam(s) specified by the network device, or beam(s) determined by the terminal according to a criterion specified in a protocol.

For example, the beam(s) may be one or more beams with the best current performance, or one or more beams whose measurement results are greater than a specific value.

It should be noted that when the terminal performs the L1 measurement and/or L3 measurement of the serving cell, the terminal may directly monitor the target beam(s) pre-configured by the network device and/or the beam(s) specified in a protocol to obtain the L1 measurement result(s) and/or L3 measurement result(s) of one or more specific beams of the serving cell. Thus, it is not necessary to monitor all beams of the serving cell, reducing the power consumption of the terminal.

In some embodiments, the terminal may determine a target beam according to first information sent by the network device.

In some embodiments, determining, by the terminal, whether to initiate the L1 measurement according to the cell measurement result of the serving cell includes at least one of:
the cell measurement result of the serving cell being less than or equal to a measurement threshold, and determining, by the terminal, to initiate the L1 measurement;
the cell measurement result of the serving cell being greater than the measurement threshold, and determining, by the terminal, not to initiate the L1 measurement.

It should be noted that the measurement threshold may be the lowest threshold of the cell signal that meets a communication requirement of the terminal.

It can be understood that the cell measurement result of the serving cell being less than or equal to the measurement threshold indicates that the communication quality of the serving cell is relatively poor and the terminal has a need of performing cell switch. Based on this, the terminal may initiate the L1 measurement to report the L1 measurement result to the network device, assisting the network device in determining whether the terminal performs LTM and determining a target cell to be switched to.

The cell measurement result of the serving cell being greater than the measurement threshold indicates that the communication quality of the serving cell is relatively good and the terminal does not have the need of performing cell switch. Based on this, the terminal may not initiate the L1 measurement, so as to reduce unnecessary L1 measurement, reduce the power consumption of the terminal and signaling overhead.

In some other embodiments, determining, by the terminal, whether to initiate the L1 measurement according to the cell measurement result of the serving cell includes at least one of:
the cell measurement result of the serving cell being less than the measurement threshold, and determining, by the terminal, to initiate the L1 measurement;
the cell measurement result of the serving cell being greater than or equal to the measurement threshold, and determining, by the terminal, not to initiate the L1 measurement.

In some other embodiments, determining, by the terminal, whether to initiate the L1 measurement according to the cell measurement result of the serving cell includes at least one of:
the cell measurement result of the serving cell being greater than or equal to a measurement threshold, and determining, by the terminal, to initiate the L1 measurement;
the cell measurement result of the serving cell being less than the measurement threshold, and determining, by the terminal, not to initiate the L1 measurement.

It should be noted that the measurement threshold may be the highest threshold of the cell signal that meets a communication requirement of the terminal.

It can be understood that the cell measurement result of the serving cell being greater than or equal to the measurement threshold indicates that the communication quality of the serving cell is relatively poor and the terminal has the need of performing cell switch. Based on this, the terminal may initiate the L1 measurement to report the L1 measurement result to the network device, assisting the network device in determining whether the terminal performs LTM and determining the target cell to be switched to.

The cell measurement result of the serving cell being less than the measurement threshold indicates that the communication quality of the serving cell is relatively good and the terminal does not have the need of performing cell switch. Based on this, the terminal may not initiate the L1 measurement, so as to reduce the measurement power consumption of the terminal.

In some other embodiments, determining, by the terminal, whether to initiate the L1 measurement according to the cell measurement result of the serving cell includes at least one of:
the cell measurement result of the serving cell being greater than the measurement threshold, and determining, by the terminal, to initiate the L1 measurement;
the cell measurement result of the serving cell being less than or equal to the measurement threshold, and determining, by the terminal, not to initiate the L1 measurement.

In some embodiments, determining whether to stop the L1 measurement according to the cell measurement result includes at least one of:
the cell measurement result of the serving cell being less than or equal to a measurement threshold, and determining, by the terminal, not to stop the L1 measurement;
the cell measurement result of the serving cell being greater than the measurement threshold, and determining, by the terminal, to stop the L1 measurement.

It should be noted that the measurement threshold may be the lowest threshold of the cell signal that meets the communication requirement.

It can be understood that the cell measurement result of the serving cell being less than or equal to the measurement threshold indicates that the communication quality of the serving cell is relatively poor and the terminal has the need of performing cell switch. Based on this, the terminal needs to continue to maintain (periodic) L1 measurement in order to report the L1 measurement result to the network device.

The cell measurement result of the serving cell being greater than the measurement threshold indicates that the communication quality of the serving cell is relatively good and the terminal does not have the need of performing cell switch. Based on this, the terminal may stop the L1 measurement, so as to reduce the measurement power consumption of the terminal.

In some other embodiments, determining whether to stop the L1 measurement according to the cell measurement result includes at least one of:
the cell measurement result of the serving cell being less than a measurement threshold, and determining, by the terminal, not to stop the L1 measurement;
the cell measurement result of the serving cell being greater than or equal to the measurement threshold, and determining, by the terminal, to stop the L1 measurement.

In some other embodiments, determining whether to stop the L1 measurement according to the cell measurement result includes at least one of:
the cell measurement result of the serving cell being greater than or equal to a measurement threshold, and determining, by the terminal, not to stop the L1 measurement;
the cell measurement result of the serving cell being less than the measurement threshold, and determining, by the terminal, to stop the L1 measurement.

It should be noted that the measurement threshold may be the highest threshold of the cell signal that meets the communication requirement.

It can be understood that the cell measurement result of the serving cell being greater than or equal to the measurement threshold indicates that the communication quality of the serving cell is relatively poor and the terminal has the need of performing cell switch. Based on this, the terminal needs to continue to maintain (periodic) L1 measurement in order to report the L1 measurement result to the network device.

The cell measurement result of the serving cell being less than the measurement threshold indicates that the communication quality of the serving cell is relatively good and the terminal does not have the need of performing cell switch. Based on this, the terminal may stop the L1 measurement, so as to reduce the measurement power consumption of the terminal.

In some other embodiments, determining whether to stop the L1 measurement according to the cell measurement result includes at least one of:
the cell measurement result of the serving cell being greater than the measurement threshold, and determining, by the terminal, not to stop the L1 measurement;
the cell measurement result of the serving cell being less than or equal to the measurement threshold, and determining, by the terminal, to stop the L1 measurement.

In some embodiments, determining whether to activate or deactivate L1 measurement reporting according to the cell measurement result includes at least one of:
the cell measurement result of the serving cell being less than or equal to a measurement threshold, and determining, by the terminal, to activate L1 measurement reporting;
the cell measurement result of the serving cell being greater than the measurement threshold, and determining, by the terminal, to deactivate L1 measurement reporting.

It should be noted that the measurement threshold may be the lowest threshold of the cell signal that meets the communication requirement.

It can be understood that the cell measurement result of the serving cell being less than or equal to the measurement threshold indicates that the communication quality of the serving cell is relatively poor and the terminal has the need of performing cell switch. Based on this, the terminal activates L1 measurement reporting, so that the network device determines whether the terminal performs LTM according to the L1 measurement result reported by the terminal and determines a target cell to be switched to.

The cell measurement result of the serving cell being greater than the measurement threshold indicates that the communication quality of the serving cell is relatively good and the terminal does not have the need of performing cell switch. Based on this, the terminal may deactivate L1 measurement reporting, so as to reduce the occupation of transmission resources.

In some other embodiments, determining whether to activate or deactivate L1 measurement reporting according to the cell measurement result includes at least one of:
the cell measurement result of the serving cell being less than a measurement threshold, and determining, by the terminal, to activate L1 measurement reporting;
the cell measurement result of the serving cell being greater than or equal to the measurement threshold, and determining, by the terminal, to deactivate L1 measurement reporting.

In some other embodiments, determining whether to activate or deactivate L1 measurement reporting according to the cell measurement result includes at least one of:
the cell measurement result of the serving cell being greater than or equal to a measurement threshold, and determining, by the terminal, to activate L1 measurement reporting;
the cell measurement result of the serving cell being less than the measurement threshold, and determining, by the terminal, to deactivate L1 measurement reporting.

It should be noted that the measurement threshold may be the highest threshold of the cell signal that meets the communication requirement.

It can be understood that the cell measurement result of the serving cell being greater than or equal to the measurement threshold indicates that the communication quality of the serving cell is relatively poor and the terminal has the need of performing cell switch. Based on this, the terminal activates L1 measurement reporting, so that the network device determines whether the terminal performs LTM according to the L1 measurement result reported by the terminal and determines the target cell to be switched to.

The cell measurement result of the serving cell being less than the measurement threshold indicates that the communication quality of the serving cell is relatively good and the terminal does not have the need of performing cell switch. Based on this, the terminal may deactivate L1 measurement reporting, so as to reduce the occupation of transmission resources.

In some other embodiments, determining whether to activate or deactivate L1 measurement reporting according to the cell measurement result includes at least one of:
the cell measurement result of the serving cell being greater than the measurement threshold, and determining, by the terminal, to activate L1 measurement reporting;
the cell measurement result of the serving cell being less than or equal to the measurement threshold, and determining, by the terminal, to deactivate L1 measurement reporting.

In some embodiments, the measurement threshold includes at least one of:
a measurement threshold based on a network device configuration;
a measurement threshold specified in a protocol;
a measurement threshold determined according to a measurement capability of the terminal.

It can be understood that the measurement threshold may be configured by the network device, or the measurement threshold may be a default value specified in a protocol.

In some embodiments, the measurement capability of the terminal may include at least one of:
the maximum number of measurement frequency points supported by the terminal;
the number of frequency points that the terminal can currently measure.

It can be understood that the terminal may autonomously determine the measurement threshold based on its own measurement capability(capabilities), and accordingly the terminal can perform the L1 measurement within its own measurement capability range.

In some embodiments, after determining to initiate the L1 measurement, the L1 measurement is performed according to measurement-related parameter(s) for the L1 measurement.

In some embodiments, the measurement-related parameter(s) for the L1 measurement is(are) determined by measurement-related parameter(s) corresponding to the cell measurement result; or
the measurement-related parameter(s) for the L1 measurement is(are) determined by L1 measurement configuration(s) configured by the network device for the terminal; or
the measurement-related parameter(s) for the L1 measurement is(are) specified in a protocol.

It should be noted that the measurement-related parameter(s) for the L1 measurement being determined by the measurement-related parameter(s) corresponding to the cell measurement result may be understood as: the measurement-related parameter(s) for the L1 measurement of non-serving cell(s) initiated by the terminal is(are) the same as the measurement-related parameter(s) for the L1 measurement and/or L3 measurement performed by the terminal on the serving cell. For example, the terminal may perform the L3 measurement on an SSB of the serving cell and determine whether to initiate the L1 measurement of non-serving cell(s) based on the L3-RSRP of the SSB. If the terminal determines to initiate the L1 measurement of candidate cell(s), the terminal may perform the L1 measurement on the SSB(s) of the non-serving cell(s) to obtain L1-RSRP(s) of non-serving cell(s).

In some embodiments, the measurement-related parameter(s) for the L1 measurement of non-serving cell(s) initiated by the terminal may be different from the measurement-related parameter(s) for the L1 measurement and/or L3 measurement performed by the terminal on the serving cell.

For example, the terminal may perform the L3 measurement on the SSB of the serving cell and determine whether to initiate the L1 measurement of non-serving cell(s) based on the L3-RSRP of the SSB. If it is determined to initiate the L1 measurement of non-serving cell(s), the L1 measurement may be performed on CSI-RS of the non-serving cell(s) to obtain L1-SINR(s) of the serving cell and/or non-serving cell(s).

The information processing method involved in the embodiments of the present disclosure may include at least one of steps S2201 to S2203. For example, step S2201 may be implemented as an independent, and a combination of step S2201 and step S2203 may be implemented as an independent embodiment, but the present disclosure is not limited to this.

In some embodiments, steps S2202 and S2203 are optional, and one or more of these steps may be omitted or substituted in different embodiments. It can be understood that the terminal may perform L1 measurements on all candidate cells pre-configured by the network device for performing LTM, and the terminal does not need to determine whether to initiate the L1 measurements according to the cell measurement results.

In some embodiments, step S2202 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

FIG. 2c is a schematic diagram illustrating interactions in an information processing method according to an example embodiment. As shown in FIG. 2c, the embodiment of the present disclosure relates to an information processing method applied in the communication system 100. The method includes:
In **step S2301**, a network device sends first information to a terminal.

In some embodiments, the terminal receives the first information sent by the network device.

In some embodiments, the terminal may be a terminal that supports dual connectivity, multiple connectivity, or carrier aggregation.

In some embodiments, the terminal may be a terminal that supports an L1 measurement.

In some embodiments, the terminal may be a terminal that supports LTM.

For example, supporting LTM may be supporting LTM for PCell or MCG, or may be supporting LTM for PSCell or SCG, or may be supporting the both.

In some embodiments, the network device may be an access network device corresponding to a serving cell which the terminal currently accesses or a source cell.

In some embodiments, the network device may be an access network device corresponding to a primary cell or master cell group of the terminal.

In some embodiments, the network device may be an access network device corresponding to a primary secondary cell or secondary cell group of the terminal.

In some embodiments, the first information may include: LTM configuration(s) corresponding to one or more candidate cells.

In some embodiments, the LTM configuration(s) may be LTM configuration(s) corresponding to Layer 1 (L1) or Layer 2 (L2)-triggered mobility (LTM) configured by the network device for the terminal.

In some embodiments, L1/L1-triggered mobility LTM may include at least one of:
L1/L2-triggered master cell group or primary cell mobility;
L1/L2-triggered secondary cell group or primary secondary cell mobility.

In some embodiments, the L1/L2-triggered master cell group or primary cell mobility is used to control the terminal to change its serving master cell group or primary cell among multiple candidate master cell groups or candidate primary cells corresponding to the serving master cell group or primary cell of the terminal.

In some embodiments, the L1/L2-triggered secondary cell group or primary secondary cell mobility is used for the terminal to change its serving secondary cell group or primary secondary cell among multiple candidate secondary cell groups or candidate primary secondary cells corresponding to the serving secondary cell group or primary secondary cell of the terminal.

In some embodiments, the first information may include at least one of:
one or more configuration information identities;
identity(identities) of one or more non-serving cells or non-serving cell groups to be measured;
identity(identities) of one or more candidate cells or candidate cell groups to be measured;
measurement configuration(s) for one or more non-serving cells or non-serving cell groups;
measurement configuration(s) for one or more candidate cells or candidate cell groups;
mobility configuration(s) for one or more candidate cells;
one or more measurement thresholds.

In some embodiments, the measurement threshold may include:
a threshold corresponding to an L3 measurement result.

It should be noted that whether to initiate the L1 measurement is determined according to a comparison result between the L3 measurement result(s) of non-serving cell(s) and the threshold. The L1 measurement includes, but is not limited to, L1 measurement(s) of non-serving cell(s).

In some embodiments, the measurement threshold includes at least one of:
a measurement threshold based on a network device configuration;
a measurement threshold specified in a protocol;
a threshold determined by the UE based on an implementation.

It can be understood that the measurement threshold may be configured by the network device, or it may be a default value specified in a protocol, or a threshold determined by the UE based on the implementation.

In some embodiments, the measurement threshold may be configured for L1 measurement initiation for non-serving cell(s).

In some embodiments, the measurement threshold may be configured independently for different non-serving cells, or a general measurement threshold may be configured.

In some embodiments, thresholds for initiating L1 measurements of different non-serving cells may be the same or different.

In some embodiments, measurement quantities corresponding to the thresholds for initiating L1 measurements of different non-serving cells may be the same or different. The measurement quantity may be at least one of: RSRQ, RSRP, or SINR.

For example, for independently configured thresholds, the network side configures a threshold #1 for a non-serving cell 1. The UE determines whether to initiate the L1 measurement of the non-serving cell 1 based on a comparison between the L3 measurement result of the non-serving cell 1 and the threshold #1.

For example, for a general configured threshold, the network side configures a general threshold #0 for all non-serving cells for which L1 measurement configurations are configured. The UE determines whether to initiate the L1 measurement(s) of one or more non-serving cells for which the network configures L1 configuration(s) based on a comparison between the L3 measurement result(s) of the non-serving cell(s) and the threshold #0.

In some embodiments, the first information may be sent via signaling.

In some embodiments, the first information may be sent via L1 signaling.

In some embodiments, the L1 signaling includes at least: Downlink Control Information (DCI).

In some embodiments, the first information may be sent via L2 signaling.

In some embodiments, the L2 signaling includes at least: Media Access Control (MAC) Control Element (CE), etc.

In some embodiments, the first information may be sent via L3 signaling.

In some embodiments, the L3 signaling may include Radio Resource Control (RRC) signaling.

In **step S2302**, the terminal performs a mobility measurement on non-serving cell(s).

In some embodiments, the terminal performs the L3 measurement(s) on non-serving cell(s).

It should be noted that the terminal may perform L3 measurement(s) on non-serving cell(s) to determine whether the communication quality of the non-serving cell(s) is better than that of the serving cell according to the measurement result(s) of the L3 measurement(s) of the non-serving cell(s). It can be understood that if the communication quality of the non-serving cell(s) is worse than that of the serving cell, the terminal does not need to perform cell switch, and on this basis, there is no need to perform the L1 measurement for LTM.

In some embodiments, the non-serving cell(s) may include at least one of:
one or more candidate cells or candidate cell groups corresponding to the LTM configuration(s) configured by the network device;
a neighboring cell corresponding to the L1 measurement configured by the network device.

In some other embodiments, the non-serving cell(s) may include:
candidate cell(s) configured by a network device corresponding to the serving cell for the terminal;
cell(s) for which L1 measurement(s) and/or measurement reporting configuration(s) are configured by network device(s) corresponding to the non-serving cell(s).

In some embodiments, candidate cell(s) may be at least one candidate cell or candidate cell group configured by the network device for the terminal to perform LTM.

In some embodiments, candidate cell(s) may include at least one of:
cell(s) in a candidate MCG for performing LTM;
candidate PCell(s) for performing LTM;
cell(s) in a candidate SCG for performing LTM;
candidate PSCell(s) for performing LTM.

In some embodiments, candidate cell group(s) may include at least one of:
candidate MCG(s) for performing LTM;
candidate SCG(s) for performing LTM.

In some embodiments, performing, by the terminal, the L3 measurement(s) on non-serving cell(s) may include:
performing, by the terminal, L3 measurement(s) on the candidate cell(s).

In some embodiments, performing, by the terminal, the L3 measurement(s) on candidate cell(s) may include at least one of:
performing, by the terminal, the L3 measurement(s) on candidate cell(s) in a candidate MCG;
performing, by the terminal, the L3 measurement(s) on candidate cell(s) in a candidate SCG;
performing, by the terminal, the L3 measurement(s) on candidate PCell(s);
performing, by the terminal, the L3 measurement(s) on candidate PSCell(s).

In some embodiments, performing, by the terminal, L3 measurement(s) on non-serving cell(s) may include:
performing, by the terminal, L3 measurement(s) on non-serving cell measurement object(s) corresponding to the non-serving cell(s).

The non-serving cell(s) may be one or more of: non-serving PCell(s), non-serving PSCell(s), or non-serving SCell(s).

It can be understood that in the embodiments of the present disclosure, the terminal may be a terminal supporting dual connectivity, multiple connectivity, or carrier aggregation. The terminal may simultaneously access two cells or two cell groups to improve the transmission rate. Therefore, the terminal performing L3 measurement(s) on the candidate cell(s) may be as follows: the terminal performs L3 measurement(s) on the candidate MCG(s) or candidate PCell(s) configured for the terminal to determine the communication quality of the candidate MCG(s) or candidate PCell(s). Alternatively, the terminal performing L3 measurement(s) on the candidate cell(s) may be as follows: the terminal performs L3 measurement(s) on the candidate SCG(s) or candidate PSCell(s) configured for the terminal to determine the communication quality of the candidate SCG(s) or candidate PSCell(s). According to the communication quality of the candidate MCG(s) or candidate PCell(s), whether MCG or PCell switch is needed is determined; according to the communication quality of the candidate SCG(s) or candidate PSCell(s), whether SCG or PSCell switch is needed is determined.

In some embodiments, the L3 measurement may include a Radio Resource Management (RRM) measurement.

In some embodiments, the L3 measurement is used for mobility management of the terminal.

It should be noted that the mobility management refers to a management procedure in terms of service continuity for a terminal. Through the mobility management, the connection status between the terminal and the network device can be optimized, thereby ensuring the application of various network services and allowing the terminal to maintain better network coverage or network connectivity.

In some embodiments, the terminal may perform the L3 measurement(s) on the candidate cell(s) based on L3 measurement configuration(s) corresponding to the candidate cell(s) for the LTM pre-configured by the network device.

In some embodiments, the L3 measurement configuration may include measurement-related parameter(s) for the L3 measurement.

In some embodiments, the measurement-related parameter(s) for the L3 measurement may include at least one of:
a measurement reference signal;
a measurement quantity;
configuration information for the measurement reference signal.

It should be noted that the measurement reference signal may be a reference signal periodically broadcast by a cell. The terminal may receive the measurement reference signal and determine the communication quality of the cell according to a signal strength of the measurement reference signal.

The measurement quantity may be a measurement value of the measurement reference signal determined through a measurement. In some embodiments, the measurement quantity may be a parameter used to describe a performance index of the measurement reference signal. For example, the measurement quantity may be a Channel Quality Indicator (CQI).

The configuration information for the measurement reference signal is used for the terminal to determine a signal resource for the measurement reference signal.

It can be understood that the terminal may receive the measurement reference signal according to the configuration information for the measurement reference signal, and perform a measurement based on the received measurement reference signal to obtain the measurement quantity corresponding to the measurement reference signal.

In some embodiments, the configuration information for the measurement reference signal may include at least one of:
an identity of the measurement reference signal;
a resource configuration for the measurement reference signal;
a period configuration for the measurement reference signal.

In some embodiments, the resource configuration for the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

The L3 measurement may be performed based on the SSB and/or CSI-RS of a candidate cell to determine the L3 measurement result of the candidate cell.

In some embodiments, the measurement quantity of the L3 measurement may include at least one of:
Reference Signal Receiving Power (RSRP);
Reference Signal Receiving Quality (RSRQ);
Signal-to-Interference-plus-Noise Ratio (SINR) of the reference signal.

It can be understood that the L3 measurement result of the candidate cell may include one or more of: L3-RSRP, L3-RSRQ, or L3-SINR.

In **step S2303**, the terminal determines whether to perform an operation related to the L1 measurement.

In some embodiments, the terminal determines whether to perform the operation related to the L1 measurement according to the cell measurement result(s) of non-serving cell(s).

In some embodiments, the terminal determines whether to perform the operation related to the L1 measurement according to cell measurement result(s) of candidate cell(s).

In some embodiments, determining, by the terminal, whether to initiate the L1 measurement according to the cell measurement result(s) of the candidate cell(s) may include at least one of:
determining whether to initiate the L1 measurement according to the cell measurement result(s) of the candidate cell(s);
determining whether to stop the L1 measurement according to the cell measurement result(s) of the candidate cell(s);
activating or deactivating L1 measurement reporting according to the cell measurement result(s) of the candidate cell(s).

The measurement result of the L1 measurement is used for the network device to determine whether the terminal performs LTM. If the cell measurement result(s) of the candidate cell(s) indicates(indicate) that the communication quality of the candidate cell(s) is worse than the communication quality of the serving cell, the network device will not control the terminal to perform LTM even if the terminal performs the L1 measurement and reporting in this case. Thus, in a case that the terminal's own measurement capability is insufficient, determining whether to initiate the L1 measurement according to the cell measurement result of the serving cell can reduce unnecessary measurements and lower the measurement power consumption of the terminal.

Alternatively, in a case that the terminal is configured to periodically initiate the L1 measurement, the terminal can determine whether to stop the L1 measurement according to the cell measurement result, thereby reducing the measurement power consumption of the terminal.

Alternatively, in a case that transmission resources are limited, the terminal can determine whether to activate or deactivate L1 measurement reporting according to the cell measurement result, thereby effectively conserving transmission resources. It should be noted that after the terminal completes the L1 measurement, the terminal may determine whether to report the measurement result of the L1 measurement to the network device according to the cell measurement result. This embodiment reduces unnecessary L1 measurement reporting in a case that the transmission resources are limited and the signal quality of the serving cell of the terminal is relatively good.

It should be noted that the initiation or stopping of the L1 measurement and/or activation or deactivation of L1 measurement reporting may be determined by the terminal, without being triggered by the network device. Thus, the embodiment reduces the additional signaling overhead introduced by network device control and lowers latency.

In some embodiments, the L1 measurement may be a beam measurement.

It should be noted that in New Radio (NR), especially when the communication frequency band is in Frequency Range (FR) 2, due to the rapid attenuation of high-frequency channels, in order to ensure signal coverage, the terminal and the network device may perform information transmission and reception based on beam(s).

In some embodiments, a cell may include multiple beams.

In some embodiments, the measurement result of the L1 measurement may be used to determine the beam performance of one or more beams in a cell.

In some embodiments, the measurement result of the L1 measurement may be used to determine, from multiple beams in the cell, a serving beam for communications between the terminal and the network device.

In some embodiments, the measurement result of the L1 measurement is used to determine whether to perform a Layer L1 or Layer L2-triggered mobility (LTM) operation.

In some embodiments, the measurement result of the L1 measurement is used to assist the network device in making a cell switch decision.

It should be noted that the terminal performs the L1 measurement and reports the measurement result of the L1 measurement to the network device. This allows the network device to determine the beam performance of the cell and/or cell performance according to the measurement result of the L1 measurement reported by the terminal, and further determine whether the terminal needs to perform cell switch. When it is determined that the terminal needs to perform cell switch, the serving cell is changed through L1 or L2 signaling, and a corresponding serving beam is selected to achieve fast cell switch, thereby achieving the goal of low latency and low overhead.

In some embodiments, the L1 measurement includes at least one of:
the L1 measurement performed based on one or more measurement configurations corresponding to the LTM configuration(s) configured by the network device;
a measurement based on measurement reporting for triggering LTM;
a beam measurement based on one or more beams configured by the network device for performing LTM.

It can be understood that the network device may pre-configure LTM configuration(s) for the terminal. It should be noted that LTM configuration(s) is(are) used for the terminal to perform a mobility operation related to the LTM configuration(s).

In some embodiments, the LTM configuration(s) may include at least one of:
one or more candidate cells configured by the network device for the terminal;
L1 measurement configuration(s), where the L1 measurement configuration(s) may be measurement configuration(s) corresponding to one or more candidate cells.

In some embodiments, the L1 measurement configuration(s) may not be included in the LTM configuration(s) and may be sent to the UE by the network side through other information, such as being sent to the UE together with the L3 measurement configuration(s) or being sent to the UE separately.

For example, the terminal may initiate the L1 measurement based on one or more pre-configured measurement configurations for performing LTM, and report the measurement result of the L1 measurement, so as to use the L1 measurement result to assist the network device in performing an LTM decision.

For example, the terminal may initiate the L1 measurement based on one or more pre-configured measurement configurations for performing LTM, and trigger an LTM-based cell change based on the L1 measurement result.

Alternatively, the terminal may perform other measurement(s) that can trigger LTM measurement reporting, so as to use the measurement result to assist the network device in making an LTM decision.

Alternatively, the network device may pre-configure one or more dedicated beams. The beam performance of the beam(s) is used to assist the network device in determining whether the terminal needs to perform LTM.

The terminal may perform beam measurement(s) based on the one or more pre-configured dedicated beams in order to use the beam measurement result(s) to assist the network device in performing an LTM decision.

Alternatively, the dedicated beam(s) is(are) determined by the UE based on an implementation, or the dedicated beam(s) is(are) determined by the UE as specified in a protocol, such as one or more best beams in a cell, or one or more beams in a cell exceeding a network-configured threshold or a protocol-specified threshold.

It should be noted that the terminal may determine whether to initiate any one of the above measurements based on the cell measurement result(s), so as to assist the network device in performing an LTM decision by reporting the measurement result of the measurement to the network device, thereby improving the flexibility of initiating the L1 measurement.

In some embodiments, the terminal determines whether to initiate the L1 measurement according to the L3 measurement result(s) of the candidate cell(s).

The terminal may determine the communication quality of the candidate cell(s) based on the L3 measurement result(s) obtained through measurement(s) of the measurement reference signal(s) of the candidate cell(s), thereby determining whether the L1 measurement needs to be initiated. This embodiment reduces unnecessary L1 measurement and lowers the power consumption of the terminal.

In some embodiments, determining, by the terminal, whether to initiate the L1 measurement according to the L3 measurement result(s) of the non-serving cell(s) includes: determining whether to initiate the L1 measurement associated with the non-serving cell(s) according to the L3 measurement result(s) of the candidate cell(s).

In some embodiments, determining whether to initiate the L1 measurement of non-serving cell(s) according the L3 measurement result(s) of the non-serving cell(s) may be understood as: determining whether to initiate beam measurements of multiple beams of the non-serving cell(s) according to the L3 measurement result(s) of specific beam(s) of the non-serving cell(s).

In some embodiments, a measurement period for the L1 measurement(s) of non-serving cell(s) is shorter than a measurement period for the L3 measurement(s) of non-serving cell(s).

It should be noted that the measurement power consumption corresponding to the L3 measurement(s) of the aforementioned non-serving cell(s) is less than that corresponding to the L1 measurement(s) of the non-serving cell(s). Therefore, the terminal can determine whether to initiate the L1 measurement(s) of the non-serving cell(s) with higher measurement power consumption, based on the measurement result(s) of the L3 measurement(s) of the non-serving cell(s) with lower measurement power consumption.

In some embodiments, the L1 measurement configuration for a non-serving cell includes at least one of:
a dedicated L1 measurement configuration configured by the network device for the non-serving cell;
an L1 measurement configuration generated by a source MCG;
an L1 measurement configuration generated by a source SCG.

It can be understood that the network device pre-configures the dedicated L1 measurement configuration for the non-serving cell. In a case that the terminal determines to initiate the L1 measurement for the non-serving cell, the terminal may perform the L1 measurement on the corresponding non-serving cell based on the L1 measurement configuration configured by the network device for the non-serving cell.

In some embodiments, the terminal may directly refer to the L1 measurement configuration generated by the source MCG or source SCG to perform the L1 measurement on the non-serving cell, thereby eliminating the need for the network device to configure the dedicated L1 measurement configuration for the non-serving cell separately.

In some embodiments, the cell measurement result of a non-serving cell includes at least one of:
the L3 measurement result of the measurement reference signal on the non-serving cell;
the L3 measurement result(s) of one or more beams of the non-serving cell;
an average value of L3 measurement results of multiple beams of the non-serving cell.

In some embodiments, a non-serving cell may include multiple different beams, and the multiple different beams are used for transmitting measurement reference signals.

The terminal may receive the measurement reference signals transmitted with multiple different beams, and determine the communication quality of the non-serving cell and the beam performance of multiple beams of the non-serving cell according to the L3 measurement results of the measurement reference signals transmitted with multiple different beams.

The L3 measurement result(s) of one or more beams of a non-serving cell may be understood as follows: when the terminal performs the L3 measurement of the non-serving cell, the terminal may monitor one or more specific beams of the non-serving cell to obtain the L3 measurement result(s) of the one or more specific beams, thereby eliminating the need to monitor all beams of the non-serving cell and reducing the power consumption of the terminal.

In some embodiments, the one or more beams include at least one of:
one or more beams determined based on a network device configuration;
one or more beams as specified in a protocol.

It can be understood that the one or more beams may be beam(s) specified by the network device, or beam(s) determined by the terminal according to a criterion specified in a protocol.

For example, the beam(s) may be one or more beams with the best current performance, or one or more beams whose measurement results are greater than a specific value.

It should be noted that when the terminal performs the L3 measurement on a non-serving cell, the terminal may directly monitor the beam(s) pre-configured by the network device and/or the beam(s) specified in a protocol to obtain the L3 measurement result(s) of one or more specific beams of the serving cell; thus, it is not necessary to monitor all beams of the non-serving cell, reducing the power consumption of the terminal.

In some embodiments, determining, by the terminal, whether to initiate the L1 measurement according to the cell measurement result of a non-serving cell includes at least one of:
the cell measurement result of the non-serving cell being less than or equal to a measurement threshold, and determining, by the terminal, not to initiate the L1 measurement;
the cell measurement result of the non-serving cell being greater than the measurement threshold, and determining, by the terminal, to initiate the L1 measurement.

It should be noted that the measurement threshold may be the lowest threshold of the cell signal that meets the communication requirement of the terminal.

It can be understood that the cell measurement result of the non-serving cell being less than or equal to the measurement threshold indicates that the communication quality of the non-serving cell is relatively poor and the terminal does not have a need of performing cell switch. Based on this, the terminal may not initiate the L1 measurement to reduce unnecessary L1 measurement and reduce the power consumption of the terminal and signaling overhead.

The cell measurement result of the non-serving cell being greater than the measurement threshold indicates that the communication quality of the non-serving cell is relatively good, and the terminal may have the need of performing cell switch. Based on this, the terminal may initiate the L1 measurement to report the L1 measurement result to the network device, assisting the network device in determining whether the terminal performs LTM and determining a target cell to be switched to.

In some other embodiments, determining, by the terminal, whether to initiate the L1 measurement according to the cell measurement result of a non-serving cell includes at least one of:
the cell measurement result of the non-serving cell being less than the measurement threshold, and determining, by the terminal, not to initiate the L1 measurement;
the cell measurement result of the non-serving cell being greater than or equal to the measurement threshold, and determining, by the terminal, to initiate the L1 measurement.

In some other embodiments, determining, by the terminal, whether to initiate the L1 measurement according to the cell measurement result of a non-serving cell includes at least one of:
the cell measurement result of the non-serving cell being greater than or equal to a measurement threshold, and determining, by the terminal, not to initiate the L1 measurement;
the cell measurement result of the non-serving cell being less than the measurement threshold, and determining, by the terminal, to initiate the L1 measurement.

It should be noted that this measurement threshold may be the highest threshold of the cell signal that meets the communication requirement of the terminal.

It can be understood that the cell measurement result of the non-serving cell being greater than or equal to the measurement threshold indicates that the communication quality of the non-serving cell is relatively poor and the terminal does not have the need of performing cell switch. Based on this, the terminal may not initiate the L1 measurement to reduce unnecessary L1 measurement and reduce the power consumption of the terminal and signaling overhead.

The cell measurement result of a non-serving cell being less than the measurement threshold indicates that the communication quality of the non-serving cell is relatively good, and the terminal may have the need of performing cell switch. Based on this, the terminal may initiate the L1 measurement to report the L1 measurement result to the network device, assisting the network device in determining whether the terminal performs LTM and determining a target cell to be switched to.

In other embodiments, determining, by the terminal, whether to initiate the L1 measurement according to the cell measurement result of a non-serving cell includes at least one of:
the cell measurement result of the non-serving cell being greater than the measurement threshold, and determining, by the terminal, not to initiate the L1 measurement;
the cell measurement result of a non-serving cell being less than or equal to the measurement threshold, and determining, by the terminal, to initiate the L1 measurement.

In some embodiments, determining whether to stop the L1 measurement according to the cell measurement result includes at least one of:
the cell measurement result of a non-serving cell being less than or equal to a measurement threshold, and determining, by the terminal, to stop the L1 measurement;
the cell measurement result of the non-serving cell being greater than the measurement threshold, and determining, by the terminal, not to stop the L1 measurement.

It should be noted that this measurement threshold may be the lowest threshold of the cell signal that meets the communication requirement of the terminal.

It can be understood that the cell measurement result of the non-serving cell being less than or equal to the measurement threshold indicates that the communication quality of the non-serving cell is relatively poor and the terminal does not have the need of performing cell switch. Based on this, the terminal may stop the L1 measurement to reduce the measurement power consumption of the terminal.

The cell measurement result of the non-serving cell being greater than the measurement threshold indicates that the communication quality of the non-serving cell is relatively good, and the terminal may have the need of performing cell switch. Based on this, the terminal needs to continue to maintain (periodic) L1 measurement in order to report the L1 measurement result to the network device.

In some other embodiments, determining whether to stop the L1 measurement according to the cell measurement result includes at least one of:
the cell measurement result of a non-serving cell being less than a measurement threshold, and determining, by the terminal, to stop the L1 measurement;
the cell measurement result of the non-serving cell being greater than or equal to the measurement threshold, and determining, by the terminal, not to stop the L1 measurement.

In some other embodiments, determining whether to stop the L1 measurement according to the cell measurement result includes at least one of:
the cell measurement result of a non-serving cell being greater than or equal to a measurement threshold, and determining, by the terminal, to stop the L1 measurement;
the cell measurement result of the non-serving cell being less than the measurement threshold, and determining, by the terminal, not to stop the L1 measurement.

It should be noted that this measurement threshold may be the highest threshold of the cell signal that meets the communication requirement of the terminal.

It can be understood that the cell measurement result of the non-serving cell being greater than or equal to the measurement threshold indicates that the communication quality of the non-serving cell is relatively poor and the terminal does not have the need of performing cell switch. Based on this, the terminal may stop the L1 measurement to reduce the measurement power consumption of the terminal.

The cell measurement result of the non-serving cell being less than the measurement threshold indicates that the communication quality of the non-serving cell is relatively good, and the terminal may have the need of performing cell switch. Based on this, the terminal needs to continue to maintain (periodic) L1 measurement in order to report the L1 measurement result to the network equipment.

In some other embodiments, determining whether to stop the L1 measurement according to the cell measurement result includes at least one of:
the cell measurement result of a non-serving cell being greater than a measurement threshold, and determining, by the terminal, to stop the L1 measurement;
the cell measurement result of the non-serving cell being less than or equal to the measurement threshold, and determining, by the terminal, not to stop the L1 measurement.

In some embodiments, determining whether to activate or deactivate L1 measurement reporting according to the cell measurement result includes at least one of:
the cell measurement result of a non-serving cell being less than or equal to a measurement threshold, and determining, by the terminal, to deactivate L1 measurement reporting;
the cell measurement result of the non-serving cell being greater than the measurement threshold, and determining, by the terminal, to activate L1 measurement reporting.

It should be noted that this measurement threshold may be the lowest threshold of the cell signal that meets the communication requirement of the terminal.

It can be understood that the cell measurement result of the non-serving cell being less than or equal to the measurement threshold indicates that the communication quality of the non-serving cell is relatively poor and the terminal does not have the need of performing cell switch. Based on this, the terminal may deactivate L1 measurement reporting to reduce the occupation of transmission resources.

The cell measurement result of a non-serving cell being greater than the measurement threshold indicates that the communication quality of the non-serving cell is relatively good, and the terminal may have the need of performing cell switch. Based on this, the terminal activates L1 measurement reporting, so that the network device determines whether the terminal perform LTM according to the L1 measurement result reported by the terminal and determines a target cell to be switched to.

In some other embodiments, determining whether to activate or deactivate L1 measurement reporting according to the cell measurement result includes at least one of:
the cell measurement result of a non-serving cell being less than the measurement threshold, and determining, by the terminal, to deactivate L1 measurement reporting;
the cell measurement result of the non-serving cell being greater than or equal to the measurement threshold, and determining, by the terminal, to activate L1 measurement reporting.

In some other embodiments, determining whether to activate or deactivate L1 measurement reporting according to the cell measurement result includes at least one of:
the cell measurement result of a non-serving cell being greater than or equal to a measurement threshold, and determining, by the terminal, to deactivate L1 measurement reporting;
the cell measurement result of the non-serving cell being less than the measurement threshold, and determining, by the terminal, to activate L1 measurement reporting.

It should be noted that this measurement threshold may be the highest threshold of the cell signal that meets the communication requirement of the terminal.

It can be understood that the cell measurement result of the non-serving cell being greater than or equal to the measurement threshold indicates that the communication quality of the non-serving cell is relatively poor and the terminal does not have the need of performing cell switch. Based on this, the terminal may deactivate L1 measurement reporting to reduce the occupation of transmission resources.

The cell measurement result of the non-serving cell being less than the measurement threshold indicates that the communication quality of the non-serving cell is relatively good, and the terminal may have the need of performing cell switch. Based on this, the terminal activates L1 measurement reporting, so that the network device determines whether the terminal performs LTM according to the L1 measurement result reported by the terminal and determines the target cell to be switched to.

In some other embodiments, determining whether to activate or deactivate L1 measurement reporting according to the cell measurement result includes at least one of:
the cell measurement result of a non-serving cell being greater than a measurement threshold, and determining, by the terminal, to deactivate L1 measurement reporting;
the cell measurement result of the non-serving cell being less than or equal to the measurement threshold, and determining, by the terminal, to activate L1 measurement reporting.

In some embodiments, the measurement threshold includes at least one of:
a measurement threshold based on a network device configuration;
a measurement threshold specified in a protocol;
a measurement threshold determined based on a measurement capability of the terminal.

It can be understood that the measurement threshold may be configured by the network device or the measurement threshold may be a default value specified in a protocol.

In some embodiments, the measurement capability(capabilities) of the terminal may include at least one of:
the maximum number of measurement frequency points supported by the terminal;
the number of frequency points that the terminal can currently measure.

It can be understood that the terminal may autonomously determine the measurement threshold based on its own measurement capability(capabilities), and accordingly the terminal can perform the L1 measurement within its own measurement capability range.

In some embodiments, after determining to initiate the L1 measurement, the L1 measurement is performed according to measurement-related parameter(s) for the L1 measurement.

In some embodiments, the measurement-related parameter(s) for the L1 measurement may include at least one of:
a measurement reference signal;
a measurement quantity;
configuration information for the measurement reference signal.

In some embodiments, the configuration information for the measurement reference signal may include at least one of:
an identity of the measurement reference signal;
a resource configuration for the measurement reference signal;
a period configuration of the measurement reference signal.

In some embodiments, the resource configuration of the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

In some embodiments, the measurement quantity of the L1 measurement may include at least one of:
Reference Signal Receiving Power (RSRP);
Reference Signal Receiving Quality (RSRQ);
Signal-to-Interference-plus-Noise Ratio (SINR) of the reference signal.

In some embodiments, the measurement-related parameter(s) for the L1 measurement is(are) determined by measurement-related parameter(s) corresponding to the cell measurement result; or
the measurement-related parameter(s) for the L1 measurement is(are) determined by L1 measurement configuration(s) configured by the network device for the terminal; or
the measurement-related parameter(s) for the L1 measurement is(are) specified in a protocol.

It should be noted that the measurement-related parameter(s) for the L1 measurement being determined by the measurement-related parameter(s) corresponding to the cell measurement result may be understood as: the measurement-related parameter(s) for the L1 measurement initiated by the terminal is(are) the same as the measurement-related parameter(s) for the L3 measurement performed by the terminal on a non-serving cell. For example, the terminal may perform the L3 measurement on an SSB of the non-serving cell and determine whether to initiate the L1 measurement of the non-serving cell based on the L3-RSRP of the SSB. If the terminal determines to initiate the L1 measurement, the terminal may perform the L1 measurement on the SSB(s) of the non-serving cell to obtain L1-RSRP of the non-serving cell.

In some embodiments, the measurement-related parameter(s) for the L1 measurement initiated by the terminal may be different from the measurement-related parameter(s) for the L3 measurement performed by the terminal on the non-serving cell.

For example, the terminal may perform the L3 measurement on the SSB of the non-serving cell and determine whether to initiate the L1 measurement of the non-serving cell based on the L3-RSRP of the SSB. If it is determined to initiate the L1 measurement, the L1 measurement may be performed on CSI-RS of the non-serving cell to obtain L1-SINR of the non-serving cell.

The information processing method involved in the embodiments of the present disclosure may include at least one of steps S2301 to S2303. For example, step S2301 may be implemented as an independent embodiment, and a combination of step S2301 and step S2303 may be implemented as an independent embodiment, but the present disclosure is not limited to this.

In some embodiments, steps S2302 and S2303 are optional, and one or more of these steps may be omitted or substituted in different embodiments. It can be understood that the terminal may perform L1 measurements on all candidate cells pre-configured by the network device for performing LTM, and the terminal does not need to determine whether to initiate the L1 measurements according to the cell measurement results.

In some embodiments, step S2302 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

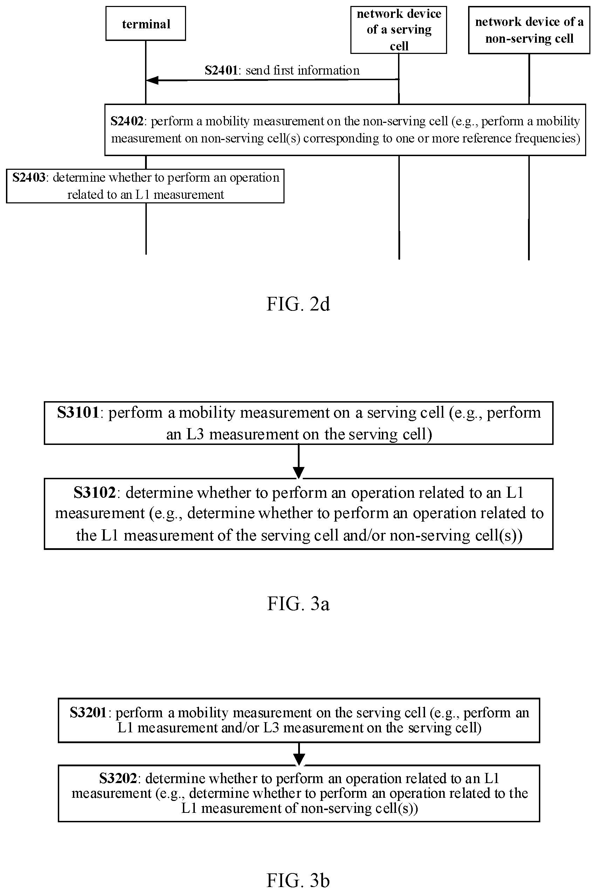

FIG. 2d is a schematic diagram illustrating interactions in an information processing method according to an example embodiment. As shown in FIG. 2d, the embodiment of the present disclosure relates to an information processing method applied in the communication system 100. The method includes:
In **step S2401**, a network device sends first information to a terminal.

In some embodiments, the terminal receives the first information sent by the network device.

In some embodiments, the terminal may be a terminal that supports dual connectivity, multiple connectivity, or carrier aggregation.

In some embodiments, the terminal may be a terminal that supports an L1 measurement.

In some embodiments, the terminal may be a terminal that supports LTM.

For example, supporting LTM may be supporting LTM for PCell or MCG, or may be supporting LTM for PSCell or SCG, or may be supporting the both.

In some embodiments, the network device may be an access network device corresponding to a serving cell which the terminal currently accesses or a source cell.

In some embodiments, the network device may be an access network device corresponding to a primary cell or master cell group of the terminal.

In some embodiments, the network device may be an access network device corresponding to a primary secondary cell or secondary cell group of the terminal.

In some embodiments, the first information may include: LTM configuration(s) corresponding to one or more candidate cells.

In some embodiments, the LTM configuration(s) may be LTM configuration(s) corresponding to Layer 1 (L1) or Layer 2 (L2)-triggered mobility (LTM) configured by the network device for the terminal.

In some embodiments, L1/L1-triggered mobility LTM may include at least one of:
L1/L2-triggered master cell group or primary cell mobility;
L1/L2-triggered secondary cell group or primary secondary cell mobility.

In some embodiments, the L1/L2-triggered master cell group or primary cell mobility is used to control the terminal to change its serving master cell group or primary cell among multiple candidate master cell groups or candidate primary cells corresponding to the serving master cell group or primary cell of the terminal.

In some embodiments, the L1/L2-triggered secondary cell group or primary secondary cell mobility is used for the terminal to change its serving secondary cell group or primary secondary cell among multiple candidate secondary cell groups or candidate primary secondary cells corresponding to the serving secondary cell group or primary secondary cell of the terminal.

In some embodiments, the first information may include at least one of:
one or more configuration information identities;
one or more reference frequencies;
identity(identities) of one or more non-serving cells or non-serving cell groups to be measured;
identity(identities) of one or more candidate cells or candidate cell groups to be measured;
measurement configuration(s) for one or more non-serving cells or non-serving cell groups;
measurement configuration(s) for one or more candidate cells or candidate cell groups;
mobility configuration(s) for one or more candidate cells;
one or more measurement thresholds.

In some embodiments, the measurement threshold may include:
a threshold corresponding to an L3 measurement result.

It should be noted that whether to initiate the L1 measurement is determined according to a comparison result between the L3 measurement result(s) of non-serving cell(s) under one or more reference frequencies and the threshold. The L1 measurement includes, but is not limited to, L1 measurement(s) of non-serving cell(s).

In some embodiments, the measurement threshold includes at least one of:
a measurement threshold based on a network device configuration;
a measurement threshold specified in a protocol;
a threshold determined by the UE based on an implementation.

It can be understood that the measurement threshold may be configured by the network device, or it may be a default value specified in a protocol, or a threshold determined by the UE based on the implementation.

In some embodiments, the measurement threshold may be configured for L1 measurement initiation for non-serving cell(s).

In some embodiments, the measurement threshold may be configured independently for different non-serving cells, or a general measurement threshold may be configured.

In some embodiments, the measurement threshold may be configured independently for non-serving cells under different reference frequencies.

In some embodiments, the thresholds for initiating L1 measurements of different non-serving cells may be different or different.

In some embodiments, the measurement quantities corresponding to the thresholds for initiating L1 measurements of different non-serving cells may be the same or different. The measurement quantity may be at least one of: RSRQ, RSRP, or SINR.

For example, for thresholds configured independently for different non-serving cells, the network side configures a threshold #1 for a non-serving cell 1. The UE determines whether to initiate the L1 measurement based on a comparison between the L3 measurement result of the non-serving cell 1 and the threshold #1.

For example, for thresholds configured independently for non-serving cells at different reference frequencies, the network side configures a threshold #2 for one or more non-serving cells under a reference frequency 1. The UE determines whether to initiate the L1 measurement based on a comparison between the L3 measurement result(s) of one or more non-serving cells under the reference frequency 1 and the threshold #2.

For example, for a general configured threshold, the network side configures a general threshold #0 for non-serving cell(s) under one or more reference frequencies. The UE determines whether to initiate the L1 measurement based on a comparison between the L3 measurement result(s) of non-serving cell(s) under one or more reference frequencies and the threshold #0.

In some embodiments, the first information may be sent via signaling.

In some embodiments, the first information may be sent via L1 signaling.

In some embodiments, the L1 signaling includes at least: Downlink Control Information (DCI).

In some embodiments, the first information may be sent via L2 signaling.

In some embodiments, the L2 signaling includes at least: a Media Access Control (MAC) control element (CE), etc.

In some embodiments, the first information may be sent via L3 signaling.

In some embodiments, the L3 signaling may include Radio Resource Control (RRC) signaling.

In **step S2402**, the terminal performs a mobility measurement on non-serving cell(s).

In some embodiments, the terminal performs the L3 measurement on non-serving cell(s) corresponding to one or more reference frequencies.

It should be noted that, in order to reduce interference between cells, frequencies may be allocated to different cells. Multiple cells corresponding to the same frequency may be called co-frequency cells; multiple cells corresponding to different frequencies may be called inter-frequency cells.

In some embodiments, non-serving cell(s) may include:
one or more candidate cells or candidate cell groups corresponding to the LTM configuration(s) configured by the network device;
a neighboring cell corresponding to the L1 measurement configured by the network device.

In some other embodiments, the non-serving cell(s) may include:
candidate cell(s) configured by a network device corresponding to the serving cell for the terminal;
cell(s) for which L1 measurement(s) and/or measurement reporting configuration(s) are configured by network device(s) corresponding to the non-serving cell(s).

In some embodiments, candidate cell(s) may be at least one candidate cell or candidate cell group configured by the network device for the terminal to perform LTM.

In some embodiments, candidate cell(s) may include at least one of:
cell(s) in a candidate MCG for performing LTM;
candidate PCell(s) for performing LTM;
cell(s) in a candidate SCG for performing LTM;
candidate PSCell(s) for performing LTM.

In some embodiments, candidate cell group(s) may include at least one of:
candidate MCG(s) for performing LTM;
candidate SCG(s) for performing LTM.

In some embodiments, performing, by the terminal, the L3 measurement on non-serving cell(s) corresponding to one or more reference frequencies may include:
performing, by the terminal, the L3 measurement on candidate cell(s) corresponding to one or more reference frequencies.

It can be understood that the network device may pre-configure multiple candidate cells for performing LTM for the terminal. In order to reduce measurement power consumption, the terminal may determine, from the multiple candidate cells pre-configured by the network device, candidate cell(s) corresponding to one or more reference frequencies, and perform the L3 measurement only on the candidate cell(s). This can effectively reduce the number of candidate cell(s) that need to be measured.

It should be noted that the terminal may perform the L3 measurement on the candidate cell(s) corresponding to one or more reference frequencies to determine whether the communication quality of the candidate cell(s) is better than that of the serving cell according to the measurement result(s) of the L3 measurement of the candidate cell(s). It can be understood that if the communication quality of the candidate cell(s) is worse than that of the serving cell, the terminal does not need to perform cell switch, and on this basis, there is no need to perform the L1 measurement for LTM.

In some embodiments, performing, by the terminal, the L3 measurement on candidate cell(s) corresponding to one or more reference frequencies may include at least one of:
performing, by the terminal, the L3 measurement on candidate cell(s) in candidate MCG(s) corresponding to the reference frequency(frequencies);
performing, by the terminal, the L3 measurement on candidate cell(s) in candidate SCG(s) corresponding to the reference frequency(frequencies);
performing, by the terminal, the L3 measurement on candidate PCell(s) corresponding to the reference frequency(frequencies);
performing, by the terminal, the L3 measurement on candidate PSCell(s) corresponding to the reference frequency(frequencies).

In some embodiments, performing, by the terminal, the L3 measurement on the non-serving cell(s) may include:
performing, by the terminal, the L3 measurements on non-serving cell measurement object(s) corresponding to the non-serving cell(s).

The non-serving cell(s) may be one or more of the following: non-serving PCell(s), non-serving PSCell(s), or non-serving SCell(s).

It can be understood that in the embodiments of the present disclosure, the terminal may be a terminal supporting dual connectivity, multiple connectivity, or carrier aggregation. The terminal may simultaneously access two cells or two cell groups to improve the transmission rate. Therefore, the terminal performing the L3 measurement on candidate cell(s) may be as follows: the terminal performs the L3 measurement on candidate MCG(s) and/or candidate PCell(s) corresponding to the reference frequency(frequencies) among multiple candidate MCGs or candidate PCells configured for the terminal, to determine the communication quality of the candidate MCG(s) and/or candidate PCell(s) corresponding to the reference frequency (frequencies); and, whether MCG or PCell switch is needed is determined according to the communication quality of the candidate MCG(s) or candidate PCell(s) corresponding to the reference frequency(frequencies).

Alternatively, the L3 measurement may be performed on candidate SCG(s) or candidate PSCell(s) corresponding to the reference frequency(frequencies) among multiple candidate SCGs or candidate PSCells configured for the terminal, to determine the communication quality of the candidate SCG(s) or candidate PSCell(s) corresponding to the reference frequency(frequencies); and, whether SCG or PSCell switch is needed is determined according to the communication quality of the candidate SCG(s) or candidate PSCell(s) corresponding to the reference frequency(frequencies).

In some embodiments, the L3 measurement may include a Radio Resource Management (RRM) measurement.

In some embodiments, the L3 measurement is used for mobility management of the terminal.

It should be noted that the mobility management refers to a management procedure in terms of service continuity for a terminal. Through the mobility management, the connection status between the terminal and the network device can be optimized, thereby ensuring the application of various network services and allowing the terminal to maintain better network coverage or network connectivity.

In some embodiments, the terminal may perform the L3 measurement on the candidate cell(s) corresponding to reference frequency(frequencies) based on the L3 measurement configuration(s) corresponding to the candidate cell(s) corresponding to one or more reference frequencies among the candidate cells for LTM pre-configured by the network device.

In some embodiments, an L3 measurement configuration may include measurement-related parameter(s) for the L3 measurement.

In some embodiments, the measurement-related parameter(s) for the L3 measurement may include at least one of:
a measurement reference signal;
a measurement quantity;
configuration information for the measurement reference signal.

It should be noted that the measurement reference signal may be a reference signal periodically broadcast by a cell. The terminal may receive the measurement reference signal and determine the communication quality of the cell according to the signal strength of the measurement reference signal.

The measurement quantity may be a measurement value of the measurement reference signal determined through a measurement. In some embodiments, the measurement quantity may be a parameter used to describe a performance index of the measurement reference signal. For example, the measurement quantity may be a Channel Quality Indicator (CQI).

The configuration information for the measurement reference signal is used for the terminal to determine a signal resource for the measurement reference signal.

It can be understood that the terminal may receive the measurement reference signal according to the configuration information for the measurement reference signal, and perform a measurement based on the received measurement reference signal to obtain the measurement quantity corresponding to the measurement reference signal.

In some embodiments, the configuration information for the measurement reference signal may include at least one of:
an identity of the measurement reference signal;
a resource configuration for the measurement reference signal;
a period configuration for the measurement reference signal.

In some embodiments, the resource configuration for the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

The L3 measurement may be performed based on the SSB and/or CSI-RS of candidate cell(s) corresponding to one or more reference frequencies to determine the L3 measurement result(s) of the candidate cell(s).

In some embodiments, the measurement quantity of the L3 measurement may include at least one of:
Reference Signal Receiving Power (RSRP);
Reference Signal Receiving Quality (RSRQ);
Signal-to-Interference-plus-Noise Ratio (SINR) of the reference signal.

It can be understood that the L3 measurement result(s) of candidate cell(s) may include one or more of the following: L3-RSRP, L3-RSRQ, or L3-SINR.

In **step S2403**, the terminal determines whether to perform an operation related to the L1 measurement.

In some embodiments, the terminal determines whether to perform the operation related to the L1 measurement according to cell measurement result(s) of non-serving cell(s) corresponding to one or more reference frequencies.

In some embodiments, determining, by the terminal, whether to initiate the L1 measurement according to cell measurement result(s) of non-serving cell(s) corresponding to one or more reference frequencies may include at least one of:
determining whether to initiate the L1 measurement according to the cell measurement result(s) of non-serving cell(s) corresponding to one or more reference frequencies;
determining whether to stop the L1 measurement according to the cell measurement result(s) of non-serving cell(s) corresponding to one or more reference frequencies;
activating or deactivating L1 measurement reporting according to cell measurement result(s) of non-serving cell(s) corresponding to one or more reference frequencies,.

The measurement result of the L1 measurement is used for the network device to determine whether the terminal performs LTM. If the cell measurement result(s) of the non-serving cell(s) indicates(indicate) that the communication quality of the non-serving cell(s) is worse than the communication quality of the serving cell, the network device will not control the terminal to perform LTM even if the terminal performs the L1 measurement and reporting in this case. Thus, in a case that the terminal's own measurement capability is insufficient, determining whether to initiate the L1 measurement according to the cell measurement result of the serving cell can reduce unnecessary measurements and lower the measurement power consumption of the terminal.

Alternatively, in a case that the terminal is configured to periodically initiate the L1 measurement, the terminal can determine whether to stop the L1 measurement according to the cell measurement result, thereby reducing the measurement power consumption of the terminal.

Alternatively, in a case that transmission resources are limited, the terminal can determine whether to activate or deactivate L1 measurement reporting according to the cell measurement result, thereby effectively conserving transmission resources. It should be noted that after the terminal completes the L1 measurement, the terminal may determine whether to report the measurement result of the L1 measurement to the network device according to the cell measurement result. This embodiment reduces unnecessary L1 measurement reporting in a case that the transmission resources are limited and the signal quality of the serving cell of the terminal is relatively good.

It should be noted that the initiation or stopping of the L1 measurement and/or activation or deactivation of L1 measurement reporting may be determined by the terminal, without being triggered by the network device. Thus, the embodiment reduces the additional signaling overhead introduced by network device control and lowers latency.

In some embodiments, the L1 measurement may be a beam measurement.

It should be noted that in New Radio (NR), especially when the communication frequency band is in Frequency Range (FR) 2, due to the rapid attenuation of high-frequency channels, in order to ensure signal coverage, the terminal and the network device may perform information transmission and reception based on beam(s).

In some embodiments, a cell may include multiple beams.

In some embodiments, the measurement result of the L1 measurement may be used to determine the beam performance of one or more beams in a cell.

In some embodiments, the measurement result of the L1 measurement may be used to determine, from multiple beams in the cell, a serving beam for communications between the terminal and the network device.

In some embodiments, the measurement result of the L1 measurement is used to determine whether to perform a Layer L1 or Layer L2-triggered mobility (LTM) operation.

In some embodiments, the measurement result of the L1 measurement is used to assist the network device in making a cell switch decision.

It should be noted that the terminal performs the L1 measurement and reports the measurement result of the L1 measurement to the network device. This allows the network device to determine the beam performance of the cell and/or cell performance according to the measurement result of the L1 measurement reported by the terminal, and further determine whether the terminal needs to perform cell switch. When it is determined that the terminal needs to perform cell switch, the serving cell is changed through L1 or L2 signaling, and a corresponding serving beam is selected to achieve fast cell switch, thereby achieving the goal of low latency and low overhead.

In some embodiments, L1 measurement includes at least one of:
the L1 measurement performed based on one or more measurement configurations corresponding to the LTM configuration(s) configured by the network device;
a measurement based on measurement reporting for triggering LTM;
a beam measurement based on one or more beams configured by the network device for performing LTM.

It can be understood that the network device may pre-configure LTM configuration(s) for the terminal. It should be noted that LTM configuration(s) is(are) used for the terminal to perform a mobility operation related to the LTM configuration(s).

In some embodiments, the LTM configuration(s) may include at least one of:
one or more candidate cells configured by the network device for the terminal;
L1 measurement configuration(s), where the L1 measurement configuration(s) may be measurement configuration(s) corresponding to one or more candidate cells.

In some embodiments, the L1 measurement configuration(s) may not be included in the LTM configuration(s) and may be sent to the UE by the network side through other information, such as being sent to the UE together with the L3 measurement configuration(s) or being sent to the UE separately.

For example, the terminal may initiate the L1 measurement based on one or more pre-configured measurement configurations for performing LTM, and use the measurement result of the L1 measurement, so as to use the L1 measurement result to assist the network device in performing an LTM decision.

For example, the terminal may initiate the L1 measurement based on one or more pre-configured measurement configurations for performing LTM, and trigger an LTM-based cell change based on the L1 measurement result.

Alternatively, the terminal may perform other measurement(s) that can trigger LTM measurement reporting, so as to use the measurement result to assist the network device in making an LTM decision.

Alternatively, the network device may pre-configure one or more dedicated beams. The beam performance of the beam(s) is used to assist the network device in determining whether the terminal needs to perform LTM.

The terminal may perform beam measurement(s) based on the one or more pre-configured dedicated beams in order to use the beam measurement result(s) to assist the network device in performing an LTM decision.

Alternatively, the dedicated beam(s) is(are) determined by the UE based on an implementation, or the dedicated beam(s) is(are) determined by the UE as specified in a protocol, such as one or more best beams in a cell, or one or more beams in a cell exceeding a network-configured threshold or a protocol-specified threshold.

It should be noted that the terminal may determine whether to initiate any one of the above measurements based on the cell measurement result(s), so as to assist the network device in performing an LTM decision by reporting the measurement result of the measurement to the network device, thereby improving the flexibility of initiating the L1 measurement.

In some embodiments, determining, by the terminal, whether to initiate the L1 measurement according to the cell measurement result(s) of non-serving cell(s) corresponding to one or more reference frequencies may include:
determining, by the terminal, whether to initiate the L1 measurement according to the L3 measurement result(s) of candidate cell(s) corresponding to one or more reference frequencies.

The terminal may determine the communication quality of the candidate cell(s) according to the L3 measurement result(s) obtained through measurement(s) of the measurement reference signal(s) of the candidate cell(s) corresponding to one or more reference frequencies, and further determine whether to initiate the L1 measurement. On the one hand, the terminal does not need to send the measurement result(s) to the network device, and the network device does not need to trigger the initiation of the L1 measurement according to the measurement result(s), thus reducing signaling overhead and latency. On the other hand, during the L3 measurement procedure, only candidate cell(s) corresponding to one or more reference frequencies are subjected to the L3 measurement, reducing the number of candidate cell(s) to be measured and reducing the power consumption of the terminal.

In some embodiments, the terminal may determine whether to initiate the L1 measurement of candidate cells corresponding to all frequency bands supported by the terminal according to the L3 measurement result(s) of candidate cell(s) corresponding to one or more reference frequencies.

In some embodiments, the terminal determines whether to initiate the L1 measurement corresponding to the reference frequency(frequencies) based on the L3 measurement result(s) of candidate cell(s) corresponding to one or more reference frequencies.

In some embodiments, the terminal determining whether to initiate the L1 measurement corresponding to the reference frequency(frequencies) according to the L3 measurement result(s) of candidate cell(s) corresponding to the one or more reference frequencies may be understood as: determining whether to initiate beam measurements of multiple beams of the candidate cell(s) corresponding to the reference frequency(frequencies) according to the L3 measurement result(s) of specific beam(s) of the candidate cell(s) corresponding to the one or more reference frequencies.

In some embodiments, a measurement period for the L1 measurement of the candidate cell(s) corresponding to one or more reference frequencies is shorter than a measurement period for the L3 measurement of candidate cell(s) corresponding to the reference frequencies.

It should be noted that the measurement power consumption corresponding to the L3 measurement of the candidate cell(s) corresponding to the reference frequency(frequencies) is less than the measurement power consumption corresponding to the L1 measurement of the candidate cell(s) corresponding to the reference frequency(frequencies). Therefore, the terminal may determine whether to initiate the L1 measurement of the candidate cell(s) with higher measurement power consumption based on the measurement result(s) of the L3 measurement(s) of the candidate cell(s) with lower measurement power consumption.

In some embodiments, the L1 measurement configuration for a non-serving cell includes at least one of:
a dedicated L1 measurement configuration configured by the network device for the non-serving cell;
an L1 measurement configuration generated by a source MCG;
an L1 measurement configuration generated by a source SCG.

It can be understood that the network device pre-configures the dedicated L1 measurement configuration for the non-serving cell. In a case that the terminal determines to initiate the L1 measurement for the non-serving cell, the terminal may perform the L1 measurement on the corresponding non-serving cell based on the L1 measurement configuration configured by the network device for the non-serving cell.

In some embodiments, the terminal may directly refer to the L1 measurement configuration generated by the source MCG or source SCG to perform the L1 measurement on the non-serving cell, thereby eliminating the need for the network device to configure the dedicated L1 measurement configuration for the non-serving cell separately.

In some embodiments, the cell measurement result of a non-serving cell includes at least one of:
the L3 measurement result of the measurement reference signal on the non-serving cell;
the L3 measurement result(s) of one or more beams of the non-serving cell;
an average value of L3 measurement results of multiple beams of the non-serving cell.

In some embodiments, a non-serving cell may include multiple different beams, and the multiple different beams are used for transmitting measurement reference signals.

The terminal may receive the measurement reference signals transmitted with multiple different beams, and determine the communication quality of the non-serving cell and the beam performance of multiple beams of the non-serving cell according to the L3 measurement results of the measurement reference signals transmitted with multiple different beams.

The L3 measurement result(s) of one or more beams of a non-serving cell may be understood as follows: when the terminal performs the L3 measurement of the non-serving cell, the terminal may monitor one or more specific beams of the non-serving cell to obtain the L3 measurement result(s) of the one or more specific beams, thereby eliminating the need to monitor all beams of the non-serving cell and reducing the power consumption of the terminal.

In some embodiments, one or more beams include at least one of:
one or more beams determined based on a network device configuration;
one or more beams as specified in a protocol.

It can be understood that the one or more beams may be beam(s) specified by the network device, or beam(s) determined by the terminal according to a criterion specified in a protocol.

For example, the beam(s) may be one or more beams with the best current performance, or one or more beams whose measurement results are greater than a specific value.

It should be noted that when the terminal performs the L3 measurement on a non-serving cell, the terminal may directly monitor the beam(s) pre-configured by the network device and/or the beam(s) specified in a protocol to obtain the L3 measurement result(s) of one or more specific beams of the serving cell; thus, it is not necessary to monitor all beams of the non-serving cell, reducing the power consumption of the terminal.

In some embodiments, determining, by the terminal, whether to initiate the L1 measurement according to the cell measurement result(s) of the non-serving cell(s) includes at least one of:
the maximum value of the L3 measurement result(s) of non-serving cell(s) corresponding to one or more reference frequencies being less than or equal to a measurement threshold, and determining, by the terminal, not to initiate the L1 measurement;
the maximum value of the L3 measurement result(s) of the non-serving cell(s) corresponding to one or more reference frequencies being greater than the measurement threshold, and determining, by the terminal, to initiate the L1 measurement.

It should be noted that this measurement threshold may be the lowest threshold of the cell signal that meets the communication requirement of the terminal.

It can be understood that the maximum value of the L3 measurement result(s) of candidate cell(s) corresponding to the one or more reference frequencies being less than or equal to the measurement threshold indicates that the communication quality of the candidate cell(s) corresponding to the reference frequency(frequencies) is relatively poor and the terminal does not have the need of performing cell switch. Based on this, the terminal may not initiate the L1 measurement to reduce unnecessary L1 measurement and reduce the power consumption of the terminal and signaling overhead.

The L3 measurement result(s) of non-serving cell(s) corresponding to one or more reference frequencies being greater than the measurement threshold indicates that the communication quality of the non-serving cell(s) corresponding to the reference frequency(frequencies) is relatively good, and the terminal may have the need of performing cell switch. Based on this, the terminal may initiate the L1 measurement to report the L1 measurement result to the network device, assisting the network device in determining whether the terminal performs LTM and determining a target cell to be switched to.

In some other embodiments, determining, by the terminal, whether to initiate the L1 measurement according to the cell measurement result(s) of the non-serving cell(s) includes at least one of:
the maximum value of the L3 measurement result(s) of the non-serving cell(s) corresponding to one or more reference frequencies being less than the measurement threshold, and determining, by the terminal, not to initiate the L1 measurement;
the maximum value of the L3 measurement result(s) of the non-serving cell(s) corresponding to one or more reference frequencies being greater than or equal to the measurement threshold, and determining, by the terminal, to initiate the L1 measurement.

In some other embodiments, determining, by the terminal, whether to initiate the L1 measurement according to the cell measurement result(s) of non-serving cell(s) includes at least one of:
the maximum value of the L3 measurement result(s) of non-serving cell(s) corresponding to one or more reference frequencies being greater than or equal to a measurement threshold, and determining, by the terminal, not to initiate the L1 measurement;
the maximum value of the L3 measurement result(s) of non-serving cell(s) corresponding to one or more reference frequencies being less than the measurement threshold, and determining, by the terminal, to initiate the L1 measurement.

It should be noted that this measurement threshold may be the highest threshold of the cell signal that meets the communication requirement of the terminal.

It can be understood that the maximum value of the L3 measurement result(s) of candidate cell(s) corresponding to the one or more reference frequencies being greater than or equal to the measurement threshold indicates that the communication quality of the candidate cell(s) corresponding to the reference frequency(frequencies) is relatively poor and the terminal does not have the need of performing cell switch. Based on this, the terminal may not initiate the L1 measurement to reduce unnecessary L1 measurement and reduce the power consumption of the terminal and signaling overhead.

The L3 measurement result(s) of non-serving cell(s) corresponding to one or more reference frequencies being less than the measurement threshold indicates that the communication quality of the non-serving cell(s) corresponding to the reference frequency(frequencies) is relatively good, and the terminal may have the need of performing cell switch. Based on this, the terminal may initiate the L1 measurement to report the L1 measurement result to the network equipment, assisting the network device in determining whether the terminal performs LTM and determining the target cell to be switched to.

In some other embodiments, determining, by the terminal, whether to initiate the L1 measurement according to the cell measurement result(s) of non-serving cell(s) includes at least one of:
the maximum value of the L3 measurement result(s) of non-serving cell(s) corresponding to one or more reference frequencies being greater than a measurement threshold, and determining, by the terminal, not to initiate L1 measurement;
the maximum value of the L3 measurement result(s) of non-serving cell(s) corresponding to one or more reference frequencies being less than or equal to the measurement threshold, and determining, by the terminal, to initiate the L1 measurement.

In some embodiments, determining whether to stop the L1 measurement according to the cell measurement result(s) includes at least one of:
the maximum value of the L3 measurement result(s) of non-serving cell(s) corresponding to one or more reference frequencies being less than or equal to a measurement threshold, and determining, by the terminal, to stop the L1 measurement.
the maximum value of the L3 measurement result(s) of non-serving cell(s) corresponding to one or more reference frequencies being greater than the measurement threshold, and determining, by the terminal, not to stop the L1 measurement.

It should be noted that this measurement threshold may be the lowest threshold of the cell signal that meets the communication requirement of the terminal.

It can be understood that the maximum value of the L3 measurement result(s) of candidate cell(s) corresponding to one or more reference frequencies being less than or equal to the measurement threshold indicates that the communication quality of the candidate cell(s) corresponding to the reference frequency(frequencies) is relatively poor and the terminal does not have the need of performing cell switch. Based on this, the terminal may stop the L1 measurement to reduce the measurement power consumption of the terminal.

The L3 measurement result(s) of non-serving cell(s) corresponding to one or more reference frequencies being greater than the measurement threshold indicates that the communication quality of the non-serving cell(s) corresponding to the reference frequency(frequencies) is relatively good, and the terminal may have the need of performing cell switch. Based on this, the terminal needs to continue to maintain (periodic) L1 measurement in order to report the L1 measurement result to the network equipment.

In some other embodiments, determining whether to stop the L1 measurement according to cell measurement result(s) includes at least one of:
the maximum value of the L3 measurement result(s) of non-serving cell(s) corresponding to one or more reference frequencies being less than the measurement threshold, and determining, by the terminal, to stop the L1 measurement.
the maximum value of the L3 measurement result(s) of non-serving cell(s) corresponding to one or more reference frequencies being greater than or equal to the measurement threshold, and determining, by the terminal, not to stop the L1 measurement.

In some other embodiments, determining whether to stop the L1 measurement based on cell measurement result(s) includes at least one of:
the maximum value of the L3 measurement result(s) of non-serving cell(s) corresponding to one or more reference frequencies being greater than or equal to a measurement threshold, and determining, by the terminal, to stop the L1 measurement;
the maximum value of the L3 measurement result(s) of non-serving cell(s) corresponding to one or more reference frequencies being less than the measurement threshold, and determining, by the terminal, not to stop the L1 measurement.

It should be noted that this measurement threshold may be the highest threshold of the cell signal that meets the communication requirement of the terminal.

It can be understood that the maximum value of the L3 measurement result(s) of candidate cell(s) corresponding to the one or more reference frequencies being greater than or equal to the measurement threshold indicates that the communication quality of the candidate cell(s) corresponding to the reference frequency(frequencies) is relatively poor and the terminal does not have the need of performing cell switch. Based on this, the terminal may stop the L1 measurement to reduce the measurement power consumption of the terminal.

The L3 measurement result(s) of non-serving cell(s) corresponding to one or more reference frequencies being less than the measurement threshold indicates that the communication quality of the non-serving cell(s) corresponding to the reference frequency(frequencies) is relatively good, and the terminal may have the need of performing cell switch. Based on this, the terminal needs to continue to maintain (periodic) L1 measurement in order to report the L1 measurement result to the network device.

In some other embodiments, determining whether to stop the L1 measurement based on the cell measurement result(s) includes at least one of:
the maximum value of the L3 measurement result(s) of non-serving cell(s) corresponding to one or more reference frequencies being greater than a measurement threshold, and determining, by the terminal, to stop the L1 measurement;
the maximum value of the L3 measurement result(s) of non-serving cell(s) corresponding to one or more reference frequencies being less than or equal to the measurement threshold, and determining, by the terminal, not to stop the L1 measurement.

In some embodiments, determining whether to activate or deactivate L1 measurement reporting based on cell measurement result(s) includes at least one of:
the maximum value of the L3 measurement result(s) of non-serving cell(s) corresponding to one or more reference frequencies being less than or equal to a measurement threshold, and determining, by the terminal, to deactivate L1 measurement reporting;
the maximum value of the L3 measurement result(s) of non-serving cell(s) corresponding to one or more reference frequencies being greater than the measurement threshold, and determining, by the terminal, activate L1 measurement reporting.

It should be noted that this measurement threshold may be the lowest threshold of the cell signal that meets the communication requirement of the terminal.

It can be understood that the maximum value of the L3 measurement result(s) of candidate cell(s) corresponding to one or more reference frequencies being less than or equal to the measurement threshold indicates that the communication quality of the candidate cell(s) corresponding to the reference frequency(frequencies) is relatively poor and the terminal does not have the need of performing cell switch. Based on this, the terminal may deactivate L1 measurement reporting to reduce the occupation of transmission resources.

The L3 measurement result(s) of non-serving cell(s) corresponding to one or more reference frequencies being greater than the measurement threshold indicates that the communication quality of the non-serving cell(s) corresponding to the reference frequency(frequencies) is relatively good, and the terminal may have the need of performing cell switch. Based on this, the terminal activates L1 measurement reporting, so that the network device determines whether the terminal performs LTM according to the L1 measurement result reported by the terminal and determines the target cell to be switched to.

In some other embodiments, determining whether to activate or deactivate L1 measurement reporting based on cell measurement result(s) includes at least one of:
the maximum value of the L3 measurement result(s) of non-serving cell(s) corresponding to one or more reference frequencies being less than the measurement threshold, and determining, by the terminal, to deactivate L1 measurement reporting;
the maximum value of the L3 measurement result(s) of non-serving cell(s) corresponding to one or more reference frequencies being greater than or equal to the measurement threshold, and determining, by the terminal, to activate L1 measurement reporting.

In some embodiments, determining whether to activate or deactivate L1 measurement reporting based on cell measurement result(s) includes at least one of:
the maximum value of the L3 measurement result(s) of non-serving cell(s) corresponding to one or more reference frequencies being greater than or equal to a measurement threshold, and determining, by the terminal, to deactivate L1 measurement reporting;
the maximum value of the L3 measurement result(s) of non-serving cell(s) corresponding to one or more reference frequencies being less than the measurement threshold, and determining, by the terminal, to activate L1 measurement reporting.

It should be noted that this measurement threshold may be the highest threshold of the cell signal that meets the communication requirement of the terminal.

It can be understood that the maximum value of the L3 measurement result(s) of candidate cell(s) corresponding to one or more reference frequencies being greater than or equal to the measurement threshold indicates that the communication quality of the candidate cell(s) corresponding to the reference frequency(frequencies) is relatively poor and the terminal does not have the need of performing cell switch. Based on this, the terminal may deactivate L1 measurement reporting to reduce the occupation of transmission resources.

The L3 measurement result(s) of non-serving cell(s) corresponding to one or more reference frequencies being less than the measurement threshold indicates that the communication quality of the non-serving cell(s) corresponding to the reference frequency(frequencies) is relatively good, and the terminal may have the need of performing a cell switch. Based on this, the terminal activates L1 measurement reporting, so that the network device determines whether the terminal performs LTM according to the L1 measurement result reported by the terminal and determines the target cell to be switched to.

In some embodiments, determining whether to activate or deactivate L1 measurement reporting according to cell measurement result(s) includes at least one of:
the maximum value of the L3 measurement result(s) of non-serving cell(s) corresponding to one or more reference frequencies being greater than a measurement threshold, and determining, by the terminal, to deactivate L1 measurement reporting;
the maximum value of the L3 measurement result(s) of non-serving cell(s) corresponding to one or more reference frequencies being less than or equal to the measurement threshold, and determining, by the terminal, to activate L1 measurement reporting.

In some embodiments, the measurement threshold includes at least one of:
a measurement threshold based on a network device configuration;
a measurement threshold specified in a protocol;
a measurement threshold determined according to a measurement capability of the terminal.

It can be understood the measurement threshold may be configured by the network device, or it may be a default value specified in a protocol.

In some embodiments, the measurement capability(capabilities) of the terminal may include at least one of:
the maximum number of measurement frequency points supported by the terminal;
the number of frequency points that the terminal can currently measure.

It can be understood that the terminal may autonomously determine the measurement threshold based on its own measurement capability(capabilities), and accordingly the terminal can perform the L1 measurement within its own measurement capability range.

In some embodiments, after determining to initiate the L1 measurement, the L1 measurement is performed according to measurement-related parameter(s) for the L1 measurement.

In some embodiments, the measurement-related parameter(s) for the L1 measurement may include at least one of:
a measurement reference signal;
a measurement quantity;
configuration information for the measurement reference signal.

In some embodiments, the configuration information for the measurement reference signal may include at least one of:
an identity of the measurement reference signal;
a resource configuration for the measurement reference signal;
a period configuration of the measurement reference signal.

In some embodiments, the resource configuration of the measurement reference signal may be used to indicate a time-frequency resource location of the measurement reference signal.

It should be noted that the configuration information for the measurement reference signal is used for the terminal to monitor the measurement reference signal according to the configuration information for the measurement reference signal.

In some embodiments, the measurement reference signal may include at least one of:
a synchronization and system information block (SSB);
Channel State Information-Reference Signal (CSI-RS).

In some embodiments, the measurement quantity of the L1 measurement may include at least one of:
Reference Signal Receiving Power (RSRP);
Reference Signal Receiving Quality (RSRQ);
Signal-to-Interference-plus-Noise Ratio (SINR) of the reference signal.

In some embodiments, the measurement-related parameter(s) for the L1 measurement is(are) determined by measurement-related parameter(s) corresponding to the cell measurement result; or
the measurement-related parameter(s) for the L1 measurement is(are) determined by L1 measurement configuration(s) configured by the network device for the terminal; or
the measurement-related parameter(s) for the L1 measurement is(are) specified in a protocol.

It should be noted that the measurement-related parameter(s) for the L1 measurement being determined by the measurement-related parameter(s) corresponding to the cell measurement result may be understood as: the measurement-related parameter(s) for the L1 measurement initiated by the terminal is(are) the same as the measurement-related parameter(s) for the L3 measurement performed by the terminal on a non-serving cell. For example, the terminal may perform the L3 measurement on an SSB of the non-serving cell and determine whether to initiate the L1 measurement based on the L3-RSRP of the SSB. If the terminal determines to initiate the L1 measurement, the terminal may perform the L1 measurement on the SSB(s) of the non-serving cell to obtain L1-RSRP of the non-serving cell.

In some embodiments, the measurement-related parameter(s) for the L1 measurement initiated by the terminal may be different from the measurement-related parameter(s) for the L3 measurement performed by the terminal on the non-serving cell.

For example, the terminal may perform the L3 measurement on the SSB of the non-serving cell and determine whether to initiate the L1 measurement based on the L3-RSRP of the SSB. If it is determined to initiate the L1 measurement, the L1 measurement may be performed on CSI-RS of the non-serving cell to obtain L1-SINR of the non-serving cell.

The information processing method involved in the embodiments of the present disclosure may include at least one of steps S2401 to S2403. For example, step S2401 may be implemented as an independent embodiment, and a combination of step S2401 and step S2403 may be implemented as an independent embodiment, but the present disclosure is not limited to this.

In some embodiments, steps S2402 and S2403 are optional, and one or more of these steps may be omitted or substituted in different embodiments. It can be understood that the terminal may perform L1 measurements on all candidate cells pre-configured by the network device for performing LTM, and the terminal does not need to determine whether to initiate the L1 measurements according to the cell measurement results.

In some embodiments, step S2402 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

FIG. 3a is a schematic flowchart of an information processing method according to an example embodiment. As shown in FIG. 3a, the embodiment of the present disclosure relates to an information processing method performed by the terminal 101. The method includes:
In **step S3101**, a mobility measurement is performed on a serving cell.

In some embodiments, regarding optional implementations of step S3101, reference may be made to optional implementations of step S2102 in FIG. 2a and other related parts in the embodiments involved in FIG. 2a, and repeated descriptions will be omitted here.

In **step S3102**, whether to perform an operation related to an L1 measurement is determined.

In some embodiments, regarding optional implementations of step S3102, reference may be made to optional implementations of step S2103 in FIG. 2a and other related parts in the embodiments involved in FIG. 2a, and repeated descriptions will be omitted here.

The information processing method involved in the embodiments of the present disclosure may include at least one of steps S3101 to S3102. For example, step S3102 may be implemented as an independent embodiment, but the present disclosure is not limited to this.

In some embodiments, step S3101 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

FIG. 3b is a schematic flowchart of an information processing method according to an example embodiment. As shown in FIG. 3b, the embodiment of the present disclosure relates to an information processing method performed by the terminal 101. The method includes:
In **step S3201**, a mobility measurement is performed on a serving cell.

In some embodiments, regarding optional implementations of step S3201, reference may be made to optional implementations of step S2202 in FIG. 2b and other related parts in the embodiments involved in FIG. 2b, and repeated descriptions will be omitted here.

In **step S3202**, whether to perform an operation related to an L1 measurement is determined.

In some embodiments, regarding optional implementations of step S3202, reference may be made to optional implementations of step S2203 in FIG. 2b and other related parts in the embodiments involved in FIG. 2b, and repeated descriptions will be omitted here.

The information processing method involved in the embodiments of the present disclosure may include at least one of steps S3201 to S3202. For example, step S3202 may be implemented as an independent embodiment, but the present disclosure is not limited to this.

In some embodiments, step S3201 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

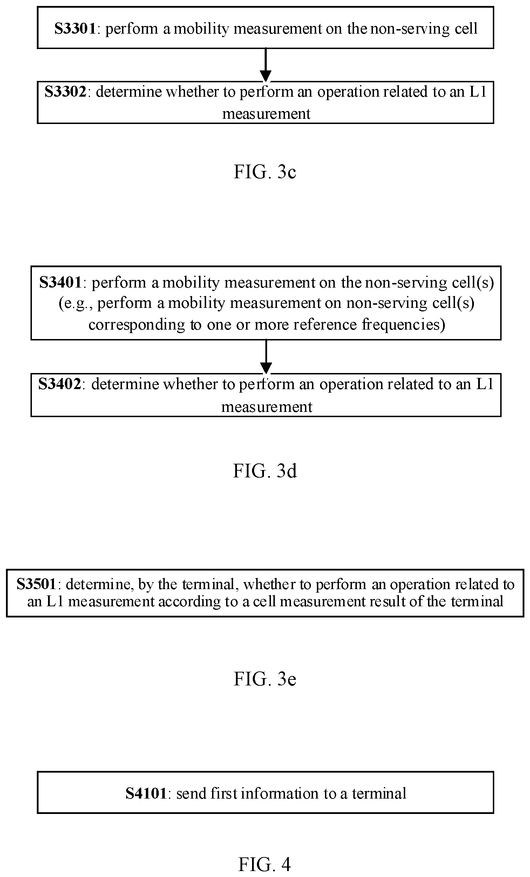

FIG. 3c is a schematic flowchart of an information processing method according to an example embodiment. As shown in FIG. 3c, the embodiment of the present disclosure relates to an information processing method performed by the terminal 101. The method includes:
In **step S3301**, a mobility measurement is performed on non-serving cell(s).

In some embodiments, regarding optional implementations of step S3301, reference may be made to optional implementations of step S2302 in FIG. 2c and other related parts in the embodiments involved in FIG. 2c, and repeated descriptions will be omitted here.

In **step S3302**, whether to perform an operation related to an L1 measurement is determined.

In some embodiments, regarding optional implementations of step S3302, reference may be made to optional implementations of step S2303 in FIG. 2c and other related parts in the embodiments involved in FIG. 2c, and repeated descriptions will be omitted here.

The information processing method involved in the embodiments of the present disclosure may include at least one of steps S3301 to S3302. For example, step S3302 may be implemented as an independent embodiment, but the present disclosure is not limited to this.

In some embodiments, step S3301 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

FIG. 3d is a schematic flowchart of an information processing method according to an example embodiment. As shown in FIG. 3d, the embodiment of the present disclosure relates to an information processing method performed by the terminal 101. The method includes:
In **step S3401**, a mobility measurement is performed on non-serving cell(s).

In some embodiments, regarding optional implementations of step S3401, reference may be made to optional implementations of step S2402 in FIG. 2d and other related parts in the embodiments involved in FIG. 2d, and repeated descriptions will be omitted here.

In **step S3402**, whether to perform an operation related to an L1 measurement is determined.

In some embodiments, regarding optional implementations of step S3402, reference may be made to optional implementations of step S2403 in FIG. 2d and other related parts in the embodiments involved in FIG. 2d, and repeated descriptions will be omitted here.

The information processing method involved in the embodiments of the present disclosure may include at least one of steps S3401 to S3402. For example, step S3402 may be implemented as an independent embodiment, but the present disclosure is not limited to this.

In some embodiments, step S3401 is optional, and one or more of these steps may be omitted or substituted in different embodiments. It can be understood that the initiation or change of the L1 measurement may be controlled by the network device; that is, the network device may trigger the terminal to initiate the L1 measurement by sending trigger signaling, without the need for the terminal to perform a cell measurement and determine whether to initiate the L1 measurement according to the cell measurement result.

FIG. 3e is a schematic flowchart of an information processing method according to an example embodiment. As shown in FIG. 3e, the embodiment of the present disclosure relates to an information processing method performed by the terminal 101. The method includes:

In **step S3501**, the terminal determines whether to perform an operation related to an L1 measurement according to a cell measurement result of the terminal.

In some embodiments, the measurement result of the L1 measurement is used to determine whether to perform a Layer L1 or Layer L2-triggered mobility (LTM) operation.

In some embodiments, determining, by the terminal, whether to perform the operation related to the L1 measurement according to the cell measurement result of the terminal includes at least one of:
determining whether to initiate the L1 measurement according to the cell measurement result;
determining whether to stop the L1 measurement according to the cell measurement result;
activating or deactivating L1 measurement reporting according to the cell measurement result.

In some embodiments, determining, by the terminal, whether to perform the operation related to the L1 measurement according to the cell measurement result of the terminal includes one of:
the cell measurement result of a serving cell being less than or equal to a measurement threshold, and determining, by the terminal, to initiate the L1 measurement;
the cell measurement result of the serving cell being greater than the measurement threshold, and determining, by the terminal, not to initiate the L1 measurement.
the cell measurement result of non-serving cell(s) being less than or equal to the measurement threshold, and determining, by the terminal, not to initiate the L1 measurement;
the cell measurement result of the non-serving cell(s) being greater than the measurement threshold, and determining, by the terminal, to initiate the L1 measurement.

In some embodiments, the non-serving cell(s) may include at least one of:
one or more candidate Primary Cells (PCells) corresponding to LTM configuration(s) configured by the network device;
one or more candidate Primary Secondary Cells (PSCells) corresponding to the LTM configuration(s) configured by the network device;
a neighboring cell corresponding to the L1 measurement configured by the network device.

In some embodiments, the measurement threshold includes at least one of:
a measurement threshold based on a network device configuration;
a measurement threshold specified in a protocol;
a measurement threshold determined according to a measurement capability of the terminal.

In some embodiments, determining, by the terminal, whether to perform the operation related to the Layer L1 measurement according to the cell measurement result of the terminal includes:
determining, by the terminal, whether to initiate the L1 measurement associated with the serving cell and/or non-serving cell(s) according to the L3 measurement result of the serving cell.

In some embodiments, determining, by the terminal, whether to perform the operation related to the Layer L1 measurement according to the cell measurement result of the terminal includes:
determining, by the terminal, whether to initiate the L1 measurement associated with non-serving cell(s) according to the L1 measurement result and/or L3 measurement result of the serving cell.

In some embodiments, determining, by the terminal, whether to perform the operation related to the Layer L1 measurement according to the cell measurement result of the terminal includes:
determining, by the terminal, whether to initiate the L1 measurement associated with the non-serving cell(s) according to the L3 measurement result of the non-serving cell(s).

In some embodiments, determining, by the terminal, determines whether to perform the operation related to the Layer L1 measurement according to the cell measurement result of the terminal includes:
determining, by the terminal, whether to initiate the L1 measurement according to the L3 measurement result(s) of non-serving cell(s) corresponding to one or more reference frequencies.

In some embodiments, determining, by the terminal, whether to initiate the L1 measurement associated with the serving cell and/or non-serving cell(s) according to the L3 measurement result of the serving cell includes at least one of:
determining whether to initiate the L1 measurement of a serving Master Cell Group (MCG) and/or a the serving Primary Cell (PCell) according to the L3 measurement result of the serving Primary Cell (PCell);
determining whether to initiate L1 measurement of a candidate MCG and/or a candidate PCell of the terminal according to the L3 measurement result of the serving Primary Cell (PCell);
determining whether to initiate the L1 measurement of non-serving cell(s) according to the L3 measurement result of the serving Primary Cell (PCell), where the L1 measurement of the non-serving cell(s) is associated with a configuration of the serving MCG and/or the serving PCell;
determining whether to initiate the L1 measurement of a corresponding Secondary Cell Group (SCG) and/or the serving Primary Secondary Cell (PSCell) according to the L3 measurement result of the serving Primary Secondary Cell (PSCell);
determining whether to initiate the L1 measurement of a candidate SCG and/or candidate PSCell of the terminal according to the L3 measurement result of the serving Primary Secondary Cell (PSCell);
determining whether to initiate the L1 measurement of non-serving cell(s) according to the L3 measurement result of the serving Primary Secondary Cell (PSCell), where the L1 measurement of non-serving cell(s) is associated with a configuration of a serving SCG and/or the serving PSCell.

In some embodiments, determining, by the terminal, whether to initiate the L1 measurement associated with non-serving cell(s) according to the L1 measurement result and/or L3 measurement result of the serving cell includes at least one of:
determining whether to initiate the L1 measurement of the candidate MCG and/or candidate PCell of the terminal according to the L1 measurement result and/or L3 measurement result of the serving Primary Cell (PCell);
determining whether to initiate the L1 measurement of non-serving cell(s) according to the L1 measurement result and/or L3 measurement result of the serving Primary Cell (PCell), where the L1 measurement of non-serving cell(s) is associated with a configuration of a serving MCG and/or the serving PCell;
determining whether to initiate the L1 measurement of the candidate SCG and/or candidate PSCell of the terminal according to the L1 measurement result and/or L3 measurement result of the serving Primary Secondary Cell (PSCell);
determining whether to initiate the L1 measurement of the non-serving cell(s) according to the L1 measurement result and/or L3 measurement result of the serving Primary Secondary Cell (PSCell), where the L1 measurement of non-serving cell(s) is associated with the configuration of the serving SCG and/or serving PSCell.

In some embodiments, the L1 measurement result and/or L3 measurement result of the serving cell include at least one of:
the L3 measurement result of a measurement reference signal on the serving cell;
L3 measurement result(s) of one or more beams of the serving cell;
an average value of L3 measurements of multiple beams of the serving cell;
the L1 measurement result of the measurement reference signal of the serving cell;
L1 measurement result(s) of one or more beams of the serving cell;
an average value of the L1 measurement results of multiple beams of the serving cell.

In some embodiments, the L3 measurement result of a non-serving cell include at least one of:
the L3 measurement result of the measurement reference signal on the non-serving cell;
L3 measurement result(s) of one or more beams of the non-serving cell;
an average value of L3 measurement results of multiple beams of the non-serving cell.

In some embodiments, one or more beams include at least one of:
beam(s) determined based on a network device configuration;
beam(s) specified in a protocol.

In some embodiments, the L1 measurement configuration for a non-serving cell includes at least one of:
a dedicated L1 measurement configuration configured by the network device for the non-serving cell;
an L1 measurement configuration generated by a source MCG;
an L1 measurement configuration generated by a source SCG.

In some embodiments, the measurement-related parameter(s) for the L1 measurement is(are) determined by the measurement-related parameter(s) corresponding to the cell measurement result; or
the measurement-related parameter(s) for the L1 measurement is(are) determined by the L1 measurement configuration configured by the network device for the terminal; or
the measurement-related parameter(s) for the L1 measurement is(are) specified in a protocol.

In some embodiments, the measurement-related parameter(s) includes(include) at least one of:
a measurement reference signal;
a measurement quantity.

In some embodiments, the measurement reference signal includes at least one of:
a synchronization signal broadcast channel block (SSB);
Channel State Information (CSI)-Reference Signal (RS).
In some embodiments, the measurement quantity includes at least one of:
Reference Signal Receiving Power (RSRP);
Reference Signal Receiving Quality (RSRQ);
Signal-to-Interference-plus-Noise Ratio (SINR).

In some embodiments, the L1 measurement includes at least one of:
the L1 measurement performed based on one or more measurement configurations corresponding to the LTM configuration(s) configured by the network device;
a measurement based on measurement reporting for triggering LTM;
beam measurement(s) based on one or more beams configured by the network device for performing LTM.

In some embodiments, the L3 measurement includes:
a Radio Resource Control (RRM) measurement.

FIG. 4 is a schematic flowchart of an information processing method according to an example embodiment. As shown in FIG. 4, the embodiment of the present disclosure relates to an information processing method performed by the network device 102. The method includes:
In **step S4101**, first information is sent to a terminal.

In some embodiments, the terminal receives the first information sent by the network device.

In some embodiments, regarding optional implementations of step S4101, reference may be made to optional implementations of step S2101 in FIG. 2a and other related parts in the embodiments involved in FIG. 2a, and repeated descriptions will be omitted here.

In some embodiments, regarding optional implementations of step S4101, reference may be made to optional implementations of step S2201 in FIG. 2b and other related parts in the embodiments involved in FIG. 2b, and repeated descriptions will be omitted here.

In some embodiments, regarding optional implementations of step S4101, reference may be made to optional implementations of step S2301 in FIG. 2c and other related parts in the embodiments involved in FIG. 2c, and repeated descriptions will be omitted here.

In some embodiments, regarding optional implementations of step S4101, reference may be made to optional implementations of step S2401 in FIG. 2d and other related parts in the embodiments involved in FIG. 2d, and repeated descriptions will be omitted here.

In some embodiments, the method further includes:
receiving, by the network device, a measurement result of the L1 measurement sent by the terminal; and
determining whether the terminal performs LTM according to the measurement result of the L1 measurement.

It can be understood that the terminal determines to initiate the L1 measurement according to the cell measurement result, and sends the measurement result of the L1 measurement to the network device, so that the network device determines the communication quality of the current serving cell of the terminal according to the measurement result of the L1 measurement, and further determines whether the terminal performs the LTM.

In some embodiments, determining whether the terminal performs LTM according to the measurement result of the L1 measurement may include at least one of:
determining whether the terminal performs LTM according to the measurement result of the L1 measurement of the serving cell;
determining whether the terminal performs LTM according to the measurement result of the L1 measurement of a non-serving cell.

In some embodiments, when a UE receives a configuration containing the L1 measurement, the UE performs the L1 measurement and conducts corresponding measurement reporting. The network side pre-configures multiple candidate cell configurations for LTM, and these candidate configurations are not deleted after LTM execution. Thus, the UE needs to perform measurements for all LTM configured by the network. Because the measurement capability of the UE is limited, measuring all L1 measurements configured by the network results in a large number of unnecessary measurements and reporting, increasing the UE's burden.

In R18, it was proposed to control or modify the L1 measurement via L1/L2 signaling. Since an L1 measurement configuration is configured via L3 signaling, the network side can control and modify L1 measurement and reporting based on L3 signaling. However, this network control based scheme requires the network side to evaluate whether to initiate or modify the L1 measurement according to information reported by the UE (e.g., L1 or L3 measurement results). On the one hand, this scheme results in latency. On the other hand, this scheme incurs additional L1/L2/L3 signaling overhead.

In some embodiments, in view of the aforementioned problem(s), the network side control-based scheme cannot quickly and effectively adapt to rapidly changing network environments. Therefore, the present disclosure provides a method in which a UE autonomously initiates an L1 measurement. In this solution, the UE autonomously determines whether to initiate the L1 measurement based on measurement result(s) of a serving cell or LTM candidate cell(s) and threshold(s).

The UE determines whether to initiate a corresponding L1 measurement based on measurement result(s):
Solution 1: whether to initiate the L1 measurement is determined based on a (L3) measurement result of the serving cell. When the L3 measurement result of the serving cell is less than a threshold, the UE initiates the L1 measurement; when the L3 measurement result of the serving cell is greater than the threshold, the UE stops the L1 measurement.

Solution 2: whether to initiate the L1 measurement of LTM candidate cell(s) is determined based on (L1/L3) measurement result of the serving cell. When the L1/L3 measurement result of the serving cell is less than a threshold, the UE initiates the L1 measurement of LTM candidate cell(s); when the L1/L3 measurement result of the serving cell is greater than the threshold, the UE stops the L1 measurement of LTM candidate cell(s).

Solution 3: whether to initiate the L1 measurement of a corresponding LTM candidate cell is determined based on the L3 measurement result of the LTM candidate cell. When the L3 measurement result of the LTM candidate cell is less than a threshold, the UE does not initiate the L1 measurement of the corresponding LTM candidate cell; when the L3 measurement result of the LTM candidate cell is greater than the threshold, the UE initiates the L1 measurement of the corresponding LTM candidate cell.

Solution 4: whether to initiate the L1 measurement for a specific RS frequency is determined based on the L3 measurement result of that RS frequency. If the maximum value of the L3 measurement results of the LTM candidate cells at the specific frequency is less than a threshold, the UE does not initiate the L1 measurement for the corresponding frequency; if the maximum value of the L3 measurement results of the LTM candidate cells at the specific frequency is greater than the threshold, the UE initiates the L1 measurement for the corresponding frequency.

For example, initiating may also be called continuing; stop may also be called not initiating.

Solution 1: whether to initiate the L1 measurement is determined based on the measurement result of the serving cell.
1. Whether to initiate a process for the L1 measurement is determined based on the measurement result of the serving cell. The process for initiating the L1 measurement may be initiating the L1 measurement procedure and/or L1 measurement reporting procedure, including one or more of the following:
   1.1 When the L3 measurement result of the serving cell is less than a threshold, the UE performs the process for initiating the L1 measurement.
   1.2 When the L3 measurement result of the serving cell is greater than the threshold, the UE performs the process for stopping the L1 measurement.
2. In 1, the process for initiating the L1 measurement performed by the UE includes the process for the L1 measurement of the serving cell and the process for the L1 measurement of non-serving cell(s) (e.g., LTM candidate cell(s)).
3. In 1, the serving cell may be an SPCell, i.e., the serving cell may be either a PCell or a PSCell.
   3.1 When the serving cell is a PCell, the UE determines whether to initiate the process for the L1 measurement configured by the PCell and MCG or the process for the L1 measurement for LTM candidate PCell(s) based on the L3 measurement result of the PCell.
   3.2 When the serving cell is a PSCell, the UE determines whether to initiate the process for the L1 measurement configured by the PCell and SCG or the process for the L1 measurement for LTM candidate PSCell(s) based on the L3 measurement result of the PSCell.
4. In 1, the threshold may be at least one of: a threshold configured by a network, a threshold specified in a protocol, a default threshold, or a threshold determined by the UE based on its own implementation (a threshold autonomously determined by the UE).
5. In 1, the L1 measurement includes, but is not limited to, one or more of the following: measurement(s) performed based on measurement configuration(s) included in the LTM configuration(s), a measurement for which measurement reporting is performed using L1 information, or a measurement obtained based on measurement result(s) of beam(s) configured by the network. The L3 measurement in 1 refers to a measurement result of RRM, which is generally used for mobility management, such as handover, PSCell change, etc.
6. The L3 measurement result of the serving cell in 1 may be:
   the L3 measurement result of the serving cell;
   the L3 measurement result(s) of specific beam(s)of the serving cell;
   an average value of measurement results of multiple specific beams of the serving cell, where these beams may be determined by the UE based on one or more of: a network configuration, an agreement in a protocol, or a specific criterion.
7. In 1, a measurement quantity corresponding to the measurement result may be one or more of: RSRP, RSRQ and SINR.
8. In 1, the reference signal for the measurement may be either SSB or CSI-RS.
9. Based on 1, 7 or 8, the reference signal corresponding to a condition for initiating the measurement and the measurement quantity may correspond to the reference signal and measurement quantity corresponding to the L1 measurement procedure to be initiated. For example, if the L3-RSRP of the SSB of the serving cell is less than the threshold, the L1-RSRP measurement based on the SSB is initiated.

The reference signal corresponding to the condition for initiating the measurement may not correspond to the measurement quantity, that is, it may be determined based on a network configuration, or it may be determined as specified in a protocol, or it may be determined based on a default value. For example, if the reference signal corresponding to the condition for initiating the measurement is SSB and the measurement quantity is RSRP, when the L3 RSRP measurement result of the SSB of the serving cell is less than the threshold, the L1 measurement is initiated. The L1 measurement is an L1 measurement configured by the network, and there is no need to distinguish between a measurement quantity and a measurement object.

Solution 2: whether to initiate the L1 measurement of non-serving cell(s) is determined based on the measurement result of the serving cell.
1. Whether to initiate a process for L1 measurement of non-serving cell(s) is determined based on the measurement result of the serving cell. The process for initiating the L1 measurement may be initiating the L1 measurement procedure and/or L1 measurement reporting procedure, including one or more of the following:
   1.1 When the L1 measurement result of the serving cell is less than a threshold, the UE performs the process for initiating the L1 measurement of non-serving cell(s).
   1.2 When the L3 measurement result of the serving cell is greater than a threshold, the UE performs the process for initiating the L1 measurement of non-serving cell(s).
   1.3 When the L1 measurement result of the serving cell is greater than the threshold, the UE performs the process for stopping the L1 measurement of non-serving cell(s).
   1.4 When the L3 measurement result of the serving cell is greater than the threshold, the UE performs the process for stopping the L1 measurement of non-serving cell(s).
2. In 1, non-serving cell(s) may be LTM candidate cell(s) configured by the network, or may be other cell(s) for which the network configures L1 measurement(s) and reporting configuration(s).
3. Similar to point 3 of Solution 1, based on the type of serving cell, the UE controls the initiation and stop of the measurement of corresponding LTM candidate cell(s) based on the measurement result of the serving cell.
4. Similar to 4-9 in Solution 1.

Solution 3: whether to initiate the process for the L1 measurement of a corresponding non-serving cell is determined based on the L3 measurement result of the non-serving cell.
1. Whether to initiate a process for the L1 measurement of a non-serving cell is determined based on the measurement result of the non-serving cell. The process for initiating the L1 measurement may be initiating the L1 measurement procedure and/or L1 measurement reporting procedure, including one or more of the following:
   1.1 When the L3 measurement result of the non-serving cell is greater than a threshold, the UE performs the process for initiating the L1 measurement of the non-serving cell.
   1.2 When the L3 measurement result of the non-serving cell is less than the threshold, the UE performs the process for stopping the L1 measurement of the non-serving cell.
2. In 1, the non-serving cell may be an LTM candidate cell configured by the network, or other cell for which the network configures an L1 measurement and reporting configuration.
   For example, the network side configures an LTM candidate cell A for the UE. If the L3 measurement result of A is greater than a threshold 1, the UE initiates the L1 measurement of this candidate cell A.
3. In 1, the non-serving cell (or LTM candidate cell) may be one or more of: an LTM candidate Primary Cell (PCell) or an LTM candidate Primary Secondary Cell (PSCell), which may be associated with an L1 measurement configuration generated by a source Master Cell Group (MCG) and/or correspond to an L1 measurement configuration generated by a source secondary cell SCG.
4. Similar to 4-5 and 7-9 in Solution 1.

Solution 4: whether to initiate the L1 measurement of a specific RS frequency is determined the L3 measurement result of the RS frequency.
1. Whether to initiate a process for the L1 measurement of a specific RS frequency is determined based on the L3 measurement result of the RS frequency. The process for initiating the L1 measurement may be initiating the L1 measurement procedure and/or L1 measurement reporting procedure, including one or more of the following:
   1.1 When the maximum value of L3 measurement result(s) of non-serving cell(s) at the specific frequency is less than a threshold, the UE performs the process for stopping the L1 measurement of the corresponding frequency;
   1.2 When the maximum value of L3 measurement result(s) of non-serving cell(s) at the specific frequency is greater than a threshold, the UE initiates the L1 measurement of the corresponding frequency.
2. In 1, non-serving cell(s) may be LTM candidate cell(s) configured by the network, or other cell(s) for which the network configures L1 measurement(s) and reporting configuration(s). If the L1 measurement configuration(s) configured by the network side is(are) not associated with a specific cell, the non-serving cell(s) in 1 is(are) non-serving cell(s) that the UE can detect in the time frequency of the corresponding L1 measurement configuration(s).
3. Similar to 3-9 in Solution 3.

The present disclosure further provides an apparatus for implementing any one of the above methods. For example, an apparatus is provided. The apparatus includes units or modules for implementing the steps performed by the terminal in any one of the above methods. As another example, another apparatus is provided. The apparatus includes units or modules for implementing the steps performed by a network device (e.g., an access network device, or a core network device, etc.) in any one of the above methods.

It should be understood that the division of units or modules in the above apparatus is only a logical functional division. In actual implementations, the units or modules may be fully or partially integrated into a physical entity, or the units or modules may be physically separated. Furthermore, the units or modules in the apparatus may be implemented in a form of a processor invoking software. For example, the apparatus includes a processor connected to a memory, and instructions are stored in the memory. The processor invokes the instructions stored in the memory to implement any one of the above methods or to implement the functions of the units or modules in the above apparatus. The processor may be, for example, a general-purpose processor, such as a Central Processing Unit (CPU) or a microprocessor, and the memory may be a memory within the apparatus, or a memory outside the apparatus. Alternatively, the units or modules in the apparatus may be implemented in a form of hardware circuit(s). The functions of a part or all of the units or modules may be implemented through a design of the hardware circuit(s). The hardware circuit(s) may be understood as one or more processors. For example, in an implementation, the hardware circuit is an Application-Specific Integrated Circuit (ASIC), and the functions of a part or all of the units or modules can be implemented through the design of a logical relationship between components within the circuit. In another implementation, the hardware circuit may be implemented using a Programmable Logic Device (PLD), such as a Field-Programmable Gate Array (FPGA), which may include a large number of logic gate circuits. A connection relationship between the logic gate circuits is configured through a configuration file, achieving the functions of a part or all of the units or modules. All units or modules of the apparatus may be implemented entirely through the form of processor invoking software, or may be implemented entirely through the form of hardware circuit(s), or may be implemented partially through the form of processor invoking software, with the remaining part implemented through the form of hardware circuit(s).

In an embodiment of the present disclosure, the processor is a circuit with signal processing capabilities. In an implementation, the processor may be a circuit with instruction read and execution capabilities, such as a Central Processing Unit (CPU), a microprocessor, a Graphics Processing Unit (GPU) (which may be understood as a microprocessor), or a Digital Signal Processor (DSP), etc. In another implementation, the processor may implement certain functions through a logical relationship between hardware circuits. The logical relationship between the hardware circuits is fixed or reconfigurable. For example, the processor is a hardware circuit implemented using an Application-Specific Integrated Circuit (ASIC) or a Programmable Logic Device (PLD), such as an FPGA. In a reconfigurable hardware circuit, a procedure in which the processor loads a configuration file to realize the configuration of the hardware circuit can be understood as a procedure in which the processor loads instructions to implement the functions of a part or all of the above units or modules. Furthermore, it may also be a hardware circuit designed for artificial intelligence, which may be understood as an ASIC, such as a Neural Network Processing Unit (NPU), a Tensor Processing Unit (TPU), or a Deep learning Processing Unit (DPU), etc.

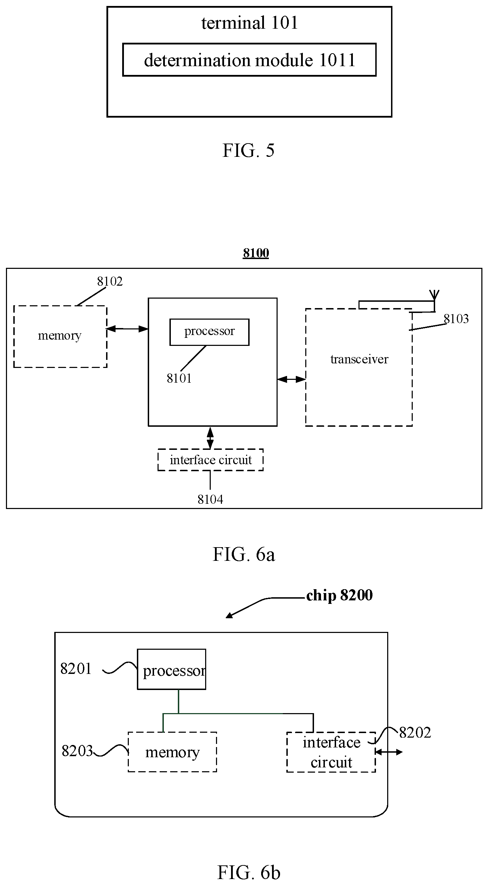

FIG. 5 is a schematic diagram of a structure of a terminal according to an example embodiment. As shown in FIG. 5, the terminal 101 includes a determination module 1011. The determination module 1011 is configured to determine whether to perform an operation related to Layer L1 measurement according to a cell measurement result of the terminal. Optionally, the determination module 1011 is configured to perform the steps related to information determination executed by the terminal in any one of the above information processing methods, and repeated descriptions will be omitted here. Optionally, the terminal 101 further includes a transceiving module. The transceiving module is configured to perform the steps related to sending and receiving executed by the terminal in any one of the above methods, and repeated descriptions will be omitted here.

FIG. 6a is a schematic diagram of the structure of a communication device 8100 according to an example embodiment. The communication device 8100 may be a network device (e.g., an access network device or a core network device, etc.), or may be a terminal (e.g., user equipment, etc.), or may be a chip, chip system, or processor, etc., that supports the network device in implementing any one of the above methods, or may be a chip, chip system, or processor, etc., that supports the terminal in implementing any one of the above information processing methods. The communication device 8100 may be used to implement the information processing methods described in the above method embodiments; for details, reference may be made to the descriptions in the above method embodiments.

As shown in FIG. 6a, the communication device 8100 includes one or more processors 8101. The processor 8101 can be a general-purpose processor or a dedicated processor, such as a baseband processor or a central processor. The baseband processor may be used to process communication protocols and communication data, and the central processor may be used to control a communication device (e.g., a base station, a baseband chip, a terminal device, a terminal device chip, a DU or a CU, etc.), execute programs, and process program data. The processor 8101 is used to invoke instructions to cause the communication device 8100 to perform any one of the above communication methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the communication steps such as sending and receiving in the above methods are performed by the transceivers 8103, and other steps are performed by the processor(s) 8101.

In some embodiments, the transceiver may include a receiver and a sender. The receiver and the sender may be separate or integrated. Optionally, the terms such as transceiver, transceiving unit, transceiving machine, transceiving circuit, etc., may be used interchangeably; terms such as sender, sending unit, sending machine, sending circuit, etc., may be used interchangeably; and terms such as receiver, receiving unit, receiving machine, receiving circuit, etc., may be used interchangeably.

Optionally, the communication device 8100 further includes one or more interface circuits 8104, which are connected to the memory 8102. The interface circuits 8104 may be used to receive signals from the memory 8102 or other device(s), and may be used to send signals to the memory 8102 or other device(s). For example, the interface circuits 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 6a. The communication device may be a standalone device or a part of a larger device. For example, the communication device may be: (1) a standalone integrated circuit IC, or a chip, or a chip system or a subsystem; (2) a collection of one or more ICs, optionally, the IC collection may also include a storage component for storing data or programs; (3) an ASIC, such as a modem; (4) a module that may be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 6b is a schematic diagram of the structure of a chip 8200 according to an example embodiment. For a case where the communication device 8100 may be a chip or a chip system, reference may be made to the schematic diagram of the structure of chip 8200 shown in FIG. 6b, but the present disclosure is not limited to this.

The chip 8200 includes one or more processors 8201, which are used to invoke instructions to cause the chip 8200 to perform any one of the above communication methods.

In some embodiments, the chip 8200 further includes one or more interface circuits 8202 connected to a memory 8203. The interface circuits 8202 may be used to receive signals from the memory 8203 or other device(s), and may also be used to send signals to the memory 8203 or other device(s). For example, the interface circuits 8202 may read instructions stored in the memory 8203 and send the instructions to the processor(s) 8201. Optionally, terms such as interface circuit, interface, transceiving pin, transceiver, etc., may be used interchangeably.

In some embodiments, the chip 8200 further includes one or more memories 8203 for storing instructions. Optionally, all or part of the memories 8203 may be located outside of the chip 8200.

The present disclosure further provides a storage medium storing instructions. When the instructions run on the communication device 8100, the communication device 8100 is caused to perform any one of the methods described above. Optionally, the storage medium is an electronic storage medium. Optionally, the storage medium is a computer-readable storage medium, but it may also be a storage medium readable by other device(s). Optionally, the storage medium may be a non-transitory storage medium, but it may also be a transitory storage medium.

The present disclosure further provides a program product. When the program product is executed by the communication device 8100, the communication device 8100 is caused to perform any one of the above communication methods. Optionally, the program product is a computer program product.

The present disclosure also provides a computer program. When the computer program runs on a computer, the computer is caused to perform any one of the above communication methods.

Other embodiments of the present disclosure will be apparent to those skilled in the art from consideration of the specification and practice of the disclosure disclosed here. The present disclosure is intended to cover any variations, uses, or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It should be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. An information processing method, comprising:
determining, by a terminal, whether to perform an operation related to a Layer L1 measurement according to a cell measurement result of the terminal.

2. The method according to claim 1, wherein a measurement result of the L1 measurement is used to determine whether to perform a Layer L1 or Layer L2-Triggered Mobility (LTM) operation.

3. The method according to claim 1, wherein determining, by the terminal, whether to perform the operation related to the Layer L1 measurement according to the cell measurement result of the terminal comprises at least one of:
determining whether to initiate the L1 measurement according to the cell measurement result;
determining whether to stop the L1 measurement according to the cell measurement result;
activating or deactivating L1 measurement reporting according to the cell measurement result.

4. The method according to any one of claims 1 to 3, wherein determining, by the terminal, whether to perform the operation related to the Layer L1 measurement according to the cell measurement result of the terminal comprises one of:
the cell measurement result corresponding to a serving cell being less than or equal to a measurement threshold, and determining, by the terminal, to initiate the L1 measurement;
the cell measurement result corresponding to the serving cell being greater than the measurement threshold, and determining, by the terminal, not to initiate the L1 measurement;
the cell measurement result corresponding to a non-serving cell being less than or equal to the measurement threshold, and determining, by the terminal, not to initiate the L1 measurement;
the cell measurement result corresponding to the non-serving cell being greater than the measurement threshold, and determining, by the terminal, to initiate the L1 measurement.

5. The method according to claim 4, wherein the non-serving cell comprises at least one of:
one or more candidate Primary Cells (PCells) corresponding to an LTM configuration configured by a network device;
one or more candidate Primary Secondary Cells (PSCells) corresponding to the LTM configuration configured by the network device;
a neighboring cell corresponding to the L1 measurement configured by the network device.

6. The method according to claim 4 or 5, wherein the measurement threshold comprises at least one of:
a measurement threshold based on a network device configuration;
a measurement threshold specified in a protocol;
a measurement threshold determined based on a measurement capability of the terminal.

7. The method according to any one of claims 1 to 6, wherein determining, by the terminal, whether to perform the operation related to the Layer L1 measurement according to the cell measurement result of the terminal comprises:
determining, by the terminal, whether to initiate the L1 measurement associated with a serving cell and/or a non-serving cell according to an L3 measurement result of the serving cell.

8. The method according to any one of claims 1 to 6, wherein determining, by the terminal, whether to perform the operation related to the Layer L1 measurement according to the cell measurement result of the terminal comprises:
determining, by the terminal, whether to initiate the L1 measurement associated with a non-serving cell according to an L1 measurement result and/or an L3 measurement result of a serving cell.

9. The method according to any one of claims 1 to 6, wherein determining, by the terminal, whether to perform the operation related to the Layer L1 measurement according to the cell measurement result of the terminal comprises:
determining, by the terminal, whether to initiate the L1 measurement associated with a non-serving cell according to an L3 measurement result of the non-serving cell.

10. The method according to any one of claims 1 to 6, wherein determining, by the terminal, whether to perform the operation related to the Layer L1 measurement according to the cell measurement result of the terminal comprises:
determining, by the terminal, whether to initiate the L1 measurement according to an L3 measurement result of a non-serving cell corresponding to one or more reference frequencies.

11. The method according to claim 7, wherein determining, by the terminal, whether to initiate the L1 measurement associated with the serving cell and/or the non-serving cell according to the L3 measurement result of the serving cell comprises at least one of:
determining whether to initiate the L1 measurement of a serving Master Cell Group (MCG) and/or a serving Primary Cell (PCell) according to an L3 measurement result of the serving Primary Cell (PCell);
determining whether to initiate the L1 measurement of a candidate MCG and/or a candidate PCell of the terminal according to the L3 measurement result of the serving Primary Cell (PCell);
determining whether to initiate the L1 measurement of a non-serving cell according to the L3 measurement result of the serving Primary Cell (PCell), wherein the L1 measurement of the non-serving cell is associated with a configuration of the serving MCG and/or the serving PCell;
determining whether to initiate the L1 measurement of a corresponding Secondary Cell Group (SCG) and/or a serving Primary Secondary Cell (PSCell) according to an L3 measurement result of the serving Primary Secondary Cell (PSCell);
determining whether to initiate the L1 measurement of a candidate SCG and/or a candidate PSCell of the terminal according to the L3 measurement result of the serving Primary Secondary Cell (PSCell);
determining whether to initiate the L1 measurement of a non-serving cell according to the L3 measurement result of the serving Primary Secondary Cell (PSCell), wherein the L1 measurement of the non-serving cell is associated with a configuration of a serving SCG and/or the serving PSCell.

12. The method according to claim 8, wherein determining, by the terminal, whether to initiate the L1 measurement associated with the non-serving cell according to the L1 measurement result and/or the L3 measurement result of the serving cell, comprises at least one of:
determining whether to initiate the L1 measurement of a candidate MCG and/or a candidate PCell of the terminal according to the L1 measurement result and/or the L3 measurement result of a serving Primary Cell (PCell);
determining whether to initiate the L1 measurement of the non-serving cell according to the L1 measurement result and/or the L3 measurement result of the serving Primary Cell (PCell), wherein the L1 measurement of the non-serving cell is associated with a configuration of a serving MCG and/or a serving PCell;
determining whether to initiate the L1 measurement of a candidate SCG and/or a candidate PSCell of the terminal according to the L1 measurement result and/or the L3 measurement result of a serving Primary Secondary Cell (PSCell);
determining whether to initiate the L1 measurement of the non-serving cell according to the L1 measurement result and/or the L3 measurement result of the serving Primary Secondary Cell (PSCell), wherein the L1 measurement of the non-serving cell is associated with a configuration of a serving SCG and/or a serving PSCell.

13. The method according to claim 11 or 12, wherein the L1 measurement result and/or the L3 measurement result of the serving cell comprises at least one of:
the L3 measurement result of a measurement reference signal on the serving cell;
the L3 measurement result of one or more beams of the serving cell;
an average value of L3 measurement results of multiple beams of the serving cell;
the L1 measurement result of the measurement reference signal of the serving cell;
the L1 measurement result of one or more beams of the serving cell;
an average value of L1 measurement results of multiple beams of the serving cell.

14. The method according to claim 9 or 10, wherein the L3 measurement result of the non-serving cell comprises at least one of:
the L3 measurement result of a measurement reference signal of the non-serving cell;
the L3 measurement result of one or more beams of the non-serving cell;
an average value of L3 measurement results of multiple beams of the non-serving cell.

15. The method according to claim 13 or 14, wherein the one or more beams comprise at least one of:
one or more beams determined based on a network device configuration;
one or more beams specified in a protocol.

16. The method according to claim 9 or 10, wherein an L1 measurement configuration of the non-serving cell comprises at least one of:
a dedicated L1 measurement configuration configured by a network device for the non-serving cell;
an L1 measurement configuration generated by a source MCG;
an L1 measurement configuration generated by a source SCG.

17. The method according to any one of claims 1 to 16, wherein:
a measurement-related parameter for the L1 measurement is determined by a measurement-related parameter corresponding to the cell measurement result; or
the measurement-related parameter for the L1 measurement is determined by an L1 measurement configuration configured by a network device for the terminal; or
the measurement-related parameter for the L1 measurement is specified in a protocol.

18. The method according to any one of claims 1 to 17, wherein the L1 measurement comprises at least one of:
the L1 measurement performed based on one or more measurement configurations corresponding to an LTM configuration configured by a network device;
a measurement based on measurement reporting for triggering LTM;
a beam measurement performed based on one or more beams configured by the network device for performing LTM.

19. The method according to any one of claims 7 to 16, wherein the L3 measurement comprises:
a Radio Resource Control (RRM) measurement.

20. A terminal, wherein the terminal comprises: a determination module configured to determine whether to perform an operation related to a Layer L1 measurement according to a cell measurement result of the terminal.

21. A communication system, wherein the communication system comprises a terminal and a network device, and the terminal is configured to implement the information processing method according to any one of claims 1 to 19.

22. A communication device, wherein the communication device comprises:
one or more processors;
wherein the processors are configured to invoke instructions to cause the communication device to perform the information processing method according to any one of claims 1 to 19.

23. A storage medium storing instructions, wherein when the instructions run on a communication device, the communication device is caused to perform the information processing method according to any one of claims 1 to 19.
